(19) Europäisches Patentamt

European Patent Office

Office européen des brevets

(11) **EP 1 643 439 A1**

(12) **EUROPEAN PATENT APPLICATION**

(43) Date of publication:
05.04.2006 Bulletin 2006/14

(51) Int Cl.:
*G06T 1/00* (2006.01)

(21) Application number: 05255865.7

(22) Date of filing: 22.09.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.09.2004 US 955099**

(71) Applicant: **LUCENT TECHNOLOGIES INC.**
**Murray Hill, New Jersey 07974-0636 (US)**

(72) Inventor: **Zarrabizadeh, Mohammad Hossein**
**Marlboro, New Jersy 07746 (US)**

(74) Representative: **Sarup, David Alexander et al**
**Lucent Technologies EUR-IP UK Limited**
**5 Mornington Road**
**Woodford Green, Essex IG8 0TU (GB)**

(54) **Watermarking colour components of an analogue video signal**

(57) The watermarking of video that is to be transmitted in analog form is achieved by processing a digital version of the analog signal to add to each of at least some of the chrominance components that are part of a segment of a line of the video that is used to carry, at least in part, a bit of the additional data being impressed, the product of: a) a value of a periodically-varying, antipodal, waveform, b) a value that is representative of the bit of the additional watermark data being impressed; and c) optionally, a weighting value representative of the local business of the image at the point at which the additional watermark data is being added.

*FIG. 1*

EP 1 643 439 A1

**Description**

**Technical Field**

This invention relates to the art of watermarking of video transmitted as an analog signal, and more particularly, to including additional information within the video information.

**Background of the Invention**

Watermarking of video signals is, generally, the inclusion within the video itself of additional information. This can be useful to provide an embedded identification of the source of a video, to keep track of where and for how long a video is played, and to communicate information via the video to an ancillary device. Prior art techniques for watermarking video signals typically encoded the additional information in an analog format within the video itself using the luminance of the video to carry the additional information. However, the human visual system is very sensitive to the luminance signal, and so a person viewing a watermarked signal easily perceives distortion which is caused by the changes made to the video signal to convey the additional information when there is an attempt to increase the bit rate of the additional information beyond a certain point, e.g., beyond 120 bits per second. Thus, although the prior art's techniques of watermarking of video signals has had some success in certain applications, such success has been limited by the extremely small bit rate that is achievable without perceivable distortion by a person viewing the video signal carrying the additional information.

In previously filed United States Patent Application Serial No. 10/342704, which is incorporated by reference as if set forth fully herein, I, along with my coinventor, recognized that the human visual system is much less sensitive to chrominance than to luminance. Therefore, we developed a system for digital watermarking a video signal that inserts the additional information of the watermarking signal on the chrominance component of the video signal rather than on its luminance signal. Thus, the additional information is "impressed" upon the chrominance component of the video signal. Advantageously, although there may be significant distortion of the chrominance component, especially when the additional information has higher bit rates than is achievable without perceivable distortion by the prior art, nevertheless such distortion will not be detected by the human visual system, provided it is appropriately managed. Thus, the additional information can have a higher bit rate as compared with that achievable by the prior art, e.g., bit rates greater than 150 bits per second can be achieved. Further advantageously, the additional data can be recovered from the video signal even after the video signal watermarked with the additional data is compressed using the Motion Picture Expert Group (MPEG)-1 and MPEG-2 encoding systems.

However, the most common form of video transmission in use today, and for the foreseeable future, is analog video. Some video standards for the transmission of analog video include NTSC, PAL, and SECAM. Although many of the prior concepts we disclosed for the impression of additional data may be used with analog video, e.g., adding the additional information to the chrominance component and color selection to determine which portion of the chrominance component will carry the additional information, because of the distortions that are encountered as a result of the characteristics of the various channels over which analog video signals travel, our previously disclosed techniques are insufficient to ensure that any transmitted watermarked data will be accurately received.

**Summary of the Invention**

I have recognized that the watermarking of video that is to be transmitted in analog form, e.g., NTSC, PAL, or SECAM, can be improved, in accordance with the principles of the invention, by processing a digital version of the analog signal to add to each of at least some of the chrominance components that are part of a segment of a line of the video that is used to carry, at least in part, a bit of the additional data being impressed, the product of: a) a value of a periodically-varying, antipodal, wavefonn, b) a value that is representative of the bit of the additional watermark data being impressed; and c) optionally, a weighting value representative of the local business of the image at the point at which the additional watermark data is being added.

Each segment is typically made up of the group of chrominance components that correspond to a consecutive number of pixels of the line. The segments of the line that represent a bit need not consist of the same number of chrominance components. For example, if there are 720 useable pixels on a line and the video is in the 4-2-2 format, a first bit could be represented by a group of the first 112 chrominance components on the line, a second bit could be represented by the next group of 128 chrominance components on the line, and a third bit could again be represented by the following group of 112 chrominance components on the line. It may be that there are chrominance components left over that do not belong to any group. If so, such chrominance components are ignored for watermarking purposes. For example, using the aforementioned groups, the last 8 chrominance components of a line are ignored.

Each group of chrominance components is divided into subgroups. Each subgroup corresponds in time to the period of a cycle of the periodically-varying, antipodal, waveform. The above example is especially suitable for a periodically-varying, antipodal, waveform that has a period that is as long as the time to display 16 chrominance components, which corresponds to 32 pixels in 4-2-2 representation. Each of the bits being impressed on a group of 112 chrominance components corresponds to 7 cycles of the periodically-varying, antipodal, waveform, while the middle bit, which is being impressed on a group of 128 chrominance components, corresponds to 8 cycles of the periodically-varying, antipodal, waveform. Although the additional cycle could be employed at any point on the line, or not employed at all, it is preferable to employ the extra cycle near the middle of the image, which tends to have the most activity, and hence the least image correlation, and so it benefits from the additional robustness provided by the extra cycle.

For each chrominance component, a color selection process determines which chrominance portion, i.e., U or V, is better to carry the additional watermark data. One such a selection process was disclosed in United States Patent application Serial No. 10/673893, which is incorporated by reference as if fully set forth herein. The chrominance portion selected the majority of times for a subgroup as the one better to carry the additional data is designated to carry the additional data. More specifically, those chrominance components of the subgroup for which the selection process selected the majority-selected chrominance portion as being better to carry the additional watermark data are modified to carry the additional watermark data. To this end, each such chrominance component has added to it a value represented by the product of a) a value representative of the bit of additional watermark data being impressed on the chrominance portion; b) the value of the periodically-varying, antipodal, waveform for the particular chrominance component position; and c) optionally, a function of a business of the image in the vicinity of the location at which the value is being added, e.g., a local variance. The remaining chrominance components, if any, are left unmodified. Doing so helps insure that the additional data does not become visible.

The modified signal is then converted back to analog NTSC representation for transmission or storage.

The bit of additional watermark data may be repeatedly impressed at the same segment location on multiple lines. For example, the bit of additional watermark data may be impressed on groups of chrominance components at the same position on consecutive lines, Furthermore, the representation of the data for the segment on each line on which the data is repeated need not be the same.

In an exemplary embodiment for NTSC video, the "active" portion of each line of video is divided into 720 luminance pixels. The "active" portion of each line is that portion of the line that carries the content that is intended to be displayed to a viewer. Note that there are additional portions of the NTSC scan line that are not active and are not employed for this embodiment. In NTSC video there are 525 lines of video per frame. These lines are processed in NTSC as two interlaced fields, with the so-called "odd" field having 263 lines and the so-called "even" field having 262 lines. In an exemplary embodiment of the invention, only 480 of the lines are employed. These correspond to the so-called "active" lines, i.e., they are the lines that carry the content intended to be displayed to a viewer.

The invention is preferably performed using video in the 4-2-2 representation. Note that in each chrominance component there are typically two chrominance portions, e.g., U and V when the video is represented in the YUV format. When the video is in the 4-2-2 representation, there are 360 chrominance components, i.e., there are 360 U chrominance portions each associated with a respective V chrominance portions, for the active portion of a line.

In the exemplary embodiment, a line carries 3 bits, each bit being carried by a respective one of 3 segements, so that the chrominance components on a line are grouped into three groups, each group corresponding to a segment and representing one of the bits. The first bit being impressed on a line is represented by a group of the first 112 chrominance components of the line, the next bit being impressed on the line is represented by the group made up of the next 128 chrominance components of the line, and the last bit being impressed on the line is represented by a group made up of the following 112 chrominance component of the line. The last 8 chrominance components on each line are ignored for watermarking purposes. The 112 chrominance components is made up of 7 subgroups of 16, and the 128 chrominance components is made up of 8 subgroups of 16 chrominance components.

In the exemplary embodiment, the periodically-varying, antipodal, waveform is a sinusoidal signal. The optional function is measure of the business of the luminance of the image in the vicinity of the location of the particular chrominance component to which a value indicative of the additional watermark data may be added. The range of the business function may be, for example, from 1 to 20. Conceptually, the value added to any chrominance portion being modified is determined by multiplying together the representation of the bit being impressed by the value of the sinusoid at the time of the chrominance portion and by the value of the determined local luminance variance at the location of the chrominance portion.

In the exemplary embodiment, the data is repeated over multiple lines, e.g., over 6 lines arranged as 3 pairs. For each line of a pair the data is represented using a representation opposite to that used in the other line of the pair. For example, if on a first line of a pair a 1 is represented by a 1 and a 0 is represented by a -1, then on the other line of the pair, e.g., the next consecutive line of the frame, a 1 is represented by a -1 and a 0 is represented by a 1. Thus, each line of a field uses the same data representation, and each field of a frame uses the opposite representation from the other field of the same frame.

In accordance with an aspect of the invention, in an exemplary embodiment of the invention, an area of a frame, e.g., near the top, is allocated for a set of bits, e.g., 9 bits, that make up one or more prescribed sequences. Such sequences may be employed to determine if there is any watermark data in the frame. If there is watermark data in the frame, the sequence can act as an identification signal, so that a user can tell if the watermark data of the frame is meant for that user. Thus, such a sequence may act as a subscription number to isolate users from each other. Advantageously, if a frame is not meant for a user that is being monitored, the frame may be ignored, thereby reducing power consumption and required processing power. Representing such presescribed sequences of 9 bits could require employing three sets of 6 lines, for a total of 18 lines, where each set of 6 lines represents 3 bits, in the manner described hereinabove.

A receiver employs a digitized version of the received watermarked analog signal. More specifically, the digitization process should put the digital version into the same format that was employed in watermarking the signal, e.g., 720 pixels per line, 480 lines, 4-2-2 representation. However, the video should be arranged progressively, i.e., with the received fields deinterlaced, e.g., using a conventional technique.

Processing proceeds using pairs of lines, e.g., consecutive line pairs. For each line, the samples of the chrominance components are grouped in the same manner as for the transmitter. Color selection is performed on each subgroup of the first line, and the majority-selected color is identified for each subgroup. The U chrominance portions of each subgroup are correlated with the antipodal periodically-varying waveform to produce a U correlation value for the subgroup, while the V chrominance portions of each subgroup are similarly correlated with the antipodal periodically-varying waveform to produce a V correlation value for the the subgroup. The correlation values for the majority-selected chrominance portion for each subgroup of each respective group in each respective line are integrated, i.e., added together. Thus, an integrated value is produced for each group on each of the lines. The integrated value of each group of the second line is subtracted from the integrated value for the respective like-located group of the first line. The resulting differences are combined with the differences produced for the same group position from other line pairs on which the same bit of additional watermark data was impressed using a variable weight combiner. The outputs of the variable weight combiners, each corresponding to a bit of watermark data, are used as soft bits that are supplied to a Viterbi decoder, which supplies the final hard bit version of the watermark data.

Preferably, when the 3 sets of paired lines carry the same impressed data, only the middle pair of lines is processed and the other 4 lines are ignored. Doing so corresponds to employing weights of zero for the first and last pairs and a weight of 1 for the middle pair in the variable weight combiners. Good performance is still obtained as data so impressed and recovered survives the process of constructing the NTSC signal and recovering the video therefrom, including the various filtering operations. Alternatively, various weights could be given to each of line pairs, and applying the weights to the soft bits. Preferably, the middle group of lines has a higher weight than the remaining other groups, which may be equally weighted.

If a preamble sequence is employed the resulting differences need not be sent to a Viterbi decoder. Instead, the differences, i.e., the soft bit values may be correlated against a known pattern that corresponds to the particular user. If there is a match, the rest of the frame is processed. Processing may be as simple as identifying the frame as one belonging to the particular user. Otherwise, the rest of the frame is ignored.

## Brief Description of the Drawing

In the drawing:

FIG. 1 shows the basic components of an exemplary transmitter for watermarking, in accordance with the principles of the invention, video that is to be transmitted in analog form;

FIG. 2 shows an exemplary receiver for recovering the additional data from an analog video signal that has been watermarked in accordance with the principles of the invention;

FIGs. 3A and 3B, when connected together as shown in FIG. 3, show an exemplary process for use in watermarking, in accordance with the principles of the invention, one of the chrominance portions with additional data;

FIGs. 4A and 4B, when connected together as shown in FIG. 4, show an exemplary process for extracting the additional information from a digitally watermarked video signal in which the additional information that constitutes the watermarking signal within the video signal has been impressed upon the chrominance component in accordance with the principles of the invention;

FIG. 5 shows a more detailed view of the antipodal bit mapper of FIG. I; .

FIG. 6 shows an exemplary process for determining which particular chrominance portion is more suitable, and so should be selected, to contain the watermarking information for a chrominance component;

FIG. 7 shows a cutaway view of a portion of an exemplary divided colorspace;

FIG. 8 shows another exemplary process by which the particular chrominance portion is selected to contain the watermarking information for a pixel; and

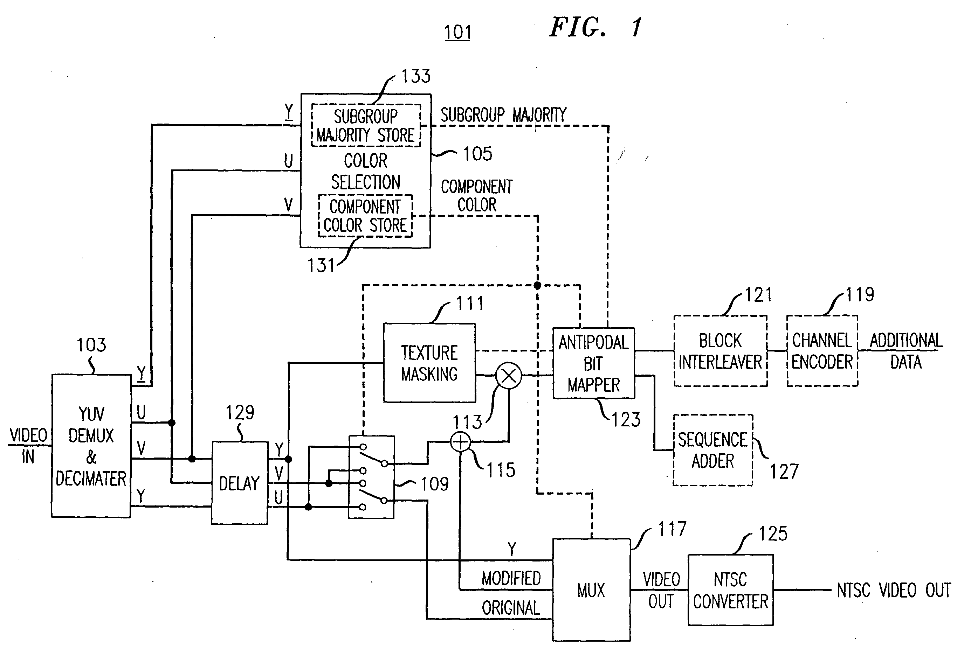

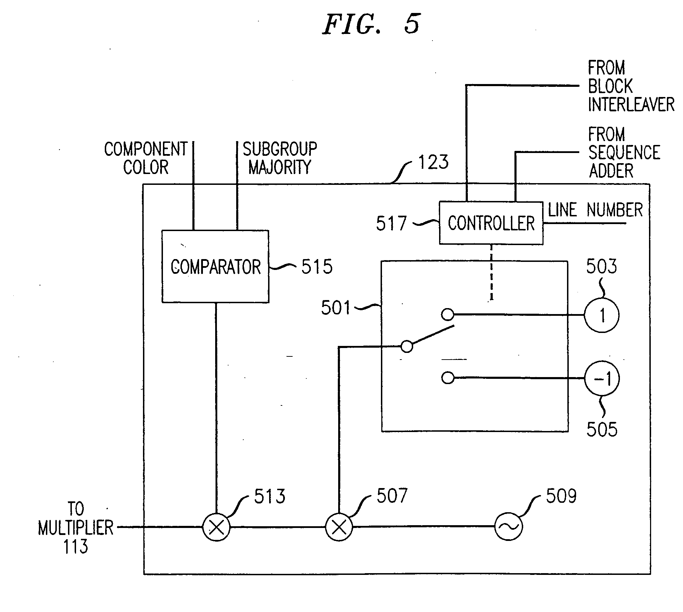

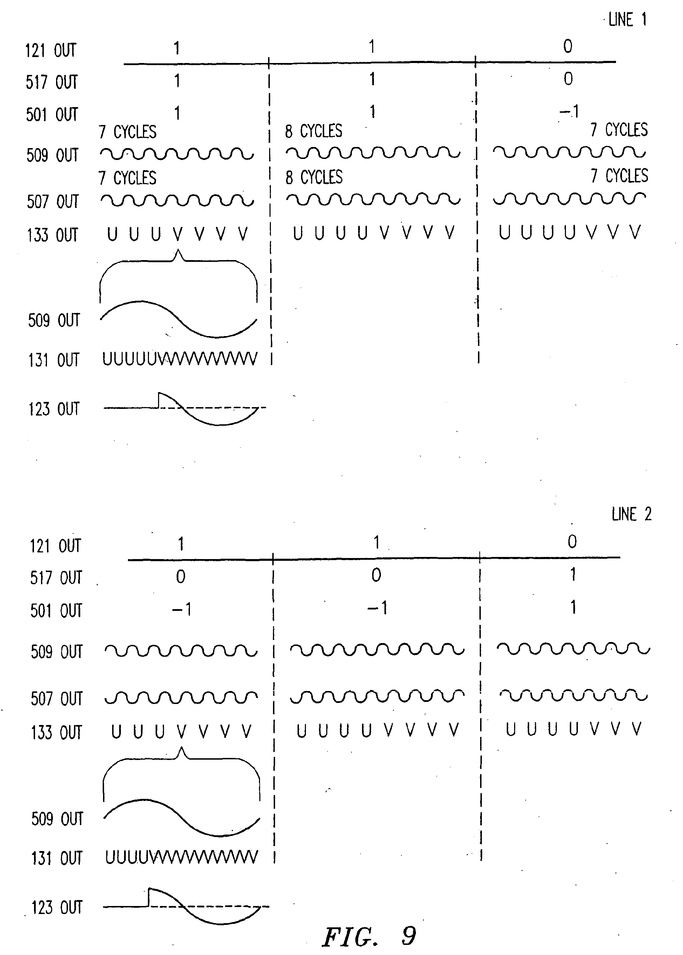

Exemplary outputs from several of the elements shown in FIGs. 1 and 5 are shown in FIG. 9.

**Detailed Description**

The following merely illustrates the principles of the invention. It will thus be appreciated that those skilled in the art will be able to devise various arrangements which, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that any block diagrams herein represent conceptual views of illustrative circuitry embodying the principles of the,invention. Similarly, it will be appreciated that any flow charts, flow diagrams, state transition diagrams, pseudocode, and the like represent various processes which may be substantially represented in computer readable medium and so executed by a computer or processor, whether or not such computer or processor is explicitly shown.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included. Similarly, any switches shown.in the FIGS. are conceptual only. Their function may be carried out through the operation of program logic, through dedicated logic, through the interaction of program control and dedicated logic, or even manually, the particular technique being selectable by the implementer as more specifically understood from the context.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means which can provide those functionalities as equivalent as those shown herein.

Software modules, or simply modules which are implied to be software, may be represented herein as any combination of flowchart elements or other elements indicating performance of process steps and/or textual description. Such modules may be executed by hardware which is expressly or implicitly shown.

Unless otherwise explicitly specified herein, the drawings are not drawn to scale.

In the description, identically numbered components within different ones of the FIGs. refer to the same components.

FIG. 1 shows the basic components of exemplary transmitter 101 for the watermarking of video that is to be transmitted in analog form, e.g., NTSC, PAL, or SECAM in accordance with the principles of the invention, by processing a digital version of the analog signal to add to the chrominance components of segments of lines of the video the product of a) a periodically-varying, antipodal, waveform, b) a value that is representative of the bits of the additional watermark data to be impressed; and c) optionally, a weighting value representative of the local business of the image at the point at which the additional watermark data is being added.

Shown in FIG. 1 are a) YUV demultiplexer (demux) and decimator 103, b) color selection 105, c) double-pole, double-throw switch 109, d) texture masking unit 111, e) multiplier 113, f) adder 115, g) multiplexer (mux) 117 h) antipodal bit mapper 123, i) National Television Standard Committee (NTSC) converter 125, and j) delay 129. Also shown in FIG. 1 are optional k) channel encoder 119, and 1) block interleaver 121.

YUV demultiplexer and decimator 103 receives a video signal to be watermarked, i.e., to have additional information added thereto. YUV demultiplexer and decimator 103 may work with digital video, e.g., video formatted according to the Serial Digital Interface (SDI) standard. As will be recognized by those of ordinary skill in the art, any video signal not initially in an appropriate digital format may be converted thereto using conventional techniques. Analog video may be converted to digital prior to the start of processing.

YUV demultiplexer and decimator 103 demultiplexes the luminance (Y) component of the video and its chrominance component. The chrominance component of the video signal has two portions U and V, where U is the differential blue portion and V is the differential red portion.

Much of the processing to embed the additional data on the chrominance component is, preferably, performed with the video being in the so-called "4-2-2" format, i.e., the luminance component is at full resolution while the chrominance component is at a) full resolution vertically only and b) half resolution horizontally. This is the format supplied by an SDI input. In 4-2-2 format, for every two pixels of luminance on a line, there is one chrominance component. However, for certain processing operations it is necessary that the luminance and chrominance be at the same rate, i.e., that for every chrominance component there be only one luminance component value. To this end, YUV demultiplexer and decimator 103 decimates the luminance component horizontally, which is output as signal Y. The decimated luminance signal and the chrominance portions are supplied as an output to color selection 105.

Other input formats, e.g., 4-4-4 may be supplied as the video input signal to YUV demultiplexer and decimator 103, which then decimates it to the appropriate formats described above. Should they choose to do so, those of ordinary skill in the art will be able to devise their own methods for generating the appropriate decimated signal. Alternatively, processing may be performed in some areas using the 4-4-4 format, but the additional chrominance in the horizontal direction would need to be accounted for. One of ordinary skill in the art would readily understand how to do so.

In the event that diffemt formats may be supplied to transmitter 101, in order to know the format of the original video, a) an operator may indicate to YUV demultiplexer and decimator 103 the particular format of the video supplied to transmitter 101, b) the format of the video may be detected directly from the video using conventional techniques, or c) the information may be supplied from a higher layer processor which is supplying the input video signal.

YUV demultiplexer and decimator 103 also supplies Y, U, and V outputs in the format of the original input video signal to delay 129, preferably in the 4-2-2 format. Delay 129 delays the Y, U, and V signals it receives by the time of one subgroup of chrominance components, i.e., the time of one period of the antipodal waveform, and supplies the delayed versions of the U and V signals it received to double-pole, double-throw switch 109. The delayed version of the Y signal is supplied to texture masking unit 111 and multiplexer 117.

Color selection 105 receives from YUV demultiplexer and decimator 103 each undelayed versions of U, V and luminance signal Y. Note that each associated U and V value make up a single chrominance component, and together with their corresponding Y value they correspond to two horizontally adjacent 4-2-2 pixels. Color selection 105 determines, for any set of Y, U and V values, on which portion of the chrominance component, i.e., on the U portion or the V portion, a change in value, if necessary, may be better accommodated without introducing a visible artifact. In one embodiment of the invention, the operation of color selection 105 is based upon a look-up table as described hereinbelow. Alternatively, the operation of color selection 105 may be based all or in part, on various computations, such as are disclosed in United States Patent Application Serial No. 10/342,704, which is incorporated by reference as if fully set forth herein. The resulting decision is stored in component color store 131. Component color store 131 stores decisions for the chrominance components in one subgroup. For example, if color selection 105 determines that U should be the chrominance portion selected for a chrominance component, a 1 is stored in component color store 131. Similarly, if color selection 105 determines that V should be the chrominance portion selected for a chrominance component, a 0 is stored in component color store 131. Component color store 131 may be implemented as a shift register so as to provide a delay having a duration of one subgroup time period, i.e., the time duration of one cycle of the antipodal waveform, prior to supplying the indication of the selected chrominance portion as output COMPONENT COLOR.

Once all the chrominance components of a subgroup have been evaluated by color selection 105, it is determined which of U or V was selected for the majority of the chrominance components of the subgroup. An indication of the particular chrominance portion that was selected for the majority of the chrominance components of the subgroup is stored in subgroup majority store 133 for the duration of the next subgroup and supplied as output SUBGROUP MAJORITY.

The output COMPONENT COLOR of color selection 105 is also used to control the position of double-pole, double-throw switch 109. More specifically, COMPONENT COLOR controls double-pole, double-throw switch 109 so that it 1) supplies, to adder 115, the portion of the chrominance component that has been selected to carry the watermark data; and 2) supplies, to YUV multiplexer 117, the portion of the chrominance component that was not selected. COMPONENT COLOR is also supplied to multiplexer 117 and to antipodal bit mapper 123 for use as described hereinbelow.

Texture masking unit 111 analyzes the texture of the luminance around each associated chrominance component and luminance component in the decimated format supplied as output by YUV demux and decimator 103, after being delayed by delay 129, to determine the maximum change in value that can be accommodated by the chrominance component without introducing visible artifacts, and supplies as an output a weight indicative thereof. The weight value may be coded, e.g., taking integral values from 1 to 20 for 10 bit chrominance portion values. Although texture masking unit 111 could use all the pixel positions around a particular chrominance component to calculate its texture, doing so would require storing several lines of the image. In accordance with an aspect of the invention, texture masking unit 111 may determine the texture simply from the luminance values of the pixels associated with the current chrominance component and the luminance values of the pixels associated with the chrominance components immediately before and immediately following the current chrominance component on the current line. Advantageously, in accordance with an aspect of the invention, sufficient accuracy is achieved without overly complicating the process. The weight is supplied to multiplier 113.

Note that the particular values used are at least partially dependent on the number of bits used to represent each Y, U, and V value. Those of ordinary skill in the art will readily recognize that the values employed may be scaled for the number of bits being used.

Multiplier 113 multiplies the weight received from texture masking unit 111 by a value related to the information to be transmitted as part of this chrominance component, which is supplied by antipodal bit mapper 123. For example, the value supplied by antipodal bit mapper 123 may be the value of a sinusoid, e.g., $\sin(x)$ or $-\sin(x)$, that has a range between -1 and 1 for those chrominance components whose selected chrominance portion is the same as the selected chrominance portion for the subgroup, i.e., the same as signal SUBGROUP MAJORITY. For those chrominance components whose selected chrominance portion is not the same as the selected chrominance portion for the subgroup, as indicated by SUBGROUP MAJORITY signal, antipodal bit mapper 123 supplies a zero. The product produced by multiplier 113 is supplied to adder 115.

Adder 115 produces a modified chrominance portion by adding the value supplied by multiplier 113 to the value of the portion of the chrominance component that was selected by color selection 105 to carry the additional information for the chrominance component. As indicated, the portion of the chrominance that was selected by color selection 105 to carry the additional information is passed to adder 115 by double-pole, double-throw switch 109. The modified chrominance portion supplied by adder 115 is supplied to multiplexer 117.

Multiplexer 117 receives each delayed original luminance component Y and the delayed unmodified chrominance portion that was supplied from delay 129 via double-pole, double-throw switch 109. Multiplexer 117 also receives the modified chrominance portion from adder 115. Multiplexer 117 then multiplexes together an original luminance component, the unmodified chrominance portion, and the modified chrominance portion. Multiplexer 117 knows on which lead it receives the modified portion of the chrominance component and on which lead it receives the unmodified portion of the chrominance component by virtue of receiving the output of color selection 105. In accordance with an aspect of the invention, the resulting video signal is supplied as the watermarked output video signal VIDEO OUT by multiplexer 117.

Note that the original luminance component may be changing at a different rate than the chrominance components. For example, when the original video is in the 4-2-2 format, each pixel is made up of a luminance value and the time corresponding chrominance component, which is shared by at least one other pixel. Since groups of 2 adjacent pixels share a chrominance component, while having their own respective Y values, the luminance component Y is changing at twice the rate of the chrominance components. Those of ordinary skill in the art will readily understand how to design the timing of system to take this into account. For example, YUV demux and decimator 103, delay 129, and multiplexer 117 could be operated at twice the rate of the other components.

As indicated above, the binary data value, i.e., 1 or 0, of the additional information which is to be transmitted for each group may be supplied directly to antipodal bit mapper 123 for use as the watermark data or it may first be processed to facilitate the processing and recovery of the information at the receiver. Such exemplary processing may be performed by optional channel encoder 119 and block interleaver 121.

Channel encoder 119 receives the additional data that is desired to be embedded in the video stream. This data is then encoded, e.g., using a forward error correcting coding scheme. Such forward error correcting scheme may be any conventional forward error correcting scheme, such as convolutional encoding, e.g., Viterbi encoding or turbo encoding, or it may be any newly developed coding scheme. In one exemplary embodiment of the invention, Viterbi coding of rate one-fourth is used. As a result of such coding, four bits are produced for every bit of the original bit stream. The channel encoded bit stream is supplied as an output by channel encoder 119 to block interleaver unit 121.

Block interleaver 121 rearranges the order of the bits of the channel encoded bit stream in order to randomly distribute the data. Doing so helps reduce the chance that adjacent sections of the channel encoded bit stream are lost, e.g., due to bursts of noise or other factors, which would then make it difficult to recover such data at the receiver from the remaining, actually received data. In an exemplary embodiment of the invention, the number of bits that are interleaved as a unit is equal to the number of bits in a frame. A block interleaver may be implemented by writing data sequentially to the rows of a block left to right, at the end of each row starting again at the leftmost position of the next row down, and then reading the data by starting at the leftmost topmost position of the block and reading down a column until the end of the column is reached at which point reading continues at the top of the next column. A block interleaver of 14 rows by 16 columns has proven effective for a picture size of 720 by 480 pixels. For different resolutions, those of ordinary skill in the art will be readily able to develop comparable block encoders. The interleaved channel encoded bit stream is supplied as an output by bit interleaver 121 to antipodal bit mapper 123.

In accordance with an aspect of the invention, the data bit supplied by block interleaver 121 is impressed as the watermark data, under the control of antipodal bit mapper 123, upon at least one group of lines of at least one frame of the original video signal. In accordance with the principles of the invention, antipodal bit mapper 123 supplies a value that is representative of the data being impressed that is then weighted by the output of texture masking 111 and added to the value of the selected chrominance portion.

FIG. 5 shows a more detailed view of antipodal bit mapper 123. Shown in FIG. 5 are a) double-throw switch switch 501, b) multiplier 507, c) antipodal sinusoid generator 509, d) multiplier 513, e) comparator 515, and f) controller 517.

Controller 517 controls the overall operation of antipodal bit mapper 123. In particular, controller 517 controls how a bit of data received from block interleaver 121 is represented. Note that many chrominance components are designated to carry the same additional data. To this end, for example, in the exemplary embodiment, the chrominance component values of a line of chrominance components are grouped into three groups, with each group being assigned to the representation of one bit. The first bit on a line may be represented by 112 chrominance component values, the next bit on a line may be represented by 128 chrominance component values, and the last bit on the line may be represented by 112 chrominance component values. The last 8 chrominance component values on each line are ignored for watermarking purposes. The 112 chrominance component values correspond to 7 subgroups of 16 chrominance components, and the 128 chrominance component values correspond to 8 subgroups of 16 chrominance components.

Furthermore, the same data is carried in the same group of chrominance components over multiple lines, e.g., 6 lines arranged as 3 pairs. For each line of a pair the data is represented using opposite representation, e.g., on a first line of a pair a 1 is represented by a 1 and a 0 is represented by a -1, and on the other line of the pair, e.g., the next consecutive line of the frame, a 1 is represented by a -1 and a 0 is represented by a 1. Thus, each line of a field uses the same data representation, and each field of a frame uses the opposite representation from the other field of the same frame.

Under the control of controller 517, antipodal bit mapper 123 supplies the appropriate representation of the bit from the interleaved channel encoded bit stream that is to be communicated for each subgroup of each line of the original video signal at the appropriate time for each chrominance component of the subgroup of the original video signal when that chrominance component is to be incorporated into the watermarked output video signal. Thus, antipodal bit mapper 123 takes into account the fact that the processing of the video signal is line based, i.e., the processing is left to right on a line, then down to the next line and left to right again, causing the adjacent chrominance components that are to carry the same bit from the bitstream to not necessarily be located sequentially in the video stream, and therefore to not all be processed in time directly one after the other. The particular data bit supplied as an output of antipodal bit mapper 123 at any time is supplied as an input to multiplier 113.

Controller 517 receives the data from block interleaver 121. Controller 517 also receives as an input an indication as to which scan line of the image is being processed. Controller 517 complements the value of the data as a function of the line number. For example, for the even scan lines only, the data values are compelemented, i.e., a one is changed to a zero and a zero is changed to a one.

Controller 517 controls the position of double-pole switch 501. In one embodiment of the invention, as noted above, the representation used for data on each sequential line is reversed. Thus, for the odd field a first representation is used and for the even field the opposite representation is employed.

To the end of appropriately transforming the data received from block interleaver 121, double-throw switch 501 has coupled to a first input coupled to a constant value of 1, and a second input coupled to a constant value of -1. When the output from controller 517 is a 1, the output of double throw switch 501 is coupled to the constant 1 value. When the output from controller 517 is a 0, the output of double-throw switch 501 is coupled to the constant -1 value. Thus, double-throw switch 501 effectively converts from a 1, 0 data representation to a 1, -1 data representation.

The output of double-throw switch 501 is supplied to multiplier 507. An exemplary output from double-throw switch 501 for an exemplary signal supplied by block interleaver 121 is shown in FIG. 9.

Multiplier 507 also receives an antipodal waveform, such as a sinusoidal signal. In one exemplary embodiment of the invention, the antipodal waveform is a conventional sin wave with a range between 1 and -1, generated by antipodal sinusoid generator 509. The period of the sinusoidal signal is equal to one subgroup time, i.e., equal to the time to display on a display, e.g., a television, the number of pixels corresponding to the number of chrominance components in one subgroup, e.g., 32 pixels, which contains 16 chrominance components in 4-2-2 representation. The sinusoid is represented digitally by a number of equally spaced samples. The number of equally spaced samples employed is the same as the number of chrominance components in a subgroup, e.g., 16. This corresponds to a spacing of 22.5 degrees between samples. See, for example, Table 1. An exemplary output from antipodal sinusoid generator 509 for an exemplary signal supplied by block interleaver 121 is shown in FIG. 9.

Table 1

| Chrominance Position | Sinusoid Value |
| --- | --- |
| 1 | 0 |
| 2 | 0.382683 |
| 3 | 0.707107 |

Table continued

| Chrominance Position | Sinusoid Value |
|---|---|
| 4 | 0.92388 |
| 5 | 1 |
| 6 | 0.92388 |
| 7 | 0.707107 |
| 8 | 0.382683 |
| 9 | 0 |
| 10 | -0.38268 |
| 11 | -0.70711 |
| 12 | -0.92388 |
| 13 | -1 |
| 14 | -0.92388 |
| 15 | -0.70711 |
| 16 | -0.38268 |

The product of the output of double throw switch 501 and antipodal sinusoid generator 509 produced by multiplier 507 is supplied to multiplier 513. An exemplary output from multiplier 507 for an exemplary signal supplied by block interleaver 121 is shown in FIG. 9.

Comparator 515 compares the value of signal COMPONENT COLOR currently supplied by color selection 105 with the currently supplied value of signal SUBGROUP MAJORITY, also supplied by color selection 105. If the values are the same, comparator 515 outputs a one to multiplier 513. Otherwise comparator 515 outputs a zero to multiplier 513. Comparator 515 may thus, for example, be implemented by an exclusive NOR. Thus, a one output by comparator 515 indicates that the current chrominance component has had selected to be modified the same chrominance portion that was selected to be modified for the majority of chrominance components in its subgroup. A zero output by comparator 515 indicates that the current chrominance component has had selected to be modified the chrominance portion that was not selected to be modified for the majority of chrominance components in its subgroup, and hence no modification of the chrominance component should be performed.

The resulting product, supplied as an output from multiplier 513, is supplied to multiplier 113 (FIG. 1). As a result, no value is added to any chrominance component for which the chrominance portion selected to carry the additional information is not the same as the chrominance portion selected for the majority of chrominance components in the same subgroup as the chrominance component. An exemplary output from multiplier 513 for an exemplary signal supplied by block interleaver 121 is shown in FIG. 9.

Using an encoder, such as shown in FIG. 1, a bit rate of around 1,480 bits per second, substantially error free, has been achieved for the additional information as supplied to channel encoder 119 when the video frame size is 720 x 480 pixels.

Those of ordinary skill in the art will readily recognize that although FIG. 1 shows, essentially, a pipelined implementation of the invention, other arrangements are possible. In one embodiment of the invention, an entire line is buffered for convenience, and then processed with a greater degree of parallelism.

In accordance with an aspect of the invention, specific bit positions of the frame may be embedded with a particular known data sequence, e.g., a Barker sequence, rather than encoded user-supplied data. This is performed by optional sequence adder 127. Optional sequence adder 127 supplies a particular known data sequence, e.g., a Barker sequence. Antipodal bit mapper 123 places the bits of the seuence in specific bit position of the frame, the data sequence being in lieu of encoded user data, e.g., instead of placing data from block interleaver 121 in those positions. Although preferably placed near the top of a frame, the bit position in which the data sequence is encoded may be scattered throughout the various bit postitions available with a frame. One use for embedding such sequences is to identify a frame as being a watermarked frame. Another use for such embeded sequences is to identify to which user a particular frame belongs, which can be achieved by using different codes for the frames of different users.

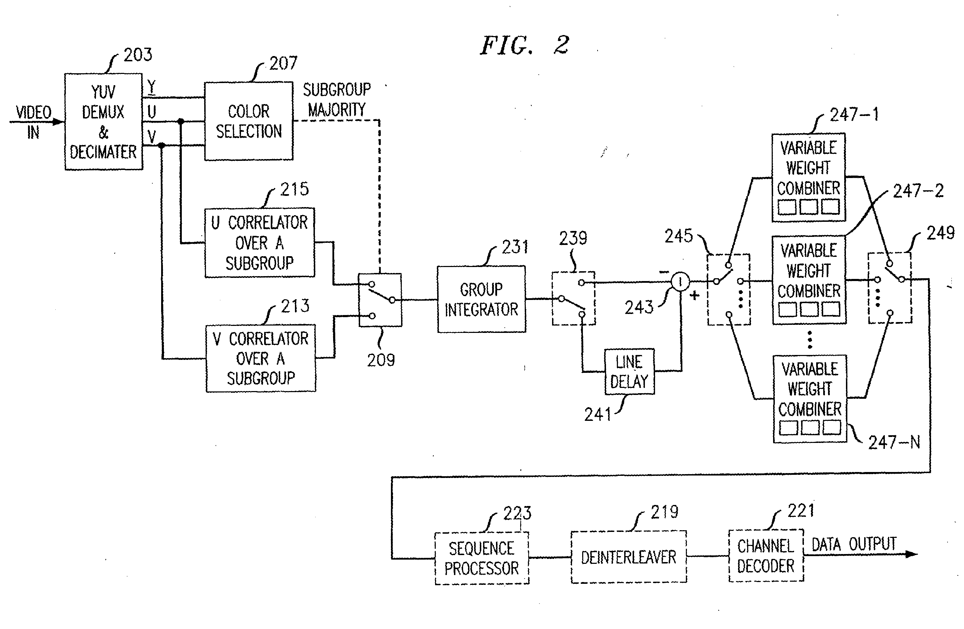

FIG. 2 shows exemplary receiver 201 for recovering the additional data of a video signal containing digital watermarking on the chrominance signal thereof, in accordance with the principles of the invention. Shown in FIG. 2 are a) YUV demultiplexer (demux) and decimator 203, b) color selection unit 207, c) double-pole, double-throw switch 209, d) V correlator over a subgroup 213, e) U correlator over a subgroup 215, f) deinterleaver 219, g) channel decoder 221, h) group integrator 231, i) line buffer 233, j) dual-throw switches 239, k) line delay 241, 1) subtractor 243, m) muti-throw switch 245 and 249, and n) variable weight combiners 247-1 through 247-N, collectively herein variable weight combiners 247.

YUV demultiplexer and decimator 203, which may be similar to YUV demultiplexer and decimator 103 of transmitter 101 (FIG. 1), receives a video signal that has been digitally watermarked by the adding of additional information to the chrominance component of the signal in accordance with the principles of the invention. YUV demultiplexer and decimator 203 works with digital video, e.g., formatted according to the serial digital interface (SDI). As will be recognized by those of ordinary skill in the art, any video signal not initially in an appropriate digital format, such as a received analog NTSC signal, may be converted thereto using conventional techniques.

Much of the processing to recover the additional data from the chrominance component is, preferably, performed with the video being in 4-2-2 format. However, for certain processing operations it is necessary that the luminance and chrominance be at the same rate, i.e., that for every chrominance component there be only one luminance. To this end, YUV demultiplexer and decimator 203 decimates the luminance component horizontally, which is output as signal $\underline{Y}$. In order to know the format of the received video, a) the operator needs to indicate to YUV demultiplexer and decimator 203 the particular format of the input video, b) the format of the video may be detected directly from the video using conventional techniques, or c) the information may be supplied from a higher layer processor which is supplying the input video signal.

The demultiplexed chrominance and decimated luminance components are supplied to color selection 207. In addition, the V chrominance portion is supplied to V correlator over a subgroup 213, and the U chrominance portion is supplied to U correlator over a subgroup 215. Unlike YUV demultiplexer and decimator 103, YUV demultiplexer and decimator 203 need not also supply YUV outputs in the full format of the original input video signal.

Color selection unit 207 determines for each subgroup, as a function of Y, U, and V of the various chrominance components within the subgroup, on which portion of the chrominance component, i.e., on the U portion or the V portion, it was likely that the additional information was embedded for this subgroup. To this end, color selection unit 207 essentially repeats the calculations necessary to determine the signal SUBGROUP MAJORITY that were performed by color section 105 (FIG. 1). The output of color selection unit 207 (FIG. 2) is used to control the position of double-throw switch 209 so that double-throw switch 209 supplies to integrator over a group 231 the correlation value that is supplied by the one of correlators 213 and 215 corresponding to the majority selected color. In one embodiment of the invention, color selection unit 207 is based on a lookup table, as described in more detail hereinbelow. Doing so simplifies the process by avoiding the need for YUV to RGB conversion, which might otherwise be necessary.

V correlator over a subgroup 213 correlates the values of V over a subgroup with a full cycle of an antipodal sinusoid, such as was generated by antipodal sinusoid generator 509. To this end, the value of each V chrominance portion is multiplied by the like-positioned sinusoid value, and all of the products are summed together to generate a single value. Similarly, U correlator over a subgroup 215 correlates the values of U over a subgroup with a full cycle of an antipodal sinusoid, such as was generated by antipodal sinusoid generator 509. To this end, the value of each U chrominance portion is multiplied by the like-positioned sinusoid value, and all of the products are summed together to generate a single value.

By correlating with a full cycle of the antipodal sinusoid, the actual value of the U or V portion for the selected portion, which can be regarded as varying only a small amount over the cycle, and hence essentially corresponds to a DC level, is canceled out. This is because, by the associative law of multiplication, the resulting product can be thought of as the antipodal sinusoid multiplied by the DC level which is the chrominance portion value plus the antipodal sinusoid multiplied by the impressed sinusoid at a DC level of 0. Regarding the multiplication of the antipodal sinusoid by the DC level, for each positive product value produced during the positive half of the antipodal waveform there is a corresponding negative product value produced during the negative half of the antipodal waveform. When the corresponding positive and negative products are added, they cancel out. However, the products of antipodal sinusoid by the impressed sinusoid at a DC level of 0 always yield a positive or negative value, except at points where the antipodal sinusoid is zero. Thus, adding up such values yields an overall positive or negative value. Whether the overall value is positive or negative depends on the polarity of the impressed sinusoid.

The result produced by the correlator for the not-selected chrominance portion, although it should generally be small, is irrelevant, and reflects the inherent correlation between the variation in the chrominance portion and the antipodal sinusoid.

Group integrator 231 adds up the values produced for each of the selected chrominance portions for each of the subgroups within a group. Note that, as indicated hereinabove, the number of subgroups in each group need not be the same, and that some chrominance components may not belong to any group. Further remember that each group is part of the transmission of a particular bit. The resulting values are supplied to double-throw switch 239.

In the embodiment of the invention shown in FIG. 2, for odd lines, double-throw switch 239 routes the group-integrated values from group integrator 231 to line delay 241, e.g., 3 values per line. For even lines, double-throw switch 239 routes the group-integrated values from group integrator 231 directly to subtractor 243. The values from the odd lines are stored for one line period in line delay 241 and then they are supplied to subtractor 243. Subtractor 243 subtracts the group-integrated values of the even lines from the correspondingly located respective values of the odd lines.

The difference values for each group of the two lines are routed by switch 245 to one of variable weight combiners 247. For example when there is 3 bits impressed on each line, there are 3 variable weight combiners 247 and N=3. The routing is done such that the first of variable weight combiners 247 receives the integrated difference value corresponding to the first group of the two lines, the next one of variable weight combiners 247 receives the integrated difference value corresponding to the next group of the two lines, and so forth. Each of variable weight combiners has a storage location for a prescribed number of integrated difference values, one for each pair of lines on which the same bits are impressed. For example, when the data being impressed is repeated on 6 lines, there will be 3 storage locations, one for each pair of lines, in each of variable weight combiners 247.

After all the lines on which a data bit being impressed has been repeated are processed, a weight is multiplied by each of the stored values in each of the various variable weight combiners 247. The weighted values are added, and the resulting output is supplied as a soft-bit for the bit. The soft-bits are routed serially by switch 249, e.g., in the order that their corresponding groups appeared on the lines of the video signal.

In one embodiment of the invention, when the data being impressed is repeated on 6 lines, the weight for the middle two lines is one, while the weight for the first two and last two are zero. Effectively then, only the two middle lines need be processed, simplifying the computation. It has been found that using such an arrangement, the watermark data is successfully received, even when a 3-line comb filter is employed to process the image.

Deinterleaver 219 reorders the soft-bits to undo the effect of block interleaver 121 (FIG. 1) of transmitter 101. The reordered values are then supplied to channel decoder 221 (FIG. 2), which performs appropriate decoding for a signal that was encoded using the type of encoding employed by channel encoder 119 of transmitter 101 (FIG. 1) as well as converting the soft-bits to a final hard bit payload. The resulting decoded values are supplied by channel decoder 221 (FIG. 2) as the reconstructed version of the additional data signal. For further robustness, channel decoder 221 may be a so-called "sequence decoder", e.g., a turbo decoder.

In one exemplary application, various commercials of a vendor within a video signal may be monitored. The vendor may be assigned a unique code that is embedded in each frame of its commercial. A receiver is made aware of the particular unique code and which bit positions of the watermarked frames should contain the code. By detecting the appearance of the code within watermarked frames, the receiver can identify a frame as being one that belongs to one of the commercials of the vendor. Once a frame with the code is detected, the number of sequential frames incorporating the code can be counted to determine the length of the commercial. If the number of frames counted is less than the anticipated number of frames, based on the known length of the commercial when it was originally watermarked, it may be assumed that the commercial was inappropriately shortened by removing the number of frames that corresponds to the difference between the anticipated number of frames and the counted number of frames. Those of ordinary skill in the art will recognize that other conventional techniques for avoiding false matches, as well as handling missing the first frame due to errors, may be employed.

Each frame of the commercial, or groups of frames within the commercial, may be watermarked with a unique identifier, e.g., a frame or group number, which is part of a distinct sequence over the frame. When a gap in the expected sequence is detected due to one or more missing frames, the missing frames may be specifically identified when each frame has a unique identifier. When identifiers are assigned only to groups and the number of frames in each group is known, only the particular group to which any missing frames belongs may be identified, along with the count of how many frames are missing.

If a vendor has different commercials, each of the commercials may have a further sequence embedded in at least one of its frames to identify the particular commercial of that vendor that is being received.

Should multiple vendors have watermarked commercials, so long as each vendor is assigned a unique code, a system monitoring for the appearance of the commercials of a first vendor with a first unique code will ignore commercials of a second vendor with a second unique code. Alternatively, a single system may monitor a video signal for the appearance of commercials from different vendors that each have a unique code, and the results may be segregated by vendor based on their codes.

When multiple vendors have watermarked commercials, each vendor employs the same code, and the code may even be at the same bit locations within the frame for each vendor. However, all the subsequent data contained within the frame is encrypted using a unique key for each vendor and each vendor has a receiver that knows only the key for that vendor. Therefore, each vendor can only decrypt and receive data from its own commercials. Alternatively, the data for each vendor may be encrypted by scrambling the data over the bit positions of a frame. Each receiver would know only the scrambling pattern for its associated vendor.

In one exemplary application, monitoring for an initial appearance of a code indicating the start of a commercial may be performed continuously, or within a window of time during which the commercial is expected to be broadcast.

Optional sequence processor 223, when present, may be located so as to be able to operates to detect if a user's unique code is present in a frame and to strip out the soft bits that correspond to such a code. Sequence processor 223 detects the user's unique code by directly correlating it with the soft bits. If there is a match of the code, the remaining soft bits are supplied to deinterleaver 219.

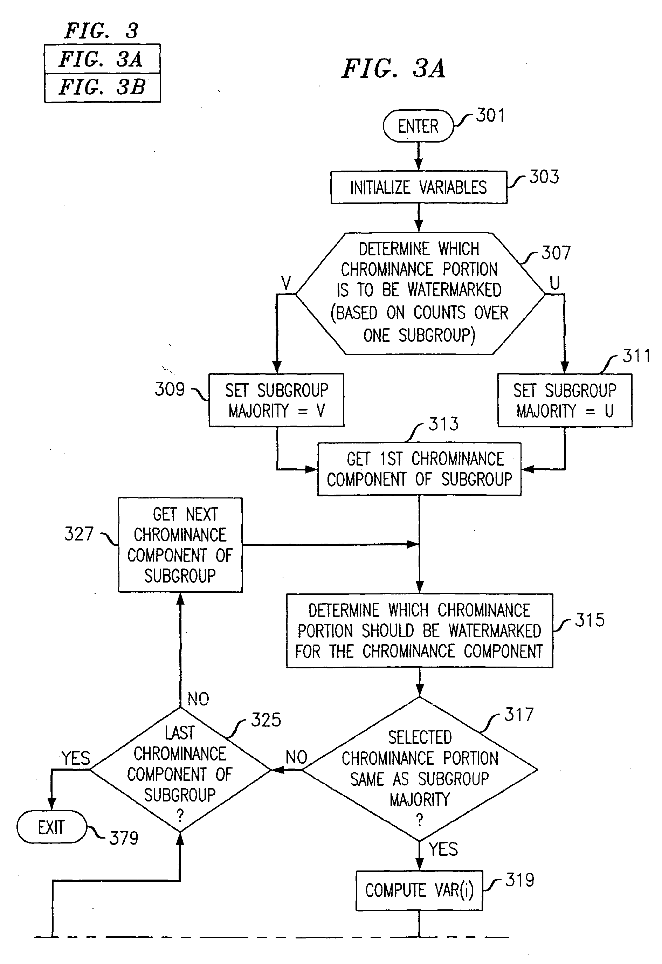

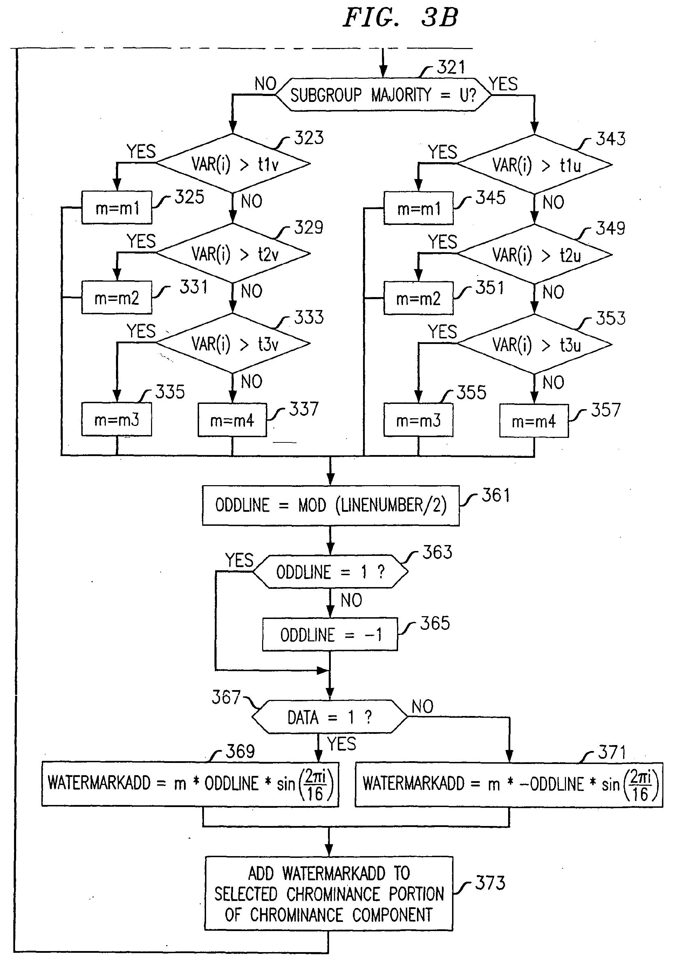

FIGs. 3A and 3B, when connected together as shown in FIG. 3, show an exemplary process for use in watermarking one of the chrominance portions with additional data, in accordance with the principles of the invention. The process of FIG. 3 may be performed all in software, or in in conjunction with an arrangement such as is shown in FIG. 1.

The process may be entered in step 301 when all the chrominance components of a subgroup are available. Part of the processing of FIG. 3 takes place on a subgroup basis, and part on a chrominance component-by-chrominance component basis, and part even takes place at the pixel level. The chrominance components of a line are indexed using pointer i. As indicated hereinabove, for this exemplary embodiment, each chrominance component corresponds to two luminance components.

After entering the process in step 301, several variables that are used in the process are initialized in step 303, e.g., countU($i$)=0 and countV($i$)=0. CountU is a running total of how many chrominance components within the subgroup are selected by the color selection process as being suitable for watermarking on the U chrominance portion while count V is a running total of how many chrominance components within the subgroup are selected by the color selection process as being suitable for watermarking on the V chrominance portion.

Thereafter, conditional branch point 307 tests to determine which particular chrominance portion, i.e., U or V, is going to contain the watermark information for the subgroup. This is done by evaluating the color selection for each chrominance component within the subgroup and counting the number of chrominance components within the subgroup that are selected for each chrominance portion. In other words, for each chrominance component within the subgroup, the appropriate one of countU($i$) and countV($i$) is increment based on the chrominance portion selected to carry the additional data for that chrominance component. The selected chrominance portion for a chrominance component may be determined using a look up table as decribed hereinbelow. The chrominance portion that was selected the most for the chrominance components within the subgroup is chosen for watermarking, i.e., the one of countU($i$) and countV($i$) that is greater is selected.

The particular method of determining the color selected to be watermarked for each chrominance component is at the discretion of the implementer. In one embodiment of the invention, the chrominance portion of the chrominance component with the smallest value is selected. In another embodiment of the invention, the color selection arrangement described hereinbelow is employed.

If the test result in step 307 is that the V chrominance portion is selected to be watermarked, i.e., count V($i$) > countU($i$), control passes to step 309, in which a variable SUBGROUP MAJORITY is set equal to V. Thereafter, control passes to step 313. If the test result in step 307 is that the U is the chrominance portion is selected to be watermarked, i.e., countU($i$) $\geq$ countV($i$) control passes to step 311, in which the variable SUBGROUP MAJORITY is set equal to U. Thereafter, control passes to step 313.

In step 313, the first chrominance component of the subgroup is obtained. Then, in step 315, the particular chrominance portion that should be used for watermarking for the obtained chrominance component is determined. The selected chrominance portion for a chrominance component may be determined using a look up table as decribed hereinbelow. Thereafter, conditional branch point 317 tests to determine if the particular chrominance portion that should be used for watermarking for the obtained chrominance component is the same as the chrominance portion indicated by SUBGROUP MAJORITY. If the test result in step 317 is YES, indicating that the chrominance portion that should be used for watermarking for the obtained chrominance component is the same as the chrominance portion indicated by SUBGROUP MAJORITY, indicating that this chrominance portion should indeed be watermarked, control passes to step 319 in which var($i$), an indication of the business, e.g., variance, for the luminance values associated with the chrominance portion, is computed. It is possible to use some or all of the luminance values surrounding the chrominance portion. In accordance with an aspect of the invention, it has been found that it is sufficient to compute var($i$) using only the luminance values associated with the current chrominance component and the immediately preceding and succeeding chrominance components, as follows:

$$\text{var}(i)=\min(|\,Y_{(i)}^{(1)} - Y_{(i+1)}^{(1)}\,|, |\,Y_{(i-1)}^{(1)} - Y_{(i+1)}^{(1)}\,|)+\min(|\,Y_{(i)}^{(2)} - Y_{(i-1)}^{(2)}\,|, |\,Y_{(i-1)}^{(2)} - Y_{(i+1)}^{(2)}\,|)$$

where a chrominance component and its associated two luminance components are arranged on a line as Y$^1$UY$^2$V; $i$ is the index pointing to the current chrominance component; $i$-1 is the index pointing to the preceding chrominance component and its associated luminance values similarly arranged; and $i$+1 is the index pointing to the next chrominance component and its associated luminance values similarly arranged. An advantage of employing such a computation for var($i$) is that it avoids including a large value to represent the watermarking data on edges for surrounding areas that do not have texture. At such an edge there is a very large change between the luminance and chrominance, but the surrounding areas have essentially constant luminance and chrominance. If the value of the variance of the edge were to determine the amount to be added for a chrominance component on the edge, watermarking on such an edge could result in a visible artifact. Therefore, since on each side of the edge the variance will be very small, because there is very little texture on each side of the edge, by using the minimum change as the indicator of the variance at most a small value will be added for the watermark data. In other words, the above formula for var($i$) filters out of the variance the changes reflecting boundaries between nontextured areas.

Furthermore, for those chrominance portions that are at the beginning of a line, and hence have no immediately preceding chrominance portion on the line, or the immediately preceding chrominance portion are not displayed, the value of such immediately preceding chrominance portion may be considered to be zero. Although it has been described herein that some of the chrominance portions are not used on a line, because they do not belong to any subgroup, and those chrominance portions have been indicated to be at the end of the line, it is possible to have some, or all, of the initial chrominance portions be the unused ones. Doing so would allow the variance of the first used chrominance portion on a line to be computed with actual values for a chrominance portion preceding it, as well as allow the variance of the last used chrominance portion to be computed with actual values for a chrominance portion that follows it

Conditional branch point 321 next tests to determine if variable SUBGROUP MAJORITY is equal to U. If the test result in step 321 is NO, indicating that variable SUBGROUP MAJORITY is equal to V, so that it is the V chrominance portion of the current chrominance component that is to be watermarked, control passes to conditional branch point 323, which tests to determine whether the variance associated with the chrominance component, var($i$), is greater than a first prescribed V threshold t1v, which is the largest V threshold. An exemplary value of t1v based on the formula of var (i) is 20.

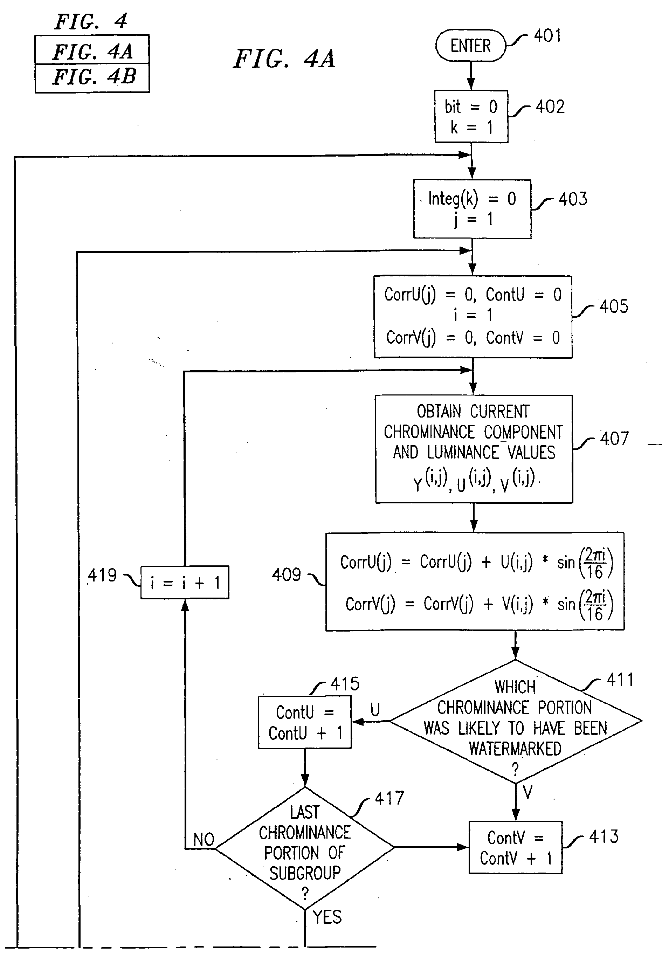

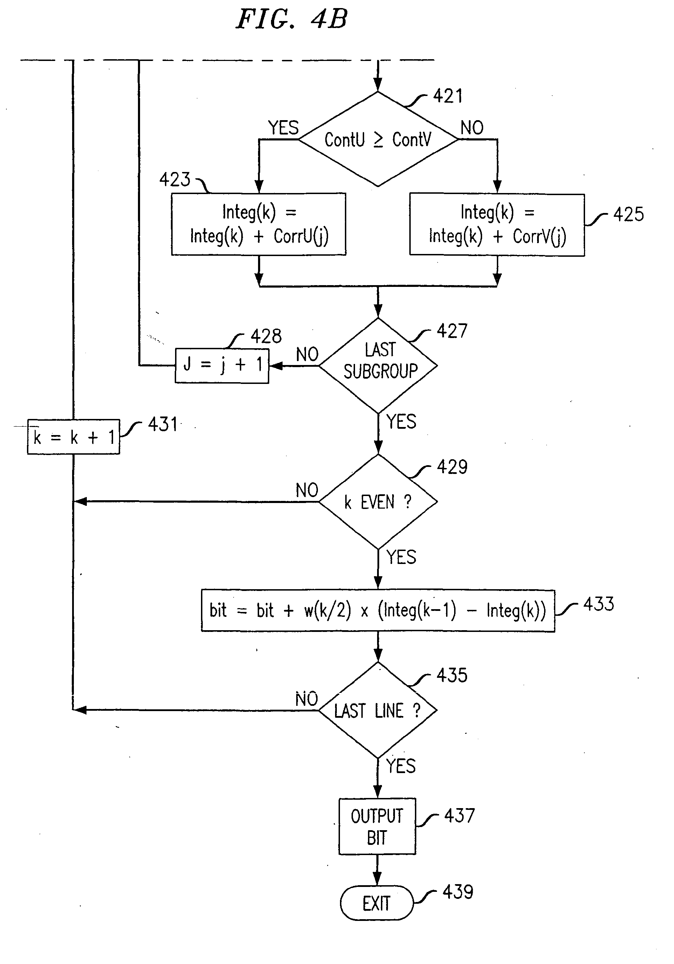

Note that the particular threshold values used in connection with FIGs. 3 and 4 for both U and V are not only dependent on the formula used for calculating var(i), but also at least partially dependent on the number of bits used to represent each Y value. For example, the suggested threshold values herein are for Y being an 10 bit value. Those of ordinary skill in the art will readily recognize that the values employed for 8 bits may be scaled to 8 bits by dividing by 4, e.g., shifting the value to the right two times. Likewise, other numbers of bits used for Y, U, and V can be similarly accommodated.

In other embodiments of the invention, instead of using the variance of the luminance for the various comparisons, a different average variance, e.g., the average V variance over the subgroup, may be calculated and employed.

If the test result in step 323 is YES, indicating that the value of var($i$) is greater than t1v, i.e., 20 the variance is large enough that the additional data may be encoded with the largest encoded value, represented as m1, e.g., 16, control is passed to step 325, in which a variable $m$ is set equal to m1, e.g., 16.

If the test result in step 323 is NO, indicating that the variance was not large enough that the additional data may be encoded with the largest encoded value, control passes to conditional branch point 329, which tests to determine if the variance is greater than a second prescribed threshold t2v, which is the second largest threshold. An exemplary value of t2v is 10.

If the test result in step 329 is YES, indicating that, the value of var($i$) is greater than t2v, i.e., the variance is large enough that the additional data may be encoded with the second largest encoded value, represented as m2, e.g., 12, control is passed to step 331, in which variable $m$ is set equal to m2, e.g., 12.

If the test result in step 329 is NO, indicating that the variance is not large enough that the additional data may be encoded with the second largest encoded value, control passes to conditional branch point 333, which tests to determine if the variance for the chrominance component, var($i$), is greater than a third prescribed V threshold, t3v, which is the smallest V threshold. An exemplary value of t3v is 5.

If the test result in step 333 is YES, indicating that the value of var($i$), is greater than t3v, i.e., the variance is large enough that the additional data may be encoded with the third largest encoded value, represented as m3, e.g., 8, control is passed to step 335, in which variable $m$ is set equal to m3, e.g., 8.

If the test result in step 333 is NO, indicating that the variance is not large enough that the additional data may be encoded with the third largest encoded value, control is passed to step 337, in which variable $m$ is set equal to m4, e.g., 4.

If the test result in step 321 is YES, indicating that variable SUBGROUP MAJORITY is equal to U, so that it is the U chrominance portion of the current chrominance component that is to be watermarked, control passes to conditional branch point 343, which tests to determine whether the variance associated with the chrominance component, var($i$), is greater than a first prescribed U threshold t1u, which is the largest U threshold. An exemplary value of t1u based on the formula of var (i) is 20.

If the test result in step 343 is YES, indicating that the value of var($i$) is greater than t1u, i.e., the variance is large enough that the additional data may be encoded with the largest encoded value, represented as m1, e.g., 16, control is passed to step 345, in which a variable $m$ is set equal to m1, e.g., 16.

If the test result in step 343 is NO, indicating that the variance was not large enough that the additional data may be encoded with the largest encoded value, control passes to conditional branch point 349, which tests to determine if the variance is greater than a second prescribed threshold t2u, which is the second largest U threshold. An exemplary value of t2u is 10.

If the test result in step 349 is YES, indicating that the value of var($i$) is greater than t4u, i.e., the variance is large enough that the additional data may be encoded with the second largest encoded value, represented as m2, e.g., 12, control is passed to step 351, in which variable $m$ is set equal to m2, e.g., 12.

If the test result in step 349 is NO, indicating that the variance is not large enough that the additional data may be encoded with the second largest encoded value, control passes to conditional branch point 353, which tests to determine if the variance for the chrominance component, var($i$), is greater than a third prescribed U threshold, t3u, which is the smallest U threshold. An exemplary value of t3u is 5.

If the test result in step 353 is YES, indicating that the value of var($i$), is greater than t3v, i.e., the variance is large enough that the additional data may be encoded with the third largest encoded value, represented as m3, e.g., 8, control is passed to step 355, in which variable $m$ is set equal to m3, e.g., 8.

If the test result in step 353 is NO, indicating that the variance is not large enough that the additional data may be encoded with the third largest encoded value, control is passed to step 357, in which variable $m$ is set equal to m4, e.g., 4.

Those of ordinary skill in the art will readily recognize that although separate pathes are provided for U and V, this is to enable the use of different threshold values and/or different encoded values for U and V. When, as in the example herein, the threshold values and the encoded values for U and V are the same, the two pathes may be collapsed into a single path.

Upon completion of any of steps 325, 331, 335, 337, 345, 351, 355, and 357, control passes to conditional branch point 361, which sets the value of the variable oddline to one if the line currently be processed is an odd line of the frame. This may be achieved by setting oddline equal to the modulus of the current line number divided by 2. Conditional branch point 363 then tests to determine if the value of oddline is equal to one. If the test result in step 323 is YES, indicating that the current line is indeed an odd line of the frame, control passes to step 367. If the test result in step 323 is NO, indicating that the value of oddline is zero, since the current line is an even line of the frame, control passes to step 365, in which the value of oddline is set to -1. Control then passes to step 367.

Conditional branch point 367 tests to determine if the data to be added to the current chrominance position is a one. If the test result in step 367 is YES, indicating the data being added for the current chrominance component position is a 1, control passes to step 369, in which the value of watermarkadd is set to the product of m, oddline, and the value of the antipodal waveform for the position of the chrominance component being watermarked. In other words, watermarkadd = m * oddline * sin($2\pi i/16$), where i is the current chrominance component position.

If the test result in step 367 is NO, indicating the data being added for the current chrominance component position is a 0, control passes to step 369, in which the value of watermarkadd is set to the product of m, -1, oddline, and the value of the antipodal waveform for the position of the chrominance portion being watermarked. In other words, watermarkadd = -m * oddline * sin($2\pi i/16$), where i is the current chrominance position.

After completing step 369 or 371, control passes to step 373, in which the value of watermarkadd is added to the value of the chrominance portion of the current chrominance component indicated by SUBGROUP MAJORITY. Control then passes back to step 375.

After completing step 373, or if the test result in step 317 is NO, control passes to conditional branch point 375, which tests to determine if the just processed chrominance component is the last chrominance component of a subgroup. If the test result in step 375 is YES, control passes to step 379 and the process is exited. If the test result in step 375 is NO, control passes to step 337, which obtains the next chrominance component of the subgroup that is to be processed. Control then passes back to step 315 and the process continues as described above.

FIGs. 4A and 4B, when connected together as shown in FIG. 4, show an exemplary process for extracting the additional information from a digitally watermarked video signal in which the additional information that constitutes the watermarking signal within the video signal has been impressed upon the chrominance component in accordance with the principles of the invention. Such a process may be implemented by an exemplary software embodiment of the invention. Those of ordinary skill in the art will readily understand how such processes relate to the embodiment of the invention shown in FIG. 2.

The process is entered in step 401 (FIG. 4) when the chrominance components that are together representing a single bit of additional data have been received and stored, e.g., the same group of chrominance components positions for 6 lines. Note that for pedagogical purposes it is assumed herein that chrominance components are supplied for processing by the process of FIG. 4 grouped by the bit that they are representing, so that all the chrominance components for a bit are processed prior to any chrominance components for the next bit are processed. However, in designing an actual system, those of ordinary skill in the art will readily recognize that the chrominance components may be processed in the same order that they are scanned, and that appropriate memory locations and control structures may be used so as to effectively separately process the chrominance components by bit.

After entering the process in step 401, several variables that are used in the process are initialized to zero in step 402, e.g., k and bit. Variable bit is the final soft bit output for a bit position and k is the line count, which may be derived by taking the remainder of the modulous 6 of the actual frame line number and adding 1, where the lines are numbered from 1 to 525. Note that, as discussed herein above, there may be 3 bit positions on a line.

Next, in step 403, the variable representing the overall integration over the group for line k, Integ(k) is set equal to zero. In FIG. 2, Integ(k) is developed by group integrator 231. Variable j, the subgroup index, is also set to one.

In step 405, the value of the U correlation for the jth subgroup, CorrU(j) is set to zero. Also, CntU, which counts the number of times U is selected as chrominance portion that was likely watermarked within a subgroup is set to zero. Additionally, i, the chrominance component index within a subgroup, which ranges from 1 to 16, is set to one. Similarly, the value of the V correlation for the jth subgroup, corrV(j) is set to zero. Also, CntV, which counts the number of times V is selected as chrominance portion that was likely watermarked within a subgroup is set to zero.

In step 407, for the current line k, the current chrominance component, i.e., U(i,j) and V(i,j), is read, and a value for Y(i,j) that is associated with the chrominance component is developed. Y(i,j) may be developed, for example, as the average of the two Y values associated with the current chrominance component, or it may simply be one of the Y values, the other being discarded.

The correlation between the value of each of the chrominance components and the current value of the antipodal waveform is computed in step 409, and the resulting value added to the appropriate running total of correlation of the current subgroup. To wit:

$$\text{CorrU(j)} = \text{CorrU(j)} + U(i, j)*\sin(2\pi i/16);$$

and

$$\text{CorrV(j)} = \text{CorrV(j)} + V(i, j)*\sin(2\pi i/16)$$

are computed.

Next, conditional branch point 411 tests to determine which chrominance portion, U or V, for the current chrominance component, is likely to have been watermarked. This may be deteremined, for example, in FIG. 2 using color selection 207. The particular chrominance portion is determined, as a function of Y, U, and V essentially by repeating the calculations that were necessary to determine the signal SUBGROUP MAJORITY as performed by color section 105 (FIG. 1). In one embodiment of the invention, color selection unit 207 (FIG. 2) is based on a lookup table, as described hereinbelow.

If the test result in step 411 is V, indicating that for the current chrominance component it is likely that V was selected to carry the additional data, control passes to step 413, in which CntV is incremented. If the test result in step 411 is U, indicating that for the current chrominance component it is likely that U was selected to carry the additional data, control passes to step 415, in which CntU is incremented.

After completion of either step 413 or 415, control passes to step 417, which tests to determine if the currently being processed chrominance component is the last chrominance component in the current subgroup, i.e., the last chrominance component that corresponds to the current cycle of the antipodal waveform. If the test result in step 417 is NO, indicating that there yet remains additional chrominance components in the current subgroup, control passes to step 419, in which the chrominance component index i is incremented. Control then passes back to step 407 and the process continues as described above.

If the test result in step 417 is YES, indicating that the current chrominance component is the last of the current subgroup, control passes to conditional branch point 421, which tests to determine if CntU ≥ CntV. If the test result in step 421 is YES, indicating that U was selected at least as many if not more times than V within the just processed subgroup, control passes to step 423 in which Integ(k) is set equal to Integ(k) + CorrU(j), i.e., the correlation for U over the subgroup is added to the total integration over the group. Similarly, if the test result in step 421 is NO, indicating that V was selected more times than U within the just processed subgroup, control passes to step 425 in which Integ(k) is set equal to Integ(k) + CorrV(j), i.e., the correlation for V over the subgroup is added to the total integration over the group.

After completion of steps 423 or 425, control passes to conditional branch point 427, which tests to determine if the currently being processed subgroup is the last subgroup of the current group. If the test result in step 427 is NO, control passes to step 428, in which the subgroup index j is incremented, to point to the next subgroup.

If the test resulting step 427 is YES, indicating the entire group has been processed for the current line, control passes to conditional branch point 429, which tests to determine if the value of the current line count k is an even number. If the test result in step 429 is NO, indicating that the current line is an odd numbered line, and hence there are more lines to be processed before the current bit can be determined, control passes to step 431, in which current line count k is incremented. Control then passes back to step 403 and the process continues as described above.

If the test result in step 429 is YES, indicating that there are no more lines to be processed before the current bit can be determined, control passes to step 433, in which the value of bit(k), the final soft bit output for a bit position, is updated by having added thereto the product of a weight factor and the difference between the value of the integration over the group for the previous line, Integ(k-1), and the value of the integration over the group for the current line, i.e., Integ(k). In other words, step 433 computes, for example, bit = bit + w(k/2) * (Integ(k-1) - Integ(k)). Note that when using 6 lines for one bit, there will be 3 weight values. In one embodiment of the invention, the weights are (0, 1, 0). Thus, effectively, only the middle two lines are used in determining the value of the bit. However, repeating the data over the 6 lines helps the data on the middle two lines pass through the filtering that an NTSC signal undergoes with a sufficiently high likelihood of being properly detected.

Conditional branch point 435 tests to determine if the last line for the bit has been reached, i.e., has k reached its maximum value, e.g., 6. If the test result in step 435 is NO, indicating there remains additional lines to be processed before the current bit can be determined, control passes back to step 431 and the process continues as described above. If the test result in step 435 is YES, indicating all the lines for the current bit has been processed, control passes to step 437, in which the value of bit is supplied as the soft data output. The process is then exited in step 439.

Note that not all of the bit positions of a frame of the video signal need be impressed with additional information.

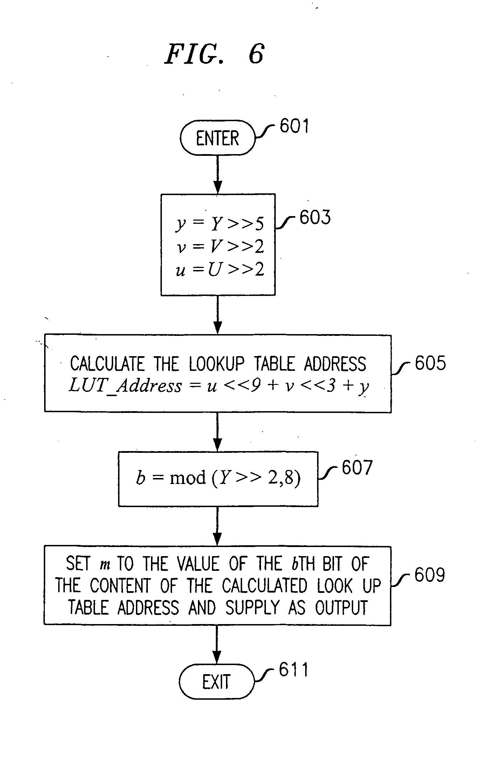

FIG. 6 shows an exemplary process for determining which particular chrominance portion is more suitable, and so should be selected, to contain the watermarking information for a chrominance component. The process is entered in step 601 when it is necessary to select a chrominance portion to contain watermarking information. For purposes of discussion of FIG. 6, it is assumed that the chrominance component is represented in YUV format. Furthermore, for each chrominance portion, only one Y value is needed. Therefore, the two Y values associated with each chrominance portion on a line in 4-2-2 resolution may be averaged, or one of them may be selected and the other discarded, e.g., the value of Y as supplied as output by YUV multiplexer and decimater 103 may be employed as Y in the description of following FIGs..

Conceptually, each position in a three-dimensional YUV colorspace corresponding to a possible Y, U, and V combination, given the full range that Y, U, and V values can take, is assigned a chrominance portion, e.g., based on experimental observations, that is more suitable for watermarking as being less likely to introduce visual artifacts if it is watermarked. If a version of the entire table for each possible set of Y, U, and V values was to be employed, where each of Y, U, and V has a full range of 8 bits, at least 16M bit of information would need to be stored, assuming that one bit is stored for each position to indicate the selected chrominance portion.

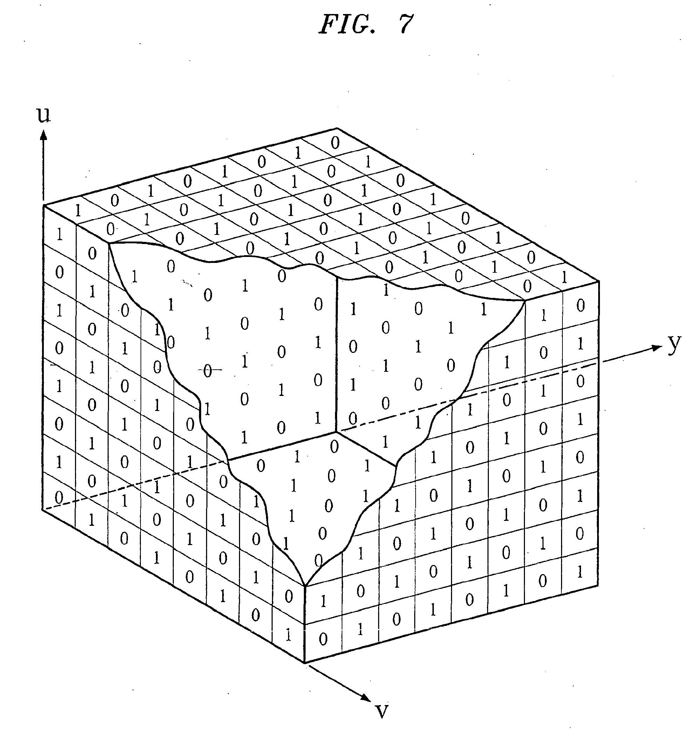

A cutaway view of a portion of exemplary assignments of a chrominance portion that is to be selected for each possible Y, U, and V combination within a three-dimensional YUV colorspace is shown in FIG. 7. Note that FIG. 7 is provided for pedagogical purposes only, as a conceptualization visual aid, and does not represent actual data.

In order to reduce the storage requirements, the YUV colorspace may be considered to be a group of regions, each region being defined to include the positions corresponding to at least one set, and typically multiple sets, of Y, U, and V values, i.e., the positions in the colorspace corresponding to each region, and hence each Y, U, V combination which maps to that region, is assigned a chrominance portion, e.g., based on experimental observations, that is to be selected for any set of Y, U, and V values that fall within the region. One way to look at such grouping into regions is a quantization, which may be linear or nonlinear.

Table 1 is a listing for an exemplary colorspace selection table, where each region corresponds to 4 Y values, 4 U values, and 4 V values, and hence to 64 possible combinations of 8 bit values for any pixel. Using such a table reduces the required information to be stored down to 256 Kbits, assuming that only one bit was stored for each position. Table 1 may be stored in any computer readable medium, e.g., ROM, RAM, magnetic storage such as a hard disk or tape drive, optical storage such as a CD-ROM or DVD-ROM, or the like.

Those of ordinary skill in the art will readily recognize that the values employed in Table 1, which are for each of Y, U, and V having a full range of 8 bits, may be scaled for use with 10 bit Y, U, and V values, such as is used in the remaining elements of FIG. 1, by dividing by 4, e.g., shifting each 10 bit value to the right two times. Likewise, other numbers of bits used for Y, U, and V can be similarly accommodated.

In order to effectively arrange and access the data of Table 1, it is arranged so that the specified U or V selection, where 1 indicates select U and 0 indicates select V, for 8 adjacent regions having the same U and V quantized values but different sequential quantized Y values, are grouped together to form a byte. Thus, for each U and V value there are 8 bytes, each corresponding to a region having the same U and V quantized values but different quantized Y values.

Table 1 is arranged to be addressed using an address that has the most significant bits corresponding to the U values, the next least significant values corresponding to the V values, and the least significant values corresponding to the Y values. In other words, the address of the bytes may be formed as follows:
U7|U6|U5|U4|U3|U2|V7|V6|V5|V4|V3|V2|Y7|Y6|Y5
where U7,U6,U5,U4,U3, and U2 are the values of the 8th to 3rd least significant bits of the U value, V7,V6,V5,V4,V3, and V2 are the values of the 8th to 3rd least significant bits of the V value, and Y7,Y6, and Y5, are the values of the 8th to 6th least significant bits of the Y value. Then, the particular bit within the byte is specified by using the 5th to 2nd least significant bits of the Y value, e.g., Y4, Y3, and Y2.

A table such as Table 1 is reflective of the facts that the human visual system is a) less sensitive to the blue color and b) more sensitive to lower luminance values. Such a table may be developed by trial and error, generally as follows.

The colorspace is examined in sections, each section being defined by a luminance value and ranging in a first dimension corresponding to a first chrominance portion changing from its minimum value to its maximum value and in the second dimension corresponding to the second chrominance portion changing from its minimum value to its maximum value. Any or all of the luminance and the chrominance portions may be quantized, e.g., using the 6 most significant bits of 8 bit values. Doing so creates a set of planes having a checkerboard of chrominance portion values, which appears when displayed as boxes of different colors, one plane for each luminance value. For example, quantizing so as to use the 6 most significant bits of 8 bit values for the luminance and both both chrominance portions yields 64 planes that correspond to each possible quantized luminance value, and each plane has a checkboard pattern of colored boxes, with 64 boxes vertically and 64 boxes horizontally for a total of 4096 boxes per plane.

Each plane is examined separately. Random data is developed for a number of frames sufficient to be confident that the random data will have different values in like positioned boxes of the frame over time and for an observer to detect flicker should it appear. Thirty seconds or longer have proven to be of value. The random data is impressed upon frames that contain the plane, but only on a first one of the chrominance portions. The resulting version of the frames is displayed and observed.

Any box for which no flicker is observed is indicated in the table that its combination of luminance and chrominance portions should employ the chrominance portion currently carrying the watermark data as the selected chrominance portion for that combination. Any box for which flicker is observed is indicated in the table that its combination of luminance and chrominance portions should employ the chrominance portion that is not currently carrying the watermark data as the selected chrominance portion for that combination. The process is repeated for the plane but changing the chrominance portion that has data added to it.

For any box of a plane that flicker occurs for both chrominance portions, as can happen, the implementor may choose which chrominance portion should be selected. For example, U may be chosen because the human visual system is generally less sensitive to blue. Alternatively, the chrominance portion that would provide for better data compression of the resulting table may be employed. Similarly, where flicker does not appear on either box, the choice of the chrominance portion to employ is at the discretion of the implementor.

The process is repeated for each plane until the entire table is populated.

## Table 1

```
Address |                                          Content
-----------------------------------------------------------------------------------------------
    1 to   16 |   255  255  255  255  255  255  255  255  255  255  255  255  255  255  255  255
   17 to   32 |   255  255  255  255  255  255  255  255  255  255  255  255  255  255  255  255
   33 to   48 |   255  255  255  255  255  255  255  255  255  255  255  255  255  255  255  255
   49 to   64 |   255  255  255  255  255  255  255  255  255  255  255  255  255  255  255  255
   65 to   80 |   255  255  255  255  255  255  255  255  255  255  255  255  255  255  255  255
   81 to   96 |   255  255  255  255  255  255  255  255  255  255  255  255  255  255  255  255
   97 to  112 |   255  255  255  255  255  255  255  255  255  255  255  255  255  255  255  255
  113 to  128 |   255  255  255  255  255  255  255  255  255  255  255  255  255  255  255  255
  129 to  144 |   255  255  255  255  255  255  255  255  255  255  255  255  255  255  255  255
  145 to  160 |   255  255  255  255  255  255  255  255  255  255  255  255  255  255  255  255
  161 to  176 |   255  255  255  255  255  255  255  255  255  255  255  255  255  255  255  255
  177 to  192 |   255  255  255  255  255  255  255  255  255  255  255  255  255  255  255  255
  193 to  208 |   255  255  255  255  255  255  255. 255  255  255  255  255  255  255  255  255
  209 to  224 |   255  255  255  255  255  255  255  255  255  255  255  255  255  255  255  255
  225 to  240 |   255  255  255  255  255  255  255  255  255  255  255  255  255  255  255  255
  241 to  256 |   255  255  255  255  255  255  255  255    0    0    0    0    0    0    0    0
  257 to  272 |   255  255  127    0    0    0    0    0  255  255  255  255  255  255  255  255
  273 to  288 |   255  255  255  255  255 '255  255  255  255  255  255  255  255  255  255  255
  289 to  304 |   255  255  255  255  255  255  255  255  255  255  255  255  255  255  255  255
  305 to  320 |   255  255  255  255  255  255  255  255  255  255  255  255  255  255  255  255
  321 to  336 |   255  255  255  255  255  255  255  255  255  255  255  255  255  255  255  255
  337 to  352 |   255  255  255  255  255  255  255  255  255  255  255  255  255  255  255  255
  353 to  368 |   255  255  255  255  255  255  255  255  255  255  255  255  255  255  255  255
  369 to  384 |   255  255  255  255  255  255  255  255  255  255  255  255  255  255  255  255
  385 to  400 |   255  255  255  255  255  255  255  255  255  255  255  255  255  255  255  255
  401 to  416 |   255  255  255  255  255  255  255  255  255  255  255  255  255  255  255  255
  417 to  432 |   255  255  255  255  255  255  255  255  255  255  255  255  255  255  255  255
  433 to  448 |   255  255  255  255  255  255  255  255  255  255  255  255  255  255  255  255
  449 to  464 |   255  255  255  255  255  255  255  255  255  255  255  255  255  255  255  255
  465 to  480 |   255  255  255  255  255  255  255  255  255  255  255  255  255  255  255  255
  481 to  496 |   255  255  255  255  255  255  255  255  255  255  255  255  255  255  255  255
  497 to  512 |   255  255  255  255  255  255  255  255  255  255  255  255  255  255  255  255
  513 to  528 |   255  255  255  255  255  255  255  255  255  255  255  255  255  255  255  255
  529 to  544 |   255  255  255  255  255  255  255  255  255  255  255  255  255  255  255  255
  545 to  560 |   255  255  255  255  255  255  255  255  255  255  255  255  255  255  255  255
  561 to  576 |   255  255  255  255  255  255  255  255  255  255  255  255  255  255  255  255
  577 to  592 |   255  255  255  255  255  255  255  255  255  255  255  255  255  255  255  255
  593 to  608 |   255  255  255  255  255  255  255  255  255  255  255  255  255  255  255  255
  609 to  624 |   255  255  255  255  255  255  255  255  255  255  255  255  255  255  255  255
  625 to  640 |   255  255  255  255  255  255  255  255  255  255  255  255  255  255  255  255
  641 to  656 |   255  255  255  255  255  255  255  255  255  255  255  255  255  255  255  255
  657 to  672 |   255  255  255  255  255  255  255  255  255  255  255  255  255  255  255  255
  673 to  688 |   255  255  255  255  255  255  255  255  255  255  255  255  255  255  255  255
  689 to  704 |   255  255  255  255  255  255  255  255  255  255  255  255  255  255  255  255
  705 to  720 |   255  255  255  255  255  255  255  255  255  255  255  255  255  255  255  255
  721 to  736 |   255  255  255  255  255  255  255  255  255  255  255  255  255  255  255  255
  737 to  752 |     0    0    0    0    0    0    0    0    0    0    0    0    0    0    0    0
  753 to  768 |     0    0    0    0    0    0    0    0    0    0    0    0    0    0    0    0
  769 to  784 |   254  255  127    0    0    0    0    0  255  255  255    0    0    0    0    0
  785 to  800 |   255  255  255  255  255  255  255  255  255  255  255  255  255  255  255  255
  801 to  816 |   255  255  255  255  255  255  255  255  255  255  255  255  255  255  255  255
  817 to  832 |   255  255  255  255  255  255  255  255  255  255  255  255  255  255  255  255
  833 to  848 |   255  255  255  255  255  255  255  255  255  255  255  255  255  255  255  255
  849 to  864 |   255  255  255  255  255  255  255  255  255  255  255  255  255  255  255  255
  865 to  880 |   255  255  255  255  255  255  255  255  255  255  255  255  255  255  255  255
  881 to  896 |   255  255  255  255  255  255  255  255  255  255  255  255  255  255  255  255
  897 to  912 |   255  255  255  255  255  255  255  255  255  255  255  255  255  255  255  255
  913 to  928 |   255  255  255  255  255  255  255  255  255  255  255  255  255  255  255  255
  929 to  944 |   255  255  255  255  255  255  255  255  255  255  255  255  255  255  255  255
  945 to  960 |   255  255  255  255  255  255  255  255  255  255  255  255  255  255  255  255
  961 to  976 |   255  255  255  255  255  255  255  255  255  255  255  255  255  255  255  255
  977 to  992 |   255  255  255  255  255  255  255  255  255  255  255  255  255  255  255  255
  993 to 1008 |   255  255  255  255  255  255  255  255  255  255  255  255  255  255  255  255
 1009 to 1024 |   255  255  255  255  255  255  255  255  255  255  255  255  255  255  255  255
 1025 to 1040 |   255  255  255  255  255  255  255  255  255  255  255  255  255  255  255  255
 1041 to 1056 |   255  255  255  255  255  255  255  255  255  255  255  255  255  255  255  255
 1057 to 1072 |   255  255  255  255  255  255  255  255  255  255  255  255  255  255  255  255
 1073 to 1088 |   255  255  255  255  255  255  255  255  255  255  255  255  255  255  255  255
 1089 to 1104 |   255  255  255  255  255  255  255  255  255  255  255  255  255  255  255  255
 1105 to 1120 |   255  255  255  255  255  255  255  255  255  255  255  255  255  255  255  255
 1121 to 1136 |   255  255  255  255  255  255  255  255  255  255  255  255  255  255  255  255
 1137 to 1152 |   255  255  255  255  255  255  255  255  255  255  255  255  255  255  255  255
 1153 to 1168 |   255  255  255  255  255  255  255  255  255  255  255  255  255  255  255  255
 1169 to 1184 |   255  255  255  255  255  255  255  255  255  255  255  255  255  255  255  255
 1185 to 1200 |   255  255  255  255  255  255  255  255  255  255  255  255  255  255  255  255
 1201 to 1216 |   255  255  255  255  255  255  255  255  255  255  255  255  255  255  255  255
 1217 to 1232 |   255  255  255  255  255  255  255  255    0    0    0    0    0    0    0    0
 1233 to 1248 |     0    0    0    0    0    0    0    0    0    0    0    0    0    0    0    0
 1249 to 1264 |     0    0    0    0    0    0    0    0    0    0    0    0    0    0    0    0
 1265 to 1280 |     0    0    0    0    0    0    0    0    0    0    0    0    0    0    0    0
 1281 to 1296 |   248  255  255    0    0    0    0    0  255  255  255    0    0    0    0    0
 1297 to 1312 |   255  255  255    1    0    0    0    0  255  255  255  255  255  255  255  255
 1313 to 1328 |   255  255  255  255  255  255  255  255  255  255  255  255  255  255  255  255
 1329 to 1344 |   255  255  255  255  255  255  255  255  255  255  255  255  255  255  255  255
 1345 to 1360 |   255  255  255  255  255  255  255  255  255  255  255  255  255  255  255  255
 1361 to 1376 |   255  255  255  255  255  255  255  255  255  255  255  255  255  255  255  255
 1377 to 1392 |   255  255  255  255  255  255  255  255  255  255  255  255  255  255  255  255
```

| Address | | | | | | | | | | | | | | | | |
|---|---|---|---|---|---|---|---|---|---|---|---|---|---|---|---|---|
| 1393 to 1408 | 255 | 255 | 255 | 255 | 255 | 255 | 255 | 255 | 255 | 255 | 255 | 255 | 255 | 255 | 255 | 255 |
| 1409 to 1424 | 255 | 255 | 255 | 255 | 255 | 255 | 255 | 255 | 255 | 255 | 255 | 255 | 255 | 255 | 255 | 255 |
| 1425 to 1440 | 255 | 255 | 255 | 255 | 255 | 255 | 255 | 255 | 255 | 255 | 255 | 255 | 255 | 255 | 255 | 255 |
| 1441 to 1456 | 255 | 255 | 255 | 255 | 255 | 255 | 255 | 255 | 255 | 255 | 255 | 255 | 255 | 255 | 255 | 255 |
| 1457 to 1472 | 255 | 255 | 255 | 255 | 255 | 255 | 255 | 255 | 255 | 255 | 255 | 255 | 255 | 255 | 255 | 255 |
| 1473 to 1488 | 255 | 255 | 255 | 255 | 255 | 255 | 255 | 255 | 255 | 255 | 255 | 255 | 255 | 255 | 255 | 255 |
| 1489 to 1504 | 255 | 255 | 255 | 255 | 255 | 255 | 255 | 255 | 255 | 255 | 255 | 255 | 255 | 255 | 255 | 255 |
| 1505 to 1520 | 255 | 255 | 255 | 255 | 255 | 255 | 255 | 255 | 255 | 255 | 255 | 255 | 255 | 255 | 255 | 255 |
| 1521 to 1536 | 255 | 255 | 255 | 255 | 255 | 255 | 255 | 255 | 255 | 255 | 255 | 255 | 255 | 255 | 255 | 255 |
| 1537 to 1552 | 255 | 255 | 255 | 255 | 255 | 255 | 255 | 255 | 255 | 255 | 255 | 255 | 255 | 255 | 255 | 255 |
| 1553 to 1568 | 255 | 255 | 255 | 255 | 255 | 255 | 255 | 255 | 255 | 255 | 255 | 255 | 255 | 255 | 255 | 255 |
| 1569 to 1584 | 255 | 255 | 255 | 255 | 255 | 255 | 255 | 255 | 255 | 255 | 255 | 255 | 255 | 255 | 255 | 255 |
| 1585 to 1600 | 255 | 255 | 255 | 255 | 255 | 255 | 255 | 255 | 255 | 255 | 255 | 255 | 255 | 255 | 255 | 255 |
| 1601 to 1616 | 255 | 255 | 255 | 255 | 255 | 255 | 255 | 255 | 255 | 255 | 255 | 255 | 255 | 255 | 255 | 255 |
| 1617 to 1632 | 255 | 255 | 255 | 255 | 255 | 255 | 255 | 255 | 255 | 255 | 255 | 255 | 255 | 255 | 255 | 255 |
| 1633 to 1648 | 255 | 255 | 255 | 255 | 255 | 255 | 255 | 255 | 255 | 255 | 255 | 255 | 255 | 255 | 255 | 255 |
| 1649 to 1664 | 255 | 255 | 255 | 255 | 255 | 255 | 255 | 255 | 255 | 255 | 255 | 255 | 255 | 255 | 255 | 255 |
| 1665 to 1680 | 255 | 255 | 255 | 255 | 255 | 255 | 255 | 255 | 255 | 255 | 255 | 255 | 255 | 255 | 255 | 255 |
| 1681 to 1696 | 255 | 255 | 255 | 255 | 255 | 255 | 255 | 255 | 255 | 255 | 255 | 255 | 255 | 255 | 255 | 255 |
| 1697 to 1712 | 255 | 255 | 255 | 255 | 255 | 255 | 255 | 255 | 255 | 255 | 255 | 255 | 255 | 255 | 255 | 255 |
| 1713 to 1728 | 0 | 64 | 0 | 0 | 0 | 0 | 0 | 0 | 0 | 0 | 0 | 0 | 0 | 0 | 0 | 0 |
| 1729 to 1744 | 0 | 0 | 0 | 0 | 0 | 0 | 0 | 0 | 0 | 0 | 0 | 0 | 0 | 0 | 0 | 0 |
| 1745 to 1760 | 0 | 0 | 0 | 0 | 0 | 0 | 0 | 0 | 0 | 0 | 0 | 0 | 0 | 0 | 0 | 0 |
| 1761 to 1776 | 0 | 0 | 0 | 0 | 0 | 0 | 0 | 0 | 0 | 0 | 0 | 0 | 0 | 0 | 0 | 0 |
| 1777 to 1792 | 0 | 0 | 0 | 0 | 0 | 0 | 0 | 0 | 0 | 255 | 127 | 0 | 0 | 0 | 0 | 0 |
| 1793 to 1808 | 224 | 255 | 255 | 0 | 0 | 0 | 0 | 0 | 252 | 255 | 255 | 1 | 0 | 0 | 0 | 0 |
| 1809 to 1824 | 255 | 255 | 255 | 3 | 0 | 0 | 0 | 0 | 255 | 255 | 255 | 3 | 0 | 0 | 0 | 0 |
| 1825 to 1840 | 255 | 255 | 255 | 255 | 255 | 255 | 255 | 255 | 255 | 255 | 255 | 255 | 255 | 255 | 255 | 255 |
| 1841 to 1856 | 255 | 255 | 255 | 255 | 255 | 255 | 255 | 255 | 255 | 255 | 255 | 255 | 255 | 255 | 255 | 255 |
| 1857 to 1872 | 255 | 255 | 255 | 255 | 255 | 255 | 255 | 255 | 255 | 255 | 255 | 255 | 255 | 255 | 255 | 255 |
| 1873 to 1888 | 255 | 255 | 255 | 255 | 255 | 255 | 255 | 255 | 255 | 255 | 255 | 255 | 255 | 255 | 255 | 255 |
| 1889 to 1904 | 255 | 255 | 255 | 255 | 255 | 255 | 255 | 255 | 255 | 255 | 255 | 255 | 255 | 255 | 255 | 255 |
| 1905 to 1920 | 255 | 255 | 255 | 255 | 255 | 255 | 255 | 255 | 255 | 255 | 255 | 255 | 255 | 255 | 255 | 255 |
| 1921 to 1936 | 255 | 255 | 255 | 255 | 255 | 255 | 255 | 255 | 255 | 255 | 255 | 255 | 255 | 255 | 255 | 255 |
| 1937 to 1952 | 255 | 255 | 255 | 255 | 255 | 255 | 255 | 255 | 255 | 255 | 255 | 255 | 255 | 255 | 255 | 255 |
| 1953 to 1968 | 255 | 255 | 255 | 255 | 255 | 255 | 255 | 255 | 255 | 255 | 255 | 255 | 255 | 255 | 255 | 255 |
| 1969 to 1984 | 255 | 255 | 255 | 255 | 255 | 255 | 255 | 255 | 255 | 255 | 255 | 255 | 255 | 255 | 255 | 255 |
| 1985 to 2000 | 255 | 255 | 255 | 255 | 255 | 255 | 255 | 255 | 255 | 255 | 255 | 255 | 255 | 255 | 255 | 255 |
| 2001 to 2016 | 255 | 255 | 255 | 255 | 255 | 255 | 255 | 255 | 255 | 255 | 255 | 255 | 255 | 255 | 255 | 255 |
| 2017 to 2032 | 255 | 255 | 255 | 255 | 255 | 255 | 255 | 255 | 255 | 255 | 255 | 255 | 255 | 255 | 255 | 255 |
| 2033 to 2048 | 255 | 255 | 255 | 255 | 255 | 255 | 255 | 255 | 255 | 255 | 255 | 255 | 255 | 255 | 255 | 255 |
| 2049 to 2064 | 255 | 255 | 255 | 255 | 255 | 255 | 255 | 255 | 255 | 255 | 255 | 255 | 255 | 255 | 255 | 255 |
| 2065 to 2080 | 255 | 255 | 255 | 255 | 255 | 255 | 255 | 255 | 255 | 255 | 255 | 255 | 255 | 255 | 255 | 255 |
| 2081 to 2096 | 255 | 255 | 255 | 255 | 255 | 255 | 255 | 255 | 255 | 255 | 255 | 255 | 255 | 255 | 255 | 255 |
| 2097 to 2112 | 255 | 255 | 255 | 255 | 255 | 255 | 255 | 255 | 255 | 255 | 255 | 255 | 255 | 255 | 255 | 255 |
| 2113 to 2128 | 255 | 255 | 255 | 255 | 255 | 255 | 255 | 255 | 255 | 255 | 255 | 255 | 255 | 255 | 255 | 255 |
| 2129 to 2144 | 255 | 255 | 255 | 255 | 255 | 255 | 255 | 255 | 255 | 255 | 255 | 255 | 255 | 255 | 255 | 255 |
| 2145 to 2160 | 255 | 255 | 255 | 255 | 255 | 255 | 255 | 255 | 255 | 255 | 255 | 255 | 255 | 255 | 255 | 255 |
| 2161 to 2176 | 255 | 255 | 255 | 255 | 255 | 255 | 255 | 255 | 255 | 255 | 255 | 255 | 255 | 255 | 255 | 255 |
| 2177 to 2192 | 255 | 255 | 255 | 255 | 255 | 255 | 255 | 255 | 255 | 255 | 255 | 255 | 255 | 255 | 255 | 255 |
| 2193 to 2208 | 255 | 255 | 255 | 255 | 255 | 255 | 255 | 255 | 0 | 0 | 0 | 0 | 0 | 0 | 0 | 0 |
| 2209 to 2224 | 0 | 0 | 0 | 0 | 0 | 0 | 0 | 0 | 0 | 0 | 0 | 0 | 0 | 0 | 0 | 0 |
| 2225 to 2240 | 0 | 0 | 0 | 0 | 0 | 0 | 0 | 0 | 0 | 0 | 0 | 0 | 0 | 0 | 0 | 0 |
| 2241 to 2256 | 0 | 0 | 0 | 0 | 0 | 0 | 0 | 0 | 0 | 0 | 0 | 0 | 0 | 0 | 0 | 0 |
| 2257 to 2272 | 0 | 0 | 0 | 0 | 0 | 0 | 0 | 0 | 0 | 0 | 0 | 0 | 0 | 0 | 0 | 0 |
| 2273 to 2288 | 0 | 0 | 0 | 0 | 0 | 0 | 0 | 0 | 0 | 0 | 0 | 0 | 0 | 0 | 0 | 0 |
| 2289 to 2304 | 0 | 0 | 0 | 0 | 0 | 0 | 0 | 0 | 0 | 254 | 255 | 0 | 0 | 0 | 0 | 0 |
| 2305 to 2320 | 128 | 255 | 255 | 0 | 0 | 0 | 0 | 0 | 240 | 255 | 255 | 1 | 0 | 0 | 0 | 0 |
| 2321 to 2336 | 254 | 255 | 255 | 3 | 0 | 0 | 0 | 0 | 255 | 255 | 255 | 7 | 0 | 0 | 0 | 0 |
| 2337 to 2352 | 255 | 255 | 255 | 7 | 0 | 0 | 0 | 0 | 255 | 255 | 255 | 15 | 0 | 0 | 0 | 0 |
| 2353 to 2368 | 255 | 255 | 255 | 255 | 255 | 255 | 255 | 255 | 255 | 255 | 255 | 255 | 255 | 255 | 255 | 255 |
| 2369 to 2384 | 255 | 255 | 255 | 255 | 255 | 255 | 255 | 255 | 255 | 255 | 255 | 255 | 255 | 255 | 255 | 255 |
| 2385 to 2400 | 255 | 255 | 255 | 255 | 255 | 255 | 255 | 255 | 255 | 255 | 255 | 255 | 255 | 255 | 255 | 255 |
| 2401 to 2416 | 255 | 255 | 255 | 255 | 255 | 255 | 255 | 255 | 255 | 255 | 255 | 255 | 255 | 255 | 255 | 255 |
| 2417 to 2432 | 255 | 255 | 255 | 255 | 255 | 255 | 255 | 255 | 255 | 255 | 255 | 255 | 255 | 255 | 255 | 255 |
| 2433 to 2448 | 255 | 255 | 255 | 255 | 255 | 255 | 255 | 255 | 255 | 255 | 255 | 255 | 255 | 255 | 255 | 255 |
| 2449 to 2464 | 255 | 255 | 255 | 255 | 255 | 255 | 255 | 255 | 255 | 255 | 255 | 255 | 255 | 255 | 255 | 255 |
| 2465 to 2480 | 255 | 255 | 255 | 255 | 255 | 255 | 255 | 255 | 255 | 255 | 255 | 255 | 255 | 255 | 255 | 255 |
| 2481 to 2496 | 255 | 255 | 255 | 255 | 255 | 255 | 255 | 255 | 255 | 255 | 255 | 255 | 255 | 255 | 255 | 255 |
| 2497 to 2512 | 255 | 255 | 255 | 255 | 255 | 255 | 255 | 255 | 255 | 255 | 255 | 255 | 255 | 255 | 255 | 255 |
| 2513 to 2528 | 255 | 255 | 255 | 255 | 255 | 255 | 255 | 255 | 255 | 255 | 255 | 255 | 255 | 255 | 255 | 255 |
| 2529 to 2544 | 255 | 255 | 255 | 255 | 255 | 255 | 255 | 255 | 255 | 255 | 255 | 255 | 255 | 255 | 255 | 255 |
| 2545 to 2560 | 255 | 255 | 255 | 255 | 255 | 255 | 255 | 255 | 255 | 255 | 255 | 255 | 255 | 255 | 255 | 255 |
| 2561 to 2576 | 255 | 255 | 255 | 255 | 255 | 255 | 255 | 255 | 255 | 255 | 255 | 255 | 255 | 255 | 255 | 255 |
| 2577 to 2592 | 255 | 255 | 255 | 255 | 255 | 255 | 255 | 255 | 255 | 255 | 255 | 255 | 255 | 255 | 255 | 255 |
| 2593 to 2608 | 255 | 255 | 255 | 255 | 255 | 255 | 255 | 255 | 255 | 255 | 255 | 255 | 255 | 255 | 255 | 255 |
| 2609 to 2624 | 255 | 255 | 255 | 255 | 255 | 255 | 255 | 255 | 255 | 255 | 255 | 255 | 255 | 255 | 255 | 255 |
| 2625 to 2640 | 255 | 255 | 255 | 255 | 255 | 255 | 255 | 255 | 255 | 255 | 255 | 255 | 255 | 255 | 255 | 255 |
| 2641 to 2656 | 255 | 255 | 255 | 255 | 255 | 255 | 255 | 255 | 255 | 255 | 255 | 255 | 255 | 255 | 255 | 255 |
| 2657 to 2672 | 255 | 255 | 255 | 255 | 255 | 255 | 255 | 255 | 255 | 255 | 255 | 255 | 255 | 255 | 255 | 255 |
| 2673 to 2688 | 255 | 255 | 255 | 255 | 255 | 255 | 255 | 255 | 255 | 255 | 255 | 255 | 255 | 255 | 255 | 255 |
| 2689 to 2704 | 0 | 0 | 0 | 0 | 0 | 0 | 0 | 0 | 0 | 0 | 0 | 0 | 0 | 0 | 0 | 0 |
| 2705 to 2720 | 0 | 0 | 0 | 0 | 0 | 0 | 0 | 0 | 0 | 0 | 0 | 0 | 0 | 0 | 0 | 0 |
| 2721 to 2736 | 0 | 0 | 0 | 0 | 0 | 0 | 0 | 0 | 0 | 0 | 0 | 0 | 0 | 0 | 0 | 0 |
| 2737 to 2752 | 0 | 0 | 4 | 0 | 0 | 0 | 0 | 0 | 0 | 0 | 2 | 0 | 0 | 0 | 0 | 0 |
| 2753 to 2768 | 0 | 0 | 0 | 0 | 0 | 0 | 0 | 0 | 0 | 0 | 0 | 0 | 0 | 0 | 0 | 0 |
| 2769 to 2784 | 0 | 0 | 0 | 0 | 0 | 0 | 0 | 0 | 0 | 0 | 0 | 0 | 0 | 0 | 0 | 0 |
| 2785 to 2800 | 0 | 0 | 0 | 0 | 0 | 0 | 0 | 0 | 0 | 0 | 0 | 0 | 0 | 0 | 0 | 0 |
| 2801 to 2816 | 0 | 0 | 0 | 0 | 0 | 0 | 0 | 0 | 0 | 248 | 255 | 0 | 0 | 0 | 0 | 0 |
| 2817 to 2832 | 0 | 255 | 255 | 1 | 0 | 0 | 0 | 0 | 192 | 255 | 255 | 1 | 0 | 0 | 0 | 0 |
| 2833 to 2848 | 248 | 255 | 255 | 3 | 0 | 0 | 0 | 0 | 255 | 255 | 255 | 7 | 0 | 0 | 0 | 0 |
| 2849 to 2864 | 255 | 255 | 255 | 15 | 0 | 0 | 0 | 0 | 255 | 255 | 255 | 15 | 0 | 0 | 0 | 0 |
| 2865 to 2880 | 255 | 255 | 255 | 31 | 0 | 0 | 0 | 0 | 255 | 255 | 255 | 255 | 255 | 255 | 255 | 255 |
| 2881 to 2896 | 255 | 255 | 255 | 255 | 255 | 255 | 255 | 255 | 255 | 255 | 255 | 255 | 255 | 255 | 255 | 255 |
| 2897 to 2912 | 255 | 255 | 255 | 255 | 255 | 255 | 255 | 255 | 255 | 255 | 255 | 255 | 255 | 255 | 255 | 255 |
| 2913 to 2928 | 255 | 255 | 255 | 255 | 255 | 255 | 255 | 255 | 255 | 255 | 255 | 255 | 255 | 255 | 255 | 255 |

| Range | | | | | | | | | | | | | | | | |
|---|---|---|---|---|---|---|---|---|---|---|---|---|---|---|---|---|
| 2929 to 2944 | 255 | 255 | 255 | 255 | 255 | 255 | 255 | 255 | 255 | 255 | 255 | 255 | 255 | 255 | 255 | 255 |
| 2945 to 2960 | 255 | 255 | 255 | 255 | 255 | 255 | 255 | 255 | 255 | 255 | 255 | 255 | 255 | 255 | 255 | 255 |
| 2961 to 2976 | 255 | 255 | 255 | 255 | 255 | 255 | 255 | 255 | 255 | 255 | 255 | 255 | 255 | 255 | 255 | 255 |
| 2977 to 2992 | 255 | 255 | 255 | 255 | 255 | 255 | 255 | 255 | 255 | 255 | 255 | 255 | 255 | 255 | 255 | 255 |
| 2993 to 3008 | 255 | 255 | 255 | 255 | 255 | 255 | 255 | 255 | 255 | 255 | 255 | 255 | 255 | 255 | 255 | 255 |
| 3009 to 3024 | 255 | 255 | 255 | 255 | 255 | 255 | 255 | 255 | 255 | 255 | 255 | 255 | 255 | 255 | 255 | 255 |
| 3025 to 3040 | 255 | 255 | 255 | 255 | 255 | 255 | 255 | 255 | 255 | 255 | 255 | 255 | 255 | 255 | 255 | 255 |
| 3041 to 3056 | 255 | 255 | 255 | 255 | 255 | 255 | 255 | 255 | 255 | 255 | 255 | 255 | 255 | 255 | 255 | 255 |
| 3057 to 3072 | 255 | 255 | 255 | 255 | 255 | 255 | 255 | 255 | 255 | 255 | 255 | 255 | 255 | 255 | 255 | 255 |
| 3073 to 3088 | 255 | 255 | 255 | 255 | 255 | 255 | 255 | 255 | 255 | 255 | 255 | 255 | 255 | 255 | 255 | 255 |
| 3089 to 3104 | 255 | 255 | 255 | 255 | 255 | 255 | 255 | 255 | 255 | 255 | 255 | 255 | 255 | 255 | 255 | 255 |
| 3105 to 3120 | 255 | 255 | 255 | 255 | 255 | 255 | 255 | 255 | 255 | 255 | 255 | 255 | 255 | 255 | 255 | 255 |
| 3121 to 3136 | 255 | 255 | 255 | 255 | 255 | 255 | 255 | 255 | 255 | 255 | 255 | 255 | 255 | 255 | 255 | 255 |
| 3137 to 3152 | 255 | 255 | 255 | 255 | 255 | 255 | 255 | 255 | 255 | 255 | 255 | 255 | 255 | 255 | 255 | 255 |
| 3153 to 3168 | 255 | 255 | 255 | 255 | 255 | 255 | 255 | 255 | 255 | 255 | 255 | 255 | 255 | 255 | 255 | 255 |
| 3169 to 3184 | 255 | 255 | 255 | 255 | 255 | 255 | 255 | 255 | 0 | 0 | 0 | 0 | 0 | 0 | 0 | 0 |
| 3185 to 3200 | 0 | 0 | 0 | 0 | 0 | 0 | 0 | 0 | 0 | 0 | 0 | 0 | 0 | 0 | 0 | 0 |
| 3201 to 3216 | 0 | 0 | 0 | 0 | 0 | 0 | 0 | 0 | 0 | 0 | 0 | 0 | 0 | 0 | 0 | 0 |
| 3217 to 3232 | 0 | 0 | 0 | 0 | 0 | 0 | 0 | 0 | 0 | 0 | 0 | 0 | 0 | 0 | 0 | 0 |
| 3233 to 3248 | 0 | 0 | 0 | 0 | 0 | 0 | 0 | 0 | 0 | 0 | 0 | 0 | 0 | 0 | 0 | 0 |
| 3249 to 3264 | 0 | 0 | 8 | 0 | 0 | 0 | 0 | 0 | 0 | 0 | 0 | 0 | 0 | 0 | 0 | 0 |
| 3265 to 3280 | 0 | 0 | 0 | 0 | 0 | 0 | 0 | 0 | 0 | 0 | 0 | 0 | 0 | 0 | 0 | 0 |
| 3281 to 3296 | 0 | 0 | 0 | 0 | 0 | 0 | 0 | 0 | 0 | 0 | 0 | 0 | 0 | 0 | 0 | 0 |
| 3297 to 3312 | 0 | 0 | 0 | 0 | 0 | 0 | 0 | 0 | 0 | 0 | 0 | 0 | 0 | 0 | 0 | 0 |
| 3313 to 3328 | 0 | 0 | 0 | 0 | 0 | 0 | 0 | 0 | 0 | 224 | 255 | 0 | 0 | 0 | 0 | 0 |
| 3329 to 3344 | 128 | 252 | 255 | 1 | 0 | 0 | 0 | 0 | 128 | 255 | 255 | 3 | 0 | 0 | 0 | 0 |
| 3345 to 3360 | 224 | 255 | 255 | 7 | 0 | 0 | 0 | 0 | 252 | 255 | 255 | 7 | 0 | 0 | 0 | 0 |
| 3361 to 3376 | 255 | 255 | 255 | 15 | 0 | 0 | 0 | 0 | 255 | 255 | 255 | 31 | 0 | 0 | 0 | 0 |
| 3377 to 3392 | 255 | 255 | 255 | 31 | 0 | 0 | 0 | 0 | 255 | 255 | 255 | 63 | 0 | 0 | 0 | 0 |
| 3393 to 3408 | 255 | 255 | 255 | 255 | 255 | 255 | 255 | 255 | 255 | 255 | 255 | 255 | 255 | 255 | 255 | 255 |
| 3409 to 3424 | 255 | 255 | 255 | 255 | 255 | 255 | 255 | 255 | 255 | 255 | 255 | 255 | 255 | 255 | 255 | 255 |
| 3425 to 3440 | 255 | 255 | 255 | 255 | 255 | 255 | 255 | 255 | 255 | 255 | 255 | 255 | 255 | 255 | 255 | 255 |
| 3441 to 3456 | 255 | 255 | 255 | 255 | 255 | 255 | 255 | 255 | 255 | 255 | 255 | 255 | 255 | 255 | 255 | 255 |
| 3457 to 3472 | 255 | 255 | 255 | 255 | 255 | 255 | 255 | 255 | 255 | 255 | 255 | 255 | 255 | 255 | 255 | 255 |
| 3473 to 3488 | 255 | 255 | 255 | 255 | 255 | 255 | 255 | 255 | 255 | 255 | 255 | 255 | 255 | 255 | 255 | 255 |
| 3489 to 3504 | 255 | 255 | 255 | 255 | 255 | 255 | 255 | 255 | 255 | 255 | 255 | 255 | 255 | 255 | 255 | 255 |
| 3505 to 3520 | 255 | 255 | 255 | 255 | 255 | 255 | 255 | 255 | 255 | 255 | 255 | 255 | 255 | 255 | 255 | 255 |
| 3521 to 3536 | 255 | 255 | 255 | 255 | 255 | 255 | 255 | 255 | 255 | 255 | 255 | 255 | 255 | 255 | 255 | 255 |
| 3537 to 3552 | 255 | 255 | 255 | 255 | 255 | 255 | 255 | 255 | 255 | 255 | 255 | 255 | 255 | 255 | 255 | 255 |
| 3553 to 3568 | 255 | 255 | 255 | 255 | 255 | 255 | 255 | 255 | 255 | 255 | 255 | 255 | 255 | 255 | 255 | 255 |
| 3569 to 3584 | 255 | 255 | 255 | 255 | 255 | 255 | 255 | 255 | 255 | 255 | 255 | 255 | 255 | 255 | 255 | 255 |
| 3585 to 3600 | 255 | 255 | 255 | 255 | 255 | 255 | 255 | 255 | 255 | 255 | 255 | 255 | 255 | 255 | 255 | 255 |
| 3601 to 3616 | 255 | 255 | 255 | 255 | 255 | 255 | 255 | 255 | 255 | 255 | 255 | 255 | 255 | 255 | 255 | 255 |
| 3617 to 3632 | 255 | 255 | 255 | 255 | 255 | 255 | 255 | 255 | 255 | 255 | 255 | 255 | 255 | 255 | 255 | 255 |
| 3633 to 3648 | 255 | 255 | 255 | 255 | 255 | 255 | 255 | 255 | 255 | 255 | 255 | 255 | 255 | 255 | 255 | 255 |
| 3649 to 3664 | 255 | 255 | 255 | 255 | 255 | 255 | 255 | 255 | 255 | 255 | 255 | 255 | 255 | 255 | 255 | 255 |
| 3665 to 3680 | 0 | 0 | 0 | 0 | 0 | 0 | 0 | 0 | 0 | 0 | 0 | 0 | 0 | 0 | 0 | 0 |
| 3681 to 3696 | 0 | 0 | 0 | 0 | 0 | 0 | 0 | 0 | 0 | 0 | 0 | 0 | 0 | 0 | 0 | 0 |
| 3697 to 3712 | 0 | 0 | 0 | 0 | 0 | 0 | 0 | 0 | 0 | 0 | 0 | 0 | 0 | 0 | 0 | 0 |
| 3713 to 3728 | 0 | 0 | 0 | 0 | 0 | 0 | 0 | 0 | 0 | 0 | 0 | 0 | 0 | 0 | 0 | 0 |
| 3729 to 3744 | 0 | 0 | 0 | 0 | 0 | 0 | 0 | 0 | 0 | 0 | 0 | 0 | 0 | 0 | 0 | 0 |
| 3745 to 3760 | 0 | 0 | 0 | 0 | 0 | 0 | 0 | 0 | 0 | 0 | 96 | 0 | 0 | 0 | 0 | 0 |
| 3761 to 3776 | 0 | 0 | 0 | 0 | 0 | 0 | 0 | 0 | 0 | 0 | 0 | 0 | 0 | 0 | 0 | 0 |
| 3777 to 3792 | 0 | 0 | 0 | 0 | 0 | 0 | 0 | 0 | 0 | 0 | 8 | 0 | 0 | 0 | 0 | 0 |
| 3793 to 3808 | 0 | 0 | 0 | 0 | 0 | 0 | 0 | 0 | 0 | 0 | 0 | 0 | 0 | 0 | 0 | 0 |
| 3809 to 3824 | 0 | 0 | 0 | 0 | 0 | 0 | 0 | 0 | 0 | 0 | 0 | 0 | 0 | 0 | 0 | 0 |
| 3825 to 3840 | 0 | 0 | 0 | 0 | 0 | 0 | 0 | 0 | 0 | 152 | 255 | 1 | 0 | 0 | 0 | 0 |
| 3841 to 3856 | 0 | 241 | 255 | 1 | 0 | 0 | 0 | 0 | 0 | 254 | 255 | 3 | 0 | 0 | 0 | 0 |
| 3857 to 3872 | 192 | 255 | 255 | 7 | 0 | 0 | 0 | 0 | 248 | 255 | 255 | 15 | 0 | 0 | 0 | 0 |
| 3873 to 3888 | 254 | 255 | 255 | 15 | 0 | 0 | 0 | 0 | 255 | 255 | 255 | 31 | 0 | 0 | 0 | 0 |
| 3889 to 3904 | 255 | 255 | 255 | 63 | 0 | 0 | 0 | 0 | 255 | 255 | 255 | 63 | 0 | 0 | 0 | 0 |
| 3905 to 3920 | 255 | 255 | 255 | 127 | 0 | 0 | 0 | 0 | 255 | 255 | 255 | 255 | 255 | 255 | 255 | 255 |
| 3921 to 3936 | 255 | 255 | 255 | 255 | 255 | 255 | 255 | 255 | 255 | 255 | 255 | 255 | 255 | 255 | 255 | 255 |
| 3937 to 3952 | 255 | 255 | 255 | 255 | 255 | 255 | 255 | 255 | 255 | 255 | 255 | 255 | 255 | 255 | 255 | 255 |
| 3953 to 3968 | 255 | 255 | 255 | 255 | 255 | 255 | 255 | 255 | 255 | 255 | 255 | 255 | 255 | 255 | 255 | 255 |
| 3969 to 3984 | 255 | 255 | 255 | 255 | 255 | 255 | 255 | 255 | 255 | 255 | 255 | 255 | 255 | 255 | 255 | 255 |
| 3985 to 4000 | 255 | 255 | 255 | 255 | 255 | 255 | 255 | 255 | 255 | 255 | 255 | 255 | 255 | 255 | 255 | 255 |
| 4001 to 4016 | 255 | 255 | 255 | 255 | 255 | 255 | 255 | 255 | 255 | 255 | 255 | 255 | 255 | 255 | 255 | 255 |
| 4017 to 4032 | 255 | 255 | 255 | 255 | 255 | 255 | 255 | 255 | 255 | 255 | 255 | 255 | 255 | 255 | 255 | 255 |
| 4033 to 4048 | 255 | 255 | 255 | 255 | 255 | 255 | 255 | 255 | 255 | 255 | 255 | 255 | 255 | 255 | 255 | 255 |
| 4049 to 4064 | 255 | 255 | 255 | 255 | 255 | 255 | 255 | 255 | 255 | 255 | 255 | 255 | 255 | 255 | 255 | 255 |
| 4065 to 4080 | 255 | 255 | 255 | 255 | 255 | 255 | 255 | 255 | 255 | 255 | 255 | 255 | 255 | 255 | 255 | 255 |
| 4081 to 4096 | 255 | 255 | 255 | 255 | 255 | 255 | 255 | 255 | 255 | 255 | 255 | 255 | 255 | 255 | 255 | 255 |
| 4097 to 4112 | 255 | 255 | 255 | 255 | 255 | 255 | 255 | 255 | 255 | 255 | 255 | 255 | 255 | 255 | 255 | 255 |
| 4113 to 4128 | 255 | 255 | 255 | 255 | 255 | 255 | 255 | 255 | 255 | 255 | 255 | 255 | 255 | 255 | 255 | 255 |
| 4129 to 4144 | 255 | 255 | 255 | 255 | 255 | 255 | 255 | 255 | 255 | 255 | 255 | 255 | 255 | 255 | 255 | 255 |
| 4145 to 4160 | 255 | 255 | 255 | 255 | 255 | 255 | 255 | 255 | 0 | 0 | 0 | 0 | 0 | 0 | 0 | 0 |
| 4161 to 4176 | 0 | 0 | 0 | 0 | 0 | 0 | 0 | 0 | 0 | 0 | 0 | 0 | 0 | 0 | 0 | 0 |
| 4177 to 4192 | 0 | 0 | 0 | 0 | 0 | 0 | 0 | 0 | 0 | 0 | 0 | 0 | 0 | 0 | 0 | 0 |
| 4193 to 4208 | 0 | 0 | 0 | 0 | 0 | 0 | 0 | 0 | 0 | 0 | 0 | 0 | 0 | 0 | 0 | 0 |
| 4209 to 4224 | 0 | 0 | 0 | 0 | 0 | 0 | 0 | 0 | 0 | 0 | 0 | 0 | 0 | 0 | 0 | 0 |
| 4225 to 4240 | 0 | 0 | 0 | 0 | 0 | 0 | 0 | 0 | 0 | 0 | 0 | 0 | 0 | 0 | 0 | 0 |
| 4241 to 4256 | 0 | 0 | 0 | 0 | 0 | 0 | 0 | 0 | 0 | 0 | 0 | 0 | 0 | 0 | 0 | 0 |
| 4257 to 4272 | 0 | 0 | 0 | 0 | 0 | 0 | 0 | 0 | 0 | 0 | 0 | 0 | 0 | 0 | 0 | 0 |
| 4273 to 4288 | 0 | 0 | 4 | 0 | 0 | 0 | 0 | 0 | 0 | 0 | 0 | 0 | 0 | 0 | 0 | 0 |
| 4289 to 4304 | 0 | 0 | 0 | 0 | 0 | 0 | 0 | 0 | 0 | 0 | 0 | 0 | 0 | 0 | 0 | 0 |
| 4305 to 4320 | 0 | 0 | 0 | 0 | 0 | 0 | 0 | 0 | 0 | 0 | 0 | 0 | 0 | 0 | 0 | 0 |
| 4321 to 4336 | 0 | 0 | 0 | 0 | 0 | 0 | 0 | 0 | 0 | 0 | 0 | 0 | 0 | 0 | 0 | 0 |
| 4337 to 4352 | 0 | 0 | 0 | 0 | 0 | 0 | 0 | 0 | 0 | 96 | 255 | 1 | 0 | 0 | 0 | 0 |
| 4353 to 4368 | 0 | 192 | 255 | 3 | 0 | 0 | 0 | 0 | 0 | 248 | 255 | 7 | 0 | 0 | 0 | 0 |
| 4369 to 4384 | 0 | 255 | 255 | 7 | 0 | 0 | 0 | 0 | 224 | 255 | 255 | 15 | 0 | 0 | 0 | 0 |
| 4385 to 4400 | 252 | 255 | 255 | 31 | 0 | 0 | 0 | 0 | 255 | 255 | 255 | 31 | 0 | 0 | 0 | 0 |
| 4401 to 4416 | 255 | 255 | 255 | 63 | 0 | 0 | 0 | 0 | 255 | 255 | 255 | 127 | 0 | 0 | 0 | 0 |
| 4417 to 4432 | 255 | 255 | 255 | 255 | 0 | 0 | 0 | 0 | 255 | 255 | 255 | 255 | 0 | 0 | 0 | 0 |
| 4433 to 4448 | 255 | 255 | 255 | 255 | 1 | 0 | 0 | 0 | 255 | 255 | 255 | 255 | 255 | 255 | 255 | 255 |
| 4449 to 4464 | 255 | 255 | 255 | 255 | 255 | 255 | 255 | 255 | 255 | 255 | 255 | 255 | 255 | 255 | 255 | 255 |

| Range | | c1 | c2 | c3 | c4 | c5 | c6 | c7 | c8 | c9 | c10 | c11 | c12 | c13 | c14 | c15 | c16 |
|---|---|---|---|---|---|---|---|---|---|---|---|---|---|---|---|---|---|
| 4465 to 4480 | | 255 | 255 | 255 | 255 | 255 | 255 | 255 | 255 | 255 | 255 | 255 | 255 | 255 | 255 | 255 | 255 |
| 4481 to 4496 | | 255 | 255 | 255 | 255 | 255 | 255 | 255 | 255 | 255 | 255 | 255 | 255 | 255 | 255 | 255 | 255 |
| 4497 to 4512 | | 255 | 255 | 255 | 255 | 255 | 255 | 255 | 255 | 255 | 255 | 255 | 255 | 255 | 255 | 255 | 255 |
| 4513 to 4528 | | 255 | 255 | 255 | 255 | 255 | 255 | 255 | 255 | 255 | 255 | 255 | 255 | 255 | 255 | 255 | 255 |
| 4529 to 4544 | | 255 | 255 | 255 | 255 | 255 | 255 | 255 | 255 | 255 | 255 | 255 | 255 | 255 | 255 | 255 | 255 |
| 4545 to 4560 | | 255 | 255 | 255 | 255 | 255 | 255 | 255 | 255 | 255 | 255 | 255 | 255 | 255 | 255 | 255 | 255 |
| 4561 to 4576 | | 255 | 255 | 255 | 255 | 255 | 255 | 255 | 255 | 255 | 255 | 255 | 255 | 255 | 255 | 255 | 255 |
| 4577 to 4592 | | 255 | 255 | 255 | 255 | 255 | 255 | 255 | 255 | 255 | 255 | 255 | 255 | 255 | 255 | 255 | 255 |
| 4593 to 4608 | | 255 | 255 | 255 | 255 | 255 | 255 | 255 | 255 | 255 | 255 | 255 | 255 | 255 | 255 | 255 | 255 |
| 4609 to 4624 | | 255 | 255 | 255 | 255 | 255 | 255 | 255 | 255 | 255 | 255 | 255 | 255 | 255 | 255 | 255 | 255 |
| 4625 to 4640 | | 255 | 255 | 255 | 255 | 255 | 255 | 255 | 255 | 255 | 255 | 255 | 255 | 255 | 255 | 255 | 255 |
| 4641 to 4656 | | 0 | 0 | 0 | 0 | 0 | 0 | 0 | 0 | 0 | 0 | 0 | 0 | 0 | 0 | 0 | 0 |
| 4657 to 4672 | | 0 | 0 | 0 | 0 | 0 | 0 | 0 | 0 | 0 | 0 | 0 | 0 | 0 | 0 | 0 | 0 |
| 4673 to 4688 | | 0 | 0 | 0 | 0 | 0 | 0 | 0 | 0 | 0 | 0 | 0 | 0 | 0 | 0 | 0 | 0 |
| 4689 to 4704 | | 0 | 0 | 0 | 0 | 0 | 0 | 0 | 0 | 0 | 0 | 0 | 0 | 0 | 0 | 0 | 0 |
| 4705 to 4720 | | 0 | 0 | 0 | 0 | 0 | 0 | 0 | 0 | 0 | 0 | 0 | 0 | 0 | 0 | 0 | 0 |
| 4721 to 4736 | | 0 | 0 | 0 | 0 | 0 | 0 | 0 | 0 | 0 | 0 | 0 | 0 | 0 | 0 | 0 | 0 |
| 4737 to 4752 | | 0 | 0 | 0 | 0 | 0 | 0 | 0 | 0 | 0 | 0 | 0 | 0 | 0 | 0 | 0 | 0 |
| 4753 to 4768 | | 0 | 0 | 0 | 0 | 0 | 0 | 0 | 0 | 0 | 0 | 0 | 12 | 0 | 0 | 0 | 0 |
| 4769 to 4784 | | 0 | 0 | 0 | 0 | 0 | 0 | 0 | 0 | 0 | 0 | 0 | 0 | 0 | 0 | 0 | 0 |
| 4785 to 4800 | | 0 | 0 | 0 | 0 | 0 | 0 | 0 | 0 | 0 | 0 | 0 | 0 | 0 | 0 | 0 | 0 |
| 4801 to 4816 | | 0 | 0 | 0 | 0 | 0 | 0 | 0 | 0 | 0 | 0 | 0 | 0 | 0 | 0 | 0 | 0 |
| 4817 to 4832 | | 0 | 0 | 0 | 0 | 0 | 0 | 0 | 0 | 0 | 0 | 0 | 0 | 0 | 0 | 0 | 0 |
| 4833 to 4848 | | 0 | 0 | 0 | 0 | 0 | 0 | 0 | 0 | 0 | 0 | 0 | 0 | 0 | 0 | 0 | 0 |
| 4849 to 4864 | | 0 | 0 | 224 | 1 | 0 | 0 | 0 | 0 | 0 | 194 | 253 | 1 | 0 | 0 | 0 | 0 |
| 4865 to 4880 | | 0 | 130 | 255 | 3 | 0 | 0 | 0 | 0 | 0 | 224 | 255 | 7 | 0 | 0 | 0 | 0 |
| 4881 to 4896 | | 0 | 252 | 255 | 15 | 0 | 0 | 0 | 0 | 128 | 255 | 255 | 15 | 0 | 0 | 0 | 0 |
| 4897 to 4912 | | 240 | 255 | 255 | 31 | 0 | 0 | 0 | 0 | 254 | 255 | 255 | 63 | 0 | 0 | 0 | 0 |
| 4913 to 4928 | | 255 | 255 | 255 | 63 | 0 | 0 | 0 | 0 | 255 | 255 | 255 | 127 | 0 | 0 | 0 | 0 |
| 4929 to 4944 | | 255 | 255 | 255 | 255 | 0 | 0 | 0 | 0 | 255 | 255 | 255 | 255 | 1 | 0 | 0 | 0 |
| 4945 to 4960 | | 255 | 255 | 255 | 255 | 1 | 0 | 0 | 0 | 255 | 255 | 255 | 255 | 3 | 0 | 0 | 0 |
| 4961 to 4976 | | 255 | 255 | 255 | 255 | 255 | 255 | 255 | 255 | 255 | 255 | 255 | 255 | 255 | 255 | 255 | 255 |
| 4977 to 4992 | | 255 | 255 | 255 | 255 | 255 | 255 | 255 | 255 | 255 | 255 | 255 | 255 | 255 | 255 | 255 | 255 |
| 4993 to 5008 | | 255 | 255 | 255 | 255 | 255 | 255 | 255 | 255 | 255 | 255 | 255 | 255 | 255 | 255 | 255 | 255 |
| 5009 to 5024 | | 255 | 255 | 255 | 255 | 255 | 255 | 255 | 255 | 255 | 255 | 255 | 255 | 255 | 255 | 255 | 255 |
| 5025 to 5040 | | 255 | 255 | 255 | 255 | 255 | 255 | 255 | 255 | 255 | 255 | 255 | 255 | 255 | 255 | 255 | 255 |
| 5041 to 5056 | | 255 | 255 | 255 | 255 | 255 | 255 | 255 | 255 | 255 | 255 | 255 | 255 | 255 | 255 | 255 | 255 |
| 5057 to 5072 | | 255 | 255 | 255 | 255 | 255 | 255 | 255 | 255 | 255 | 255 | 255 | 255 | 255 | 255 | 255 | 255 |
| 5073 to 5088 | | 255 | 255 | 255 | 255 | 255 | 255 | 255 | 255 | 255 | 255 | 255 | 255 | 255 | 255 | 255 | 255 |
| 5089 to 5104 | | 255 | 255 | 255 | 255 | 255 | 255 | 255 | 255 | 255 | 255 | 255 | 255 | 255 | 255 | 255 | 255 |
| 5105 to 5120 | | 255 | 255 | 255 | 255 | 255 | 255 | 255 | 255 | 255 | 255 | 255 | 255 | 255 | 255 | 255 | 255 |
| 5121 to 5136 | | 255 | 255 | 255 | 255 | 255 | 255 | 255 | 255 | 0 | 0 | 0 | 0 | 0 | 0 | 0 | 0 |
| 5137 to 5152 | | 0 | 0 | 0 | 0 | 0 | 0 | 0 | 0 | 0 | 0 | 0 | 0 | 0 | 0 | 0 | 0 |
| 5153 to 5168 | | 0 | 0 | 0 | 0 | 0 | 0 | 0 | 0 | 0 | 0 | 0 | 0 | 0 | 0 | 0 | 0 |
| 5169 to 5184 | | 0 | 0 | 0 | 0 | 0 | 0 | 0 | 0 | 0 | 0 | 0 | 0 | 0 | 0 | 0 | 0 |
| 5185 to 5200 | | 0 | 0 | 0 | 0 | 0 | 0 | 0 | 0 | 0 | 0 | 0 | 0 | 0 | 0 | 0 | 0 |
| 5201 to 5216 | | 0 | 0 | 0 | 0 | 0 | 0 | 0 | 0 | 0 | 0 | 0 | 0 | 0 | 0 | 0 | 0 |
| 5217 to 5232 | | 0 | 0 | 0 | 0 | 0 | 0 | 0 | 0 | 0 | 0 | 0 | 0 | 0 | 0 | 0 | 0 |
| 5233 to 5248 | | 0 | 0 | 0 | 0 | 0 | 0 | 0 | 0 | 0 | 0 | 0 | 0 | 0 | 0 | 0 | 0 |
| 5249 to 5264 | | 0 | 0 | 0 | 0 | 0 | 0 | 0 | 0 | 0 | 0 | 0 | 0 | 0 | 0 | 0 | 0 |
| 5265 to 5280 | | 0 | 0 | 0 | 0 | 0 | 0 | 0 | 0 | 0 | 0 | 0 | 0 | 0 | 0 | 0 | 0 |
| 5281 to 5296 | | 0 | 0 | 0 | 0 | 0 | 0 | 0 | 0 | 0 | 0 | 0 | 0 | 0 | 0 | 0 | 0 |
| 5297 to 5312 | | 0 | 0 | 0 | 0 | 0 | 0 | 0 | 0 | 0 | 0 | 0 | 0 | 0 | 0 | 0 | 0 |
| 5313 to 5328 | | 0 | 0 | 0 | 0 | 0 | 0 | 0 | 0 | 0 | 0 | 0 | 0 | 0 | 0 | 0 | 0 |
| 5329 to 5344 | | 0 | 0 | 0 | 0 | 0 | 0 | 0 | 0 | 0 | 0 | 0 | 0 | 0 | 0 | 0 | 0 |
| 5345 to 5360 | | 0 | 0 | 0 | 0 | 0 | 0 | 0 | 0 | 0 | 0 | 0 | 0 | 0 | 0 | 0 | 0 |
| 5361 to 5376 | | 0 | 0 | 128 | 1 | 0 | 0 | 0 | 0 | 0 | 0 | 227 | 3 | 0 | 0 | 0 | 0 |
| 5377 to 5392 | | 0 | 0 | 254 | 3 | 0 | 0 | 0 | 0 | 0 | 192 | 255 | 7 | 0 | 0 | 0 | 0 |
| 5393 to 5408 | | 0 | 240 | 255 | 15 | 0 | 0 | 0 | 0 | 0 | 254 | 255 | 31 | 0 | 0 | 0 | 0 |
| 5409 to 5424 | | 192 | 255 | 255 | 31 | 0 | 0 | 0 | 0 | 248 | 255 | 255 | 63 | 0 | 0 | 0 | 0 |
| 5425 to 5440 | | 255 | 255 | 255 | 127 | 0 | 0 | 0 | 0 | 255 | 255 | 255 | 255 | 0 | 0 | 0 | 0 |
| 5441 to 5456 | | 255 | 255 | 255 | 255 | 0 | 0 | 0 | 0 | 255 | 255 | 255 | 255 | 1 | 0 | 0 | 0 |
| 5457 to 5472 | | 255 | 255 | 255 | 255 | 3 | 0 | 0 | 0 | 255 | 255 | 255 | 255 | 3 | 0 | 0 | 0 |
| 5473 to 5488 | | 255 | 255 | 255 | 255 | 7 | 0 | 0 | 0 | 255 | 255 | 255 | 255 | 255 | 255 | 255 | 255 |
| 5489 to 5504 | | 255 | 255 | 255 | 255 | 255 | 255 | 255 | 255 | 255 | 255 | 255 | 255 | 255 | 255 | 255 | 255 |
| 5505 to 5520 | | 255 | 255 | 255 | 255 | 255 | 255 | 255 | 255 | 255 | 255 | 255 | 255 | 255 | 255 | 255 | 255 |
| 5521 to 5536 | | 255 | 255 | 255 | 255 | 255 | 255 | 255 | 255 | 255 | 255 | 255 | 255 | 255 | 255 | 255 | 255 |
| 5537 to 5552 | | 255 | 255 | 255 | 255 | 255 | 255 | 255 | 255 | 255 | 255 | 255 | 255 | 255 | 255 | 255 | 255 |
| 5553 to 5568 | | 255 | 255 | 255 | 255 | 255 | 255 | 255 | 255 | 255 | 255 | 255 | 255 | 255 | 255 | 255 | 255 |
| 5569 to 5584 | | 255 | 255 | 255 | 255 | 255 | 255 | 255 | 255 | 255 | 255 | 255 | 255 | 255 | 255 | 255 | 255 |
| 5585 to 5600 | | 255 | 255 | 255 | 255 | 255 | 255 | 255 | 255 | 255 | 255 | 255 | 255 | 255 | 255 | 255 | 255 |
| 5601 to 5616 | | 255 | 255 | 255 | 255 | 255 | 255 | 255 | 255 | 255 | 255 | 255 | 255 | 255 | 255 | 255 | 255 |
| 5617 to 5632 | | 255 | 255 | 255 | 255 | 255 | 255 | 255 | 255 | 255 | 255 | 255 | 255 | 255 | 255 | 255 | 255 |
| 5633 to 5648 | | 0 | 0 | 0 | 0 | 0 | 0 | 0 | 0 | 0 | 0 | 0 | 0 | 0 | 0 | 0 | 0 |
| 5649 to 5664 | | 0 | 0 | 0 | 0 | 0 | 0 | 0 | 0 | 0 | 0 | 0 | 0 | 0 | 0 | 0 | 0 |
| 5665 to 5680 | | 0 | 0 | 0 | 0 | 0 | 0 | 0 | 0 | 0 | 0 | 0 | 0 | 0 | 0 | 0 | 0 |
| 5681 to 5696 | | 0 | 0 | 0 | 0 | 0 | 0 | 0 | 0 | 0 | 0 | 0 | 0 | 0 | 0 | 0 | 0 |
| 5697 to 5712 | | 0 | 0 | 0 | 0 | 0 | 0 | 0 | 0 | 0 | 0 | 0 | 0 | 0 | 0 | 0 | 0 |
| 5713 to 5728 | | 0 | 0 | 0 | 0 | 0 | 0 | 0 | 0 | 0 | 0 | 0 | 0 | 0 | 0 | 0 | 0 |
| 5729 to 5744 | | 0 | 0 | 0 | 0 | 0 | 0 | 0 | 0 | 0 | 0 | 0 | 0 | 0 | 0 | 0 | 0 |
| 5745 to 5760 | | 0 | 0 | 0 | 0 | 0 | 0 | 0 | 0 | 0 | 0 | 0 | 0 | 0 | 0 | 0 | 0 |
| 5761 to 5776 | | 0 | 0 | 0 | 0 | 0 | 0 | 0 | 0 | 0 | 0 | 0 | 0 | 0 | 0 | 0 | 0 |
| 5777 to 5792 | | 0 | 0 | 0 | 0 | 0 | 0 | 0 | 0 | 0 | 0 | 0 | 0 | 0 | 0 | 0 | 0 |
| 5793 to 5808 | | 0 | 0 | 0 | 0 | 0 | 0 | 0 | 0 | 0 | 0 | 0 | 0 | 0 | 0 | 0 | 0 |
| 5809 to 5824 | | 0 | 0 | 0 | 0 | 0 | 0 | 0 | 0 | 0 | 0 | 0 | 0 | 0 | 0 | 0 | 0 |
| 5825 to 5840 | | 0 | 0 | 0 | 0 | 0 | 0 | 0 | 0 | 0 | 0 | 0 | 0 | 0 | 0 | 0 | 0 |
| 5841 to 5856 | | 0 | 0 | 0 | 0 | 0 | 0 | 0 | 0 | 0 | 0 | 0 | 0 | 0 | 0 | 0 | 0 |
| 5857 to 5872 | | 0 | 0 | 0 | 0 | 0 | 0 | 0 | 0 | 0 | 0 | 0 | 0 | 0 | 0 | 0 | 0 |
| 5873 to 5888 | | 0 | 0 | 0 | 0 | 0 | 0 | 0 | 0 | 0 | 16 | 196 | 3 | 0 | 0 | 0 | 0 |
| 5889 to 5904 | | 0 | 56 | 248 | 7 | 0 | 0 | 0 | 0 | 0 | 0 | 255 | 15 | 0 | 0 | 0 | 0 |
| 5905 to 5920 | | 0 | 224 | 255 | 15 | 0 | 0 | 0 | 0 | 0 | 248 | 255 | 31 | 0 | 0 | 0 | 0 |
| 5921 to 5936 | | 0 | 255 | 255 | 63 | 0 | 0 | 0 | 0 | 224 | 255 | 255 | 63 | 0 | 0 | 0 | 0 |
| 5937 to 5952 | | 252 | 255 | 255 | 127 | 0 | 0 | 0 | 0 | 255 | 255 | 255 | 255 | 0 | 0 | 0 | 0 |
| 5953 to 5968 | | 255 | 255 | 255 | 255 | 1 | 0 | 0 | 0 | 255 | 255 | 255 | 255 | 1 | 0 | 0 | 0 |
| 5969 to 5984 | | 255 | 255 | 255 | 255 | 3 | 0 | 0 | 0 | 255 | 255 | 255 | 255 | 7 | 0 | 0 | 0 |
| 5985 to 6000 | | 255 | 255 | 255 | 255 | 7 | 0 | 0 | 0 | 255 | 255 | 255 | 255 | 15 | 0 | 0 | 0 |

| Range | | | | | | | | | | | | | | | | |
|---|---|---|---|---|---|---|---|---|---|---|---|---|---|---|---|---|
| 6001 to 6016 | 255 | 255 | 255 | 255 | 31 | 0 | 0 | 0 | 255 | 255 | 255 | 255 | 255 | 255 | 255 | 255 |
| 6017 to 6032 | 255 | 255 | 255 | 255 | 255 | 255 | 255 | 255 | 255 | 255 | 255 | 255 | 255 | 255 | 255 | 255 |
| 6033 to 6048 | 255 | 255 | 255 | 255 | 255 | 255 | 255 | 255 | 255 | 255 | 255 | 255 | 255 | 255 | 255 | 255 |
| 6049 to 6064 | 255 | 255 | 255 | 255 | 255 | 255 | 255 | 255 | 255 | 255 | 255 | 255 | 255 | 255 | 255 | 255 |
| 6065 to 6080 | 255 | 255 | 255 | 255 | 255 | 255 | 255 | 255 | 255 | 255 | 255 | 255 | 255 | 255 | 255 | 255 |
| 6081 to 6096 | 255 | 255 | 255 | 255 | 255 | 255 | 255 | 255 | 255 | 255 | 255 | 255 | 255 | 255 | 255 | 255 |
| 6097 to 6112 | 255 | 255 | 255 | 255 | 255 | 255 | 255 | 255 | 255 | 255 | 255 | 255 | 255 | 255 | 255 | 255 |
| 6113 to 6128 | 255 | 255 | 255 | 255 | 255 | 255 | 255 | 255 | 255 | 255 | 255 | 255 | 255 | 255 | 255 | 255 |
| 6129 to 6144 | 255 | 255 | 255 | 255 | 255 | 255 | 255 | 255 | 255 | 255 | 255 | 255 | 255 | 255 | 255 | 255 |
| 6145 to 6160 | 0 | 0 | 0 | 0 | 0 | 0 | 0 | 0 | 0 | 0 | 0 | 0 | 0 | 0 | 0 | 0 |
| 6161 to 6176 | 0 | 0 | 0 | 0 | 0 | 0 | 0 | 0 | 0 | 0 | 0 | 0 | 0 | 0 | 0 | 0 |
| 6177 to 6192 | 0 | 0 | 0 | 0 | 0 | 0 | 0 | 0 | 0 | 0 | 0 | 0 | 0 | 0 | 0 | 0 |
| 6193 to 6208 | 0 | 0 | 0 | 0 | 0 | 0 | 0 | 0 | 0 | 0 | 0 | 0 | 0 | 0 | 0 | 0 |
| 6209 to 6224 | 0 | 0 | 0 | 0 | 0 | 0 | 0 | 0 | 0 | 0 | 0 | 0 | 0 | 0 | 0 | 0 |
| 6225 to 6240 | 0 | 0 | 0 | 0 | 0 | 0 | 0 | 0 | 0 | 0 | 0 | 0 | 0 | 0 | 0 | 0 |
| 6241 to 6256 | 0 | 0 | 0 | 0 | 0 | 0 | 0 | 0 | 0 | 0 | 0 | 0 | 0 | 0 | 0 | 0 |
| 6257 to 6272 | 0 | 0 | 0 | 0 | 0 | 0 | 0 | 0 | 0 | 0 | 0 | 0 | 0 | 0 | 0 | 0 |
| 6273 to 6288 | 0 | 0 | 0 | 0 | 0 | 0 | 0 | 0 | 0 | 0 | 0 | 0 | 0 | 0 | 0 | 0 |
| 6289 to 6304 | 0 | 0 | 0 | 0 | 0 | 0 | 0 | 0 | 0 | 0 | 0 | 0 | 0 | 0 | 0 | 0 |
| 6305 to 6320 | 0 | 0 | 0 | 0 | 0 | 0 | 0 | 0 | 0 | 0 | 0 | 0 | 0 | 0 | 0 | 0 |
| 6321 to 6336 | 0 | 0 | 0 | 0 | 0 | 0 | 0 | 0 | 0 | 0 | 0 | 0 | 0 | 0 | 0 | 0 |
| 6337 to 6352 | 0 | 0 | 0 | 0 | 0 | 0 | 0 | 0 | 0 | 0 | 0 | 0 | 0 | 0 | 0 | 0 |
| 6353 to 6368 | 0 | 0 | 0 | 0 | 0 | 0 | 0 | 0 | 0 | 0 | 0 | 0 | 0 | 0 | 0 | 0 |
| 6369 to 6384 | 0 | 0 | 0 | 0 | 0 | 0 | 0 | 0 | 0 | 0 | 0 | 0 | 0 | 0 | 0 | 0 |
| 6385 to 6400 | 0 | 0 | 0 | 0 | 0 | 0 | 0 | 0 | 0 | 0 | 8 | 3 | 0 | 0 | 0 | 0 |
| 6401 to 6416 | 0 | 48 | 224 | 7 | 0 | 0 | 0 | 0 | 0 | 0 | 252 | 15 | 0 | 0 | 0 | 0 |
| 6417 to 6432 | 0 | 128 | 255 | 31 | 0 | 0 | 0 | 0 | 0 | 240 | 255 | 31 | 0 | 0 | 0 | 0 |
| 6433 to 6448 | 0 | 252 | 255 | 63 | 0 | 0 | 0 | 0 | 128 | 255 | 255 | 127 | 0 | 0 | 0 | 0 |
| 6449 to 6464 | 240 | 255 | 255 | 127 | 0 | 0 | 0 | 0 | 254 | 255 | 255 | 255 | 0 | 0 | 0 | 0 |
| 6465 to 6480 | 255 | 255 | 255 | 255 | 1 | 0 | 0 | 0 | 255 | 255 | 255 | 255 | 3 | 0 | 0 | 0 |
| 6481 to 6496 | 255 | 255 | 255 | 255 | 3 | 0 | 0 | 0 | 255 | 255 | 255 | 255 | 7 | 0 | 0 | 0 |
| 6497 to 6512 | 255 | 255 | 255 | 255 | 15 | 0 | 0 | 0 | 255 | 255 | 255 | 255 | 15 | 0 | 0 | 0 |
| 6513 to 6528 | 255 | 255 | 255 | 255 | 31 | 0 | 0 | 0 | 255 | 255 | 255 | 255 | 63 | 0 | 0 | 0 |
| 6529 to 6544 | 255 | 255 | 255 | 255 | 255 | 255 | 255 | 255 | 255 | 255 | 255 | 255 | 255 | 255 | 255 | 255 |
| 6545 to 6560 | 255 | 255 | 255 | 255 | 255 | 255 | 255 | 255 | 255 | 255 | 255 | 255 | 255 | 255 | 255 | 255 |
| 6561 to 6576 | 255 | 255 | 255 | 255 | 255 | 255 | 255 | 255 | 255 | 255 | 255 | 255 | 255 | 255 | 255 | 255 |
| 6577 to 6592 | 255 | 255 | 255 | 255 | 255 | 255 | 255 | 255 | 255 | 255 | 255 | 255 | 255 | 255 | 255 | 255 |
| 6593 to 6608 | 255 | 255 | 255 | 255 | 255 | 255 | 255 | 255 | 255 | 255 | 255 | 255 | 255 | 255 | 255 | 255 |
| 6609 to 6624 | 255 | 255 | 255 | 255 | 255 | 255 | 255 | 255 | 255 | 255 | 255 | 255 | 255 | 255 | 255 | 255 |
| 6625 to 6640 | 255 | 255 | 255 | 255 | 255 | 255 | 255 | 255 | 255 | 255 | 255 | 255 | 255 | 255 | 255 | 255 |
| 6641 to 6656 | 255 | 255 | 255 | 255 | 255 | 255 | 255 | 255 | 255 | 255 | 255 | 255 | 255 | 255 | 255 | 255 |
| 6657 to 6672 | 0 | 0 | 0 | 0 | 0 | 0 | 0 | 0 | 0 | 0 | 0 | 0 | 0 | 0 | 0 | 0 |
| 6673 to 6688 | 0 | 0 | 0 | 0 | 0 | 0 | 0 | 0 | 0 | 0 | 0 | 0 | 0 | 0 | 0 | 0 |
| 6689 to 6704 | 0 | 0 | 0 | 0 | 0 | 0 | 0 | 0 | 0 | 0 | 0 | 0 | 0 | 0 | 0 | 0 |
| 6705 to 6720 | 0 | 0 | 0 | 0 | 0 | 0 | 0 | 0 | 0 | 0 | 0 | 0 | 0 | 0 | 0 | 0 |
| 6721 to 6736 | 0 | 0 | 0 | 0 | 0 | 0 | 0 | 0 | 0 | 0 | 0 | 0 | 0 | 0 | 0 | 0 |
| 6737 to 6752 | 0 | 0 | 0 | 0 | 0 | 0 | 0 | 0 | 0 | 0 | 0 | 0 | 0 | 0 | 0 | 0 |
| 6753 to 6768 | 0 | 0 | 0 | 0 | 0 | 0 | 0 | 0 | 0 | 0 | 0 | 0 | 0 | 0 | 0 | 0 |
| 6769 to 6784 | 0 | 0 | 0 | 0 | 0 | 0 | 0 | 0 | 0 | 0 | 0 | 0 | 0 | 0 | 0 | 0 |
| 6785 to 6800 | 0 | 0 | 0 | 0 | 0 | 0 | 0 | 0 | 0 | 0 | 0 | 0 | 0 | 0 | 0 | 0 |
| 6801 to 6816 | 0 | 0 | 0 | 0 | 0 | 0 | 0 | 0 | 0 | 0 | 0 | 0 | 0 | 0 | 0 | 0 |
| 6817 to 6832 | 0 | 0 | 0 | 0 | 0 | 0 | 0 | 0 | 0 | 128 | 0 | 0 | 0 | 0 | 0 | 0 |
| 6833 to 6848 | 0 | 0 | 0 | 0 | 0 | 0 | 0 | 0 | 0 | 0 | 0 | 0 | 0 | 0 | 0 | 0 |
| 6849 to 6864 | 0 | 0 | 0 | 0 | 0 | 0 | 0 | 0 | 0 | 0 | 0 | 0 | 0 | 0 | 0 | 0 |
| 6865 to 6880 | 0 | 0 | 0 | 0 | 0 | 0 | 0 | 0 | 0 | 0 | 0 | 0 | 0 | 0 | 0 | 0 |
| 6881 to 6896 | 0 | 0 | 0 | 0 | 0 | 0 | 0 | 0 | 0 | 0 | 0 | 0 | 0 | 0 | 0 | 0 |
| 6897 to 6912 | 0 | 0 | 0 | 0 | 0 | 0 | 0 | 0 | 0 | 8 | 0 | 6 | 0 | 0 | 0 | 0 |
| 6913 to 6928 | 0 | 96 | 128 | 15 | 0 | 0 | 0 | 0 | 0 | 0 | 240 | 15 | 0 | 0 | 0 | 0 |
| 6929 to 6944 | 0 | 0 | 254 | 31 | 0 | 0 | 0 | 0 | 128 | 192 | 255 | 63 | 0 | 0 | 0 | 0 |
| 6945 to 6960 | 0 | 248 | 255 | 63 | 0 | 0 | 0 | 0 | 0 | 254 | 255 | 127 | 0 | 0 | 0 | 0 |
| 6961 to 6976 | 192 | 255 | 255 | 255 | 0 | 0 | 0 | 0 | 248 | 255 | 255 | 255 | 1 | 0 | 0 | 0 |
| 6977 to 6992 | 255 | 255 | 255 | 255 | 1 | 0 | 0 | 0 | 255 | 255 | 255 | 255 | 3 | 0 | 0 | 0 |
| 6993 to 7008 | 255 | 255 | 255 | 255 | 7 | 0 | 0 | 0 | 255 | 255 | 255 | 255 | 7 | 0 | 0 | 0 |
| 7009 to 7024 | 255 | 255 | 255 | 255 | 15 | 0 | 0 | 0 | 255 | 255 | 255 | 255 | 31 | 0 | 0 | 0 |
| 7025 to 7040 | 255 | 255 | 255 | 255 | 63 | 0 | 0 | 0 | 255 | 255 | 255 | 255 | 63 | 0 | 0 | 0 |
| 7041 to 7056 | 255 | 255 | 255 | 255 | 127 | 0 | 0 | 0 | 255 | 255 | 255 | 255 | 255 | 255 | 255 | 255 |
| 7057 to 7072 | 255 | 255 | 255 | 255 | 255 | 255 | 255 | 255 | 255 | 255 | 255 | 255 | 255 | 255 | 255 | 255 |
| 7073 to 7088 | 255 | 255 | 255 | 255 | 255 | 255 | 255 | 255 | 255 | 255 | 255 | 255 | 255 | 255 | 255 | 255 |
| 7089 to 7104 | 255 | 255 | 255 | 255 | 255 | 255 | 255 | 255 | 255 | 255 | 255 | 255 | 255 | 255 | 255 | 255 |
| 7105 to 7120 | 255 | 255 | 255 | 255 | 255 | 255 | 255 | 255 | 255 | 255 | 255 | 255 | 255 | 255 | 255 | 255 |
| 7121 to 7136 | 255 | 255 | 255 | 255 | 255 | 255 | 255 | 255 | 255 | 255 | 255 | 255 | 255 | 255 | 255 | 255 |
| 7137 to 7152 | 255 | 255 | 255 | 255 | 255 | 255 | 255 | 255 | 255 | 255 | 255 | 255 | 255 | 255 | 255 | 255 |
| 7153 to 7168 | 255 | 255 | 255 | 255 | 255 | 255 | 255 | 255 | 255 | 255 | 255 | 255 | 255 | 255 | 255 | 255 |
| 7169 to 7184 | 0 | 0 | 0 | 0 | 0 | 0 | 0 | 0 | 0 | 0 | 0 | 0 | 0 | 0 | 0 | 0 |
| 7185 to 7200 | 0 | 0 | 0 | 0 | 0 | 0 | 0 | 0 | 0 | 0 | 0 | 0 | 0 | 0 | 0 | 0 |
| 7201 to 7216 | 0 | 0 | 0 | 0 | 0 | 0 | 0 | 0 | 0 | 0 | 0 | 0 | 0 | 0 | 0 | 0 |
| 7217 to 7232 | 0 | 0 | 0 | 0 | 0 | 0 | 0 | 0 | 0 | 0 | 0 | 0 | 0 | 0 | 0 | 0 |
| 7233 to 7248 | 0 | 0 | 0 | 0 | 0 | 0 | 0 | 0 | 0 | 0 | 0 | 0 | 0 | 0 | 0 | 0 |
| 7249 to 7264 | 0 | 0 | 0 | 0 | 0 | 0 | 0 | 0 | 0 | 0 | 0 | 0 | 0 | 0 | 0 | 0 |
| 7265 to 7280 | 0 | 0 | 0 | 0 | 0 | 0 | 0 | 0 | 0 | 0 | 0 | 0 | 0 | 0 | 0 | 0 |
| 7281 to 7296 | 0 | 0 | 0 | 0 | 0 | 0 | 0 | 0 | 0 | 0 | 0 | 0 | 0 | 0 | 0 | 0 |
| 7297 to 7312 | 0 | 0 | 0 | 0 | 0 | 0 | 0 | 0 | 0 | 0 | 0 | 0 | 0 | 0 | 0 | 0 |
| 7313 to 7328 | 0 | 0 | 0 | 0 | 0 | 0 | 0 | 0 | 0 | 0 | 0 | 0 | 0 | 0 | 0 | 0 |
| 7329 to 7344 | 0 | 0 | 0 | 0 | 0 | 0 | 0 | 0 | 0 | 0 | 0 | 0 | 0 | 0 | 0 | 0 |
| 7345 to 7360 | 0 | 0 | 0 | 0 | 0 | 0 | 0 | 0 | 0 | 0 | 0 | 0 | 0 | 0 | 0 | 0 |
| 7361 to 7376 | 0 | 0 | 0 | 0 | 0 | 0 | 0 | 0 | 0 | 0 | 0 | 0 | 0 | 0 | 0 | 0 |
| 7377 to 7392 | 0 | 0 | 0 | 0 | 0 | 0 | 0 | 0 | 0 | 0 | 0 | 0 | 0 | 0 | 0 | 0 |
| 7393 to 7408 | 0 | 0 | 0 | 0 | 0 | 0 | 0 | 0 | 0 | 0 | 0 | 0 | 0 | 0 | 0 | 0 |
| 7409 to 7424 | 0 | 0 | 0 | 0 | 0 | 0 | 0 | 0 | 0 | 0 | 0 | 0 | 0 | 0 | 0 | 0 |
| 7425 to 7440 | 0 | 192 | 0 | 15 | 0 | 0 | 0 | 0 | 64 | 0 | 192 | 31 | 0 | 0 | 0 | 0 |
| 7441 to 7456 | 0 | 0 | 248 | 31 | 0 | 0 | 0 | 0 | 0 | 0 | 255 | 63 | 0 | 0 | 0 | 0 |
| 7457 to 7472 | 0 | 224 | 255 | 127 | 0 | 0 | 0 | 0 | 0 | 252 | 255 | 127 | 0 | 0 | 0 | 0 |
| 7473 to 7488 | 128 | 255 | 255 | 255 | 0 | 0 | 0 | 0 | 224 | 255 | 255 | 255 | 1 | 0 | 0 | 0 |
| 7489 to 7504 | 252 | 255 | 255 | 255 | 3 | 0 | 0 | 0 | 255 | 255 | 255 | 255 | 3 | 0 | 0 | 0 |
| 7505 to 7520 | 255 | 255 | 255 | 255 | 7 | 0 | 0 | 0 | 255 | 255 | 255 | 255 | 15 | 0 | 0 | 0 |
| 7521 to 7536 | 255 | 255 | 255 | 255 | 15 | 0 | 0 | 0 | 255 | 255 | 255 | 255 | 31 | 0 | 0 | 0 |

| Range | | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| 7537 to 7552 | | 255 | 255 | 255 | 255 | 63 | 0 | 0 | 0 | 255 | 255 | 255 | 255 | 127 | 0 | 0 | 0 |
| 7553 to 7568 | | 255 | 255 | 255 | 255 | 127 | 0 | 0 | 0 | 255 | 255 | 255 | 255 | 255 | 0 | 0 | 0 |
| 7569 to 7584 | | 255 | 255 | 255 | 255 | 255 | 255 | 255 | 255 | 255 | 255 | 255 | 255 | 255 | 255 | 255 | 255 |
| 7585 to 7600 | | 255 | 255 | 255 | 255 | 255 | 255 | 255 | 255 | 255 | 255 | 255 | 255 | 255 | 255 | 255 | 255 |
| 7601 to 7616 | | 255 | 255 | 255 | 255 | 255 | 255 | 255 | 255 | 255 | 255 | 255 | 255 | 255 | 255 | 255 | 255 |
| 7617 to 7632 | | 255 | 255 | 255 | 255 | 255 | 255 | 255 | 255 | 255 | 255 | 255 | 255 | 255 | 255 | 255 | 255 |
| 7633 to 7648 | | 255 | 255 | 255 | 255 | 255 | 255 | 255 | 255 | 255 | 255 | 255 | 255 | 255 | 255 | 255 | 255 |
| 7649 to 7664 | | 255 | 255 | 255 | 255 | 255 | 255 | 255 | 255 | 255 | 255 | 255 | 255 | 255 | 255 | 255 | 255 |
| 7665 to 7680 | | 255 | 255 | 255 | 255 | 255 | 255 | 255 | 255 | 255 | 255 | 255 | 255 | 255 | 255 | 255 | 255 |
| 7681 to 7696 | | 0 | 0 | 0 | 0 | 0 | 0 | 0 | 0 | 0 | 0 | 0 | 0 | 0 | 0 | 0 | 0 |
| 7697 to 7712 | | 0 | 0 | 0 | 0 | 0 | 0 | 0 | 0 | 0 | 0 | 0 | 0 | 0 | 0 | 0 | 0 |
| 7713 to 7728 | | 0 | 0 | 0 | 0 | 0 | 0 | 0 | 0 | 0 | 0 | 0 | 0 | 0 | 0 | 0 | 0 |
| 7729 to 7744 | | 0 | 0 | 0 | 0 | 0 | 0 | 0 | 0 | 0 | 0 | 0 | 0 | 0 | 0 | 0 | 0 |
| 7745 to 7760 | | 0 | 0 | 0 | 0 | 0 | 0 | 0 | 0 | 0 | 0 | 0 | 0 | 0 | 0 | 0 | 0 |
| 7761 to 7776 | | 0 | 0 | 0 | 0 | 0 | 0 | 0 | 0 | 0 | 0 | 0 | 0 | 0 | 0 | 0 | 0 |
| 7777 to 7792 | | 0 | 0 | 0 | 0 | 0 | 0 | 0 | 0 | 0 | 0 | 0 | 0 | 0 | 0 | 0 | 0 |
| 7793 to 7808 | | 0 | 0 | 0 | 0 | 0 | 0 | 0 | 0 | 0 | 0 | 0 | 0 | 0 | 0 | 0 | 0 |
| 7809 to 7824 | | 0 | 0 | 0 | 0 | 0 | 0 | 0 | 0 | 0 | 0 | 0 | 0 | 0 | 0 | 0 | 0 |
| 7825 to 7840 | | 0 | 0 | 0 | 0 | 0 | 0 | 0 | 0 | 0 | 0 | 0 | 0 | 0 | 0 | 0 | 0 |
| 7841 to 7856 | | 0 | 0 | 0 | 0 | 0 | 0 | 0 | 0 | 0 | 0 | 0 | 0 | 0 | 0 | 0 | 0 |
| 7857 to 7872 | | 0 | 0 | 0 | 0 | 0 | 0 | 0 | 0 | 0 | 0 | 0 | 0 | 0 | 0 | 0 | 0 |
| 7873 to 7888 | | 0 | 0 | 0 | 0 | 0 | 0 | 0 | 0 | 0 | 0 | 0 | 0 | 0 | 0 | 0 | 0 |
| 7889 to 7904 | | 0 | 0 | 0 | 0 | 0 | 0 | 0 | 0 | 0 | 0 | 0 | 0 | 0 | 0 | 0 | 0 |
| 7905 to 7920 | | 0 | 0 | 0 | 0 | 0 | 0 | 0 | 0 | 0 | 0 | 0 | 0 | 0 | 0 | 0 | 0 |
| 7921 to 7936 | | 0 | 0 | 0 | 0 | 0 | 0 | 0 | 0 | 0 | 4 | 0 | 0 | 0 | 0 | 0 | 0 |
| 7937 to 7952 | | 0 | 192 | 0 | 12 | 0 | 0 | 0 | 0 | 0 | 0 | 129 | 31 | 0 | 0 | 0 | 0 |
| 7953 to 7968 | | 0 | 4 | 224 | 63 | 0 | 0 | 0 | 0 | 0 | 0 | 252 | 63 | 0 | 0 | 0 | 0 |
| 7969 to 7984 | | 0 | 128 | 255 | 127 | 0 | 0 | 0 | 0 | 0 | 240 | 255 | 255 | 0 | 0 | 0 | 0 |
| 7985 to 8000 | | 0 | 254 | 255 | 255 | 1 | 0 | 0 | 0 | 192 | 255 | 255 | 255 | 1 | 0 | 0 | 0 |
| 8001 to 8016 | | 240 | 255 | 255 | 255 | 3 | 0 | 0 | 0 | 254 | 255 | 255 | 255 | 7 | 0 | 0 | 0 |
| 8017 to 8032 | | 255 | 255 | 255 | 255 | 7 | 0 | 0 | 0 | 255 | 255 | 255 | 255 | 15 | 0 | 0 | 0 |
| 8033 to 8048 | | 255 | 255 | 255 | 255 | 31 | 0 | 0 | 0 | 255 | 255 | 255 | 255 | 63 | 0 | 0 | 0 |
| 8049 to 8064 | | 255 | 255 | 255 | 255 | 63 | 0 | 0 | 0 | 255 | 255 | 255 | 255 | 127 | 0 | 0 | 0 |
| 8065 to 8080 | | 255 | 255 | 255 | 255 | 255 | 0 | 0 | 0 | 255 | 255 | 255 | 255 | 255 | 0 | 0 | 0 |
| 8081 to 8096 | | 255 | 255 | 255 | 255 | 255 | 1 | 0 | 0 | 255 | 255 | 255 | 255 | 255 | 3 | 0 | 0 |
| 8097 to 8112 | | 255 | 255 | 255 | 255 | 255 | 255 | 255 | 255 | 255 | 255 | 255 | 255 | 255 | 255 | 255 | 255 |
| 8113 to 8128 | | 255 | 255 | 255 | 255 | 255 | 255 | 255 | 255 | 255 | 255 | 255 | 255 | 255 | 255 | 255 | 255 |
| 8129 to 8144 | | 255 | 255 | 255 | 255 | 255 | 255 | 255 | 255 | 255 | 255 | 255 | 255 | 255 | 255 | 255 | 255 |
| 8145 to 8160 | | 255 | 255 | 255 | 255 | 255 | 255 | 255 | 255 | 255 | 255 | 255 | 255 | 255 | 255 | 255 | 255 |
| 8161 to 8176 | | 255 | 255 | 255 | 255 | 255 | 255 | 255 | 255 | 255 | 255 | 255 | 255 | 255 | 255 | 255 | 255 |
| 8177 to 8192 | | 255 | 255 | 255 | 255 | 255 | 255 | 255 | 255 | 255 | 255 | 255 | 255 | 255 | 255 | 255 | 255 |
| 8193 to 8208 | | 0 | 0 | 0 | 0 | 0 | 0 | 0 | 0 | 0 | 0 | 0 | 0 | 0 | 0 | 0 | 0 |
| 8209 to 8224 | | 0 | 0 | 0 | 0 | 0 | 0 | 0 | 0 | 0 | 0 | 0 | 0 | 0 | 0 | 0 | 0 |
| 8225 to 8240 | | 0 | 0 | 0 | 0 | 0 | 0 | 0 | 0 | 0 | 0 | 0 | 0 | 0 | 0 | 0 | 0 |
| 8241 to 8256 | | 0 | 0 | 0 | 0 | 0 | 0 | 0 | 0 | 0 | 0 | 0 | 0 | 0 | 0 | 0 | 0 |
| 8257 to 8272 | | 0 | 0 | 0 | 0 | 0 | 0 | 0 | 0 | 0 | 0 | 0 | 0 | 0 | 0 | 0 | 0 |
| 8273 to 8288 | | 0 | 0 | 0 | 0 | 0 | 0 | 0 | 0 | 0 | 0 | 0 | 0 | 0 | 0 | 0 | 0 |
| 8289 to 8304 | | 0 | 0 | 0 | 0 | 0 | 0 | 0 | 0 | 0 | 0 | 0 | 0 | 0 | 0 | 0 | 0 |
| 8305 to 8320 | | 0 | 0 | 0 | 0 | 0 | 0 | 0 | 0 | 0 | 0 | 0 | 0 | 0 | 0 | 0 | 0 |
| 8321 to 8336 | | 0 | 0 | 0 | 0 | 0 | 0 | 0 | 0 | 0 | 0 | 0 | 0 | 0 | 0 | 0 | 0 |
| 8337 to 8352 | | 0 | 0 | 0 | 0 | 0 | 0 | 0 | 0 | 0 | 0 | 0 | 0 | 0 | 0 | 0 | 0 |
| 8353 to 8368 | | 0 | 0 | 0 | 0 | 0 | 0 | 0 | 0 | 0 | 0 | 0 | 0 | 0 | 0 | 0 | 0 |
| 8369 to 8384 | | 0 | 0 | 0 | 0 | 0 | 0 | 0 | 0 | 0 | 0 | 0 | 0 | 0 | 0 | 0 | 0 |
| 8385 to 8400 | | 0 | 0 | 0 | 0 | 0 | 0 | 0 | 0 | 0 | 0 | 0 | 0 | 0 | 0 | 0 | 0 |
| 8401 to 8416 | | 0 | 0 | 0 | 0 | 0 | 0 | 0 | 0 | 0 | 0 | 0 | 0 | 0 | 0 | 0 | 0 |
| 8417 to 8432 | | 0 | 0 | 0 | 0 | 0 | 0 | 0 | 0 | 0 | 0 | 0 | 0 | 0 | 0 | 0 | 0 |
| 8433 to 8448 | | 0 | 0 | 0 | 0 | 0 | 0 | 0 | 0 | 0 | 0 | 0 | 0 | 0 | 0 | 0 | 0 |
| 8449 to 8464 | | 0 | 128 | 1 | 16 | 0 | 0 | 0 | 0 | 0 | 0 | 0 | 30 | 0 | 0 | 0 | 0 |
| 8465 to 8480 | | 0 | 0 | 192 | 63 | 0 | 0 | 0 | 0 | 0 | 0 | 240 | 127 | 0 | 0 | 0 | 0 |
| 8481 to 8496 | | 0 | 0 | 254 | 127 | 0 | 0 | 0 | 0 | 0 | 192 | 255 | 255 | 0 | 0 | 0 | 0 |
| 8497 to 8512 | | 0 | 248 | 255 | 255 | 1 | 0 | 0 | 0 | 0 | 255 | 255 | 255 | 3 | 0 | 0 | 0 |
| 8513 to 8528 | | 224 | 255 | 255 | 255 | 3 | 0 | 0 | 0 | 248 | 255 | 255 | 255 | 7 | 0 | 0 | 0 |
| 8529 to 8544 | | 255 | 255 | 255 | 255 | 15 | 0 | 0 | 0 | 255 | 255 | 255 | 255 | 15 | 0 | 0 | 0 |
| 8545 to 8560 | | 255 | 255 | 255 | 255 | 31 | 0 | 0 | 0 | 255 | 255 | 255 | 255 | 63 | 0 | 0 | 0 |
| 8561 to 8576 | | 255 | 255 | 255 | 255 | 127 | 0 | 0 | 0 | 255 | 255 | 255 | 255 | 127 | 0 | 0 | 0 |
| 8577 to 8592 | | 255 | 255 | 255 | 255 | 255 | 0 | 0 | 0 | 255 | 255 | 255 | 255 | 255 | 1 | 0 | 0 |
| 8593 to 8608 | | 255 | 255 | 255 | 255 | 255 | 1 | 0 | 0 | 255 | 255 | 255 | 255 | 255 | 3 | 0 | 0 |
| 8609 to 8624 | | 255 | 255 | 255 | 255 | 255 | 7 | 0 | 0 | 255 | 255 | 255 | 255 | 255 | 255 | 255 | 255 |
| 8625 to 8640 | | 255 | 255 | 255 | 255 | 255 | 255 | 255 | 255 | 255 | 255 | 255 | 255 | 255 | 255 | 255 | 255 |
| 8641 to 8656 | | 255 | 255 | 255 | 255 | 255 | 255 | 255 | 255 | 255 | 255 | 255 | 255 | 255 | 255 | 255 | 255 |
| 8657 to 8672 | | 255 | 255 | 255 | 255 | 255 | 255 | 255 | 255 | 255 | 255 | 255 | 255 | 255 | 255 | 255 | 255 |
| 8673 to 8688 | | 255 | 255 | 255 | 255 | 255 | 255 | 255 | 255 | 255 | 255 | 255 | 255 | 255 | 255 | 255 | 255 |
| 8689 to 8704 | | 255 | 255 | 255 | 255 | 255 | 255 | 255 | 255 | 255 | 255 | 255 | 255 | 255 | 255 | 255 | 255 |
| 8705 to 8720 | | 0 | 0 | 0 | 0 | 0 | 0 | 0 | 0 | 0 | 0 | 0 | 0 | 0 | 0 | 0 | 0 |
| 8721 to 8736 | | 0 | 0 | 0 | 0 | 0 | 0 | 0 | 0 | 0 | 0 | 0 | 0 | 0 | 0 | 0 | 0 |
| 8737 to 8752 | | 0 | 0 | 0 | 0 | 0 | 0 | 0 | 0 | 0 | 0 | 0 | 0 | 0 | 0 | 0 | 0 |
| 8753 to 8768 | | 0 | 0 | 0 | 0 | 0 | 0 | 0 | 0 | 0 | 0 | 0 | 0 | 0 | 0 | 0 | 0 |
| 8769 to 8784 | | 0 | 0 | 0 | 0 | 0 | 0 | 0 | 0 | 0 | 0 | 0 | 0 | 0 | 0 | 0 | 0 |
| 8785 to 8800 | | 0 | 0 | 0 | 0 | 0 | 0 | 0 | 0 | 0 | 0 | 0 | 0 | 0 | 0 | 0 | 0 |
| 8801 to 8816 | | 0 | 0 | 0 | 0 | 0 | 0 | 0 | 0 | 0 | 0 | 0 | 0 | 0 | 0 | 0 | 0 |
| 8817 to 8832 | | 0 | 0 | 0 | 0 | 0 | 0 | 0 | 0 | 0 | 0 | 0 | 0 | 0 | 0 | 0 | 0 |
| 8833 to 8848 | | 0 | 0 | 0 | 0 | 0 | 0 | 0 | 0 | 0 | 0 | 0 | 0 | 0 | 0 | 0 | 0 |
| 8849 to 8864 | | 0 | 0 | 0 | 0 | 0 | 0 | 0 | 0 | 0 | 0 | 0 | 0 | 0 | 0 | 0 | 0 |
| 8865 to 8880 | | 0 | 0 | 0 | 0 | 0 | 0 | 0 | 0 | 0 | 0 | 0 | 0 | 0 | 0 | 0 | 0 |
| 8881 to 8896 | | 0 | 0 | 0 | 0 | 0 | 0 | 0 | 0 | 0 | 0 | 0 | 0 | 0 | 0 | 0 | 0 |
| 8897 to 8912 | | 0 | 0 | 0 | 0 | 0 | 0 | 0 | 0 | 0 | 0 | 0 | 0 | 0 | 0 | 0 | 0 |
| 8913 to 8928 | | 0 | 0 | 0 | 0 | 0 | 0 | 0 | 0 | 0 | 0 | 0 | 0 | 0 | 0 | 0 | 0 |
| 8929 to 8944 | | 0 | 0 | 0 | 0 | 0 | 0 | 0 | 0 | 0 | 0 | 0 | 0 | 0 | 0 | 0 | 0 |
| 8945 to 8960 | | 0 | 0 | 0 | 0 | 0 | 0 | 0 | 0 | 0 | 0 | 0 | 0 | 0 | 0 | 0 | 0 |
| 8961 to 8976 | | 0 | 0 | 1 | 0 | 0 | 0 | 0 | 0 | 0 | 0 | 0 | 56 | 0 | 0 | 0 | 0 |
| 8977 to 8992 | | 0 | 0 | 0 | 63 | 0 | 0 | 0 | 0 | 0 | 0 | 224 | 127 | 0 | 0 | 0 | 0 |
| 8993 to 9008 | | 0 | 0 | 252 | 255 | 0 | 0 | 0 | 0 | 0 | 0 | 255 | 255 | 0 | 0 | 0 | 0 |
| 9009 to 9024 | | 0 | 224 | 255 | 255 | 1 | 0 | 0 | 0 | 0 | 252 | 255 | 255 | 3 | 0 | 0 | 0 |
| 9025 to 9040 | | 128 | 255 | 255 | 255 | 7 | 0 | 0 | 0 | 240 | 255 | 255 | 255 | 7 | 0 | 0 | 0 |
| 9041 to 9056 | | 252 | 255 | 255 | 255 | 15 | 0 | 0 | 0 | 255 | 255 | 255 | 255 | 31 | 0 | 0 | 0 |
| 9057 to 9072 | | 255 | 255 | 255 | 255 | 63 | 0 | 0 | 0 | 255 | 255 | 255 | 255 | 63 | 0 | 0 | 0 |

| Address | | | | | | | | | | | | | | | | |
|---|---|---|---|---|---|---|---|---|---|---|---|---|---|---|---|---|
| 9073 to 9088 | 255 | 255 | 255 | 255 | 127 | 0 | 0 | 0 | 255 | 255 | 255 | 255 | 255 | 0 | 0 | 0 |
| 9089 to 9104 | 255 | 255 | 255 | 255 | 255 | 0 | 0 | 0 | 255 | 255 | 255 | 255 | 255 | 1 | 0 | 0 |
| 9105 to 9120 | 255 | 255 | 255 | 255 | 255 | 3 | 0 | 0 | 255 | 255 | 255 | 255 | 255 | 7 | 0 | 0 |
| 9121 to 9136 | 255 | 255 | 255 | 255 | 255 | 7 | 0 | 0 | 255 | 255 | 255 | 255 | 255 | 15 | 0 | 0 |
| 9137 to 9152 | 255 | 255 | 255 | 255 | 255 | 255 | 255 | 255 | 255 | 255 | 255 | 255 | 255 | 255 | 255 | 255 |
| 9153 to 9168 | 255 | 255 | 255 | 255 | 255 | 255 | 255 | 255 | 255 | 255 | 255 | 255 | 255 | 255 | 255 | 255 |
| 9169 to 9184 | 255 | 255 | 255 | 255 | 255 | 255 | 255 | 255 | 255 | 255 | 255 | 255 | 255 | 255 | 255 | 255 |
| 9185 to 9200 | 255 | 255 | 255 | 255 | 255 | 255 | 255 | 255 | 255 | 255 | 255 | 255 | 255 | 255 | 255 | 255 |
| 9201 to 9216 | 255 | 255 | 255 | 255 | 255 | 255 | 255 | 255 | 255 | 255 | 255 | 255 | 255 | 255 | 255 | 255 |
| 9217 to 9232 | 0 | 0 | 0 | 0 | 0 | 0 | 0 | 0 | 0 | 0 | 0 | 0 | 0 | 0 | 0 | 0 |
| 9233 to 9248 | 0 | 0 | 0 | 0 | 0 | 0 | 0 | 0 | 0 | 0 | 0 | 0 | 0 | 0 | 0 | 0 |
| 9249 to 9264 | 0 | 0 | 0 | 0 | 0 | 0 | 0 | 0 | 0 | 0 | 0 | 0 | 0 | 0 | 0 | 0 |
| 9265 to 9280 | 0 | 0 | 0 | 0 | 0 | 0 | 0 | 0 | 0 | 0 | 0 | 0 | 0 | 0 | 0 | 0 |
| 9281 to 9296 | 0 | 0 | 0 | 0 | 0 | 0 | 0 | 0 | 0 | 0 | 0 | 0 | 0 | 0 | 0 | 0 |
| 9297 to 9312 | 0 | 0 | 0 | 0 | 0 | 0 | 0 | 0 | 0 | 0 | 0 | 0 | 0 | 0 | 0 | 0 |
| 9313 to 9328 | 0 | 0 | 0 | 0 | 0 | 0 | 0 | 0 | 0 | 0 | 0 | 0 | 0 | 0 | 0 | 0 |
| 9329 to 9344 | 0 | 0 | 0 | 0 | 0 | 0 | 0 | 0 | 0 | 0 | 0 | 0 | 0 | 0 | 0 | 0 |
| 9345 to 9360 | 0 | 0 | 0 | 0 | 0 | 0 | 0 | 0 | 0 | 0 | 0 | 0 | 0 | 0 | 0 | 0 |
| 9361 to 9376 | 0 | 0 | 0 | 0 | 0 | 0 | 0 | 0 | 0 | 0 | 0 | 0 | 0 | 0 | 0 | 0 |
| 9377 to 9392 | 0 | 0 | 0 | 0 | 0 | 0 | 0 | 0 | 0 | 0 | 0 | 0 | 0 | 0 | 0 | 0 |
| 9393 to 9408 | 0 | 0 | 0 | 0 | 0 | 0 | 0 | 0 | 0 | 0 | 0 | 0 | 0 | 0 | 0 | 0 |
| 9409 to 9424 | 0 | 0 | 0 | 0 | 0 | 0 | 0 | 0 | 0 | 0 | 0 | 0 | 0 | 0 | 0 | 0 |
| 9425 to 9440 | 0 | 0 | 0 | 0 | 0 | 0 | 0 | 0 | 0 | 0 | 0 | 0 | 0 | 0 | 0 | 0 |
| 9441 to 9456 | 0 | 0 | 0 | 0 | 0 | 0 | 0 | 0 | 0 | 0 | 0 | 0 | 0 | 0 | 0 | 0 |
| 9457 to 9472 | 0 | 0 | 0 | 0 | 0 | 0 | 0 | 0 | 0 | 0 | 0 | 0 | 0 | 0 | 0 | 0 |
| 9473 to 9488 | 0 | 0 | 6 | 0 | 0 | 0 | 0 | 0 | 0 | 0 | 0 | 32 | 0 | 0 | 0 | 0 |
| 9489 to 9504 | 0 | 0 | 0 | 124 | 0 | 0 | 0 | 0 | 0 | 0 | 128 | 127 | 0 | 0 | 0 | 0 |
| 9505 to 9520 | 0 | 0 | 240 | 255 | 0 | 0 | 0 | 0 | 0 | 0 | 254 | 255 | 1 | 0 | 0 | 0 |
| 9521 to 9536 | 0 | 128 | 255 | 255 | 3 | 0 | 0 | 0 | 0 | 240 | 255 | 255 | 3 | 0 | 0 | 0 |
| 9537 to 9552 | 0 | 254 | 255 | 255 | 7 | 0 | 0 | 0 | 192 | 255 | 255 | 255 | 15 | 0 | 0 | 0 |
| 9553 to 9568 | 248 | 255 | 255 | 255 | 15 | 0 | 0 | 0 | 254 | 255 | 255 | 255 | 31 | 0 | 0 | 0 |
| 9569 to 9584 | 255 | 255 | 255 | 255 | 63 | 0 | 0 | 0 | 255 | 255 | 255 | 255 | 127 | 0 | 0 | 0 |
| 9585 to 9600 | 255 | 255 | 255 | 255 | 127 | 0 | 0 | 0 | 255 | 255 | 255 | 255 | 255 | 0 | 0 | 0 |
| 9601 to 9616 | 255 | 255 | 255 | 255 | 255 | 0 | 0 | 0 | 255 | 255 | 255 | 255 | 255 | 1 | 0 | 0 |
| 9617 to 9632 | 255 | 255 | 255 | 255 | 255 | 3 | 0 | 0 | 255 | 255 | 255 | 255 | 255 | 7 | 0 | 0 |
| 9633 to 9648 | 255 | 255 | 255 | 255 | 255 | 15 | 0 | 0 | 255 | 255 | 255 | 255 | 255 | 15 | 0 | 0 |
| 9649 to 9664 | 255 | 255 | 255 | 255 | 255 | 31 | 0 | 0 | 255 | 255 | 255 | 255 | 255 | 255 | 255 | 255 |
| 9665 to 9680 | 255 | 255 | 255 | 255 | 255 | 255 | 255 | 255 | 255 | 255 | 255 | 255 | 255 | 255 | 255 | 255 |
| 9681 to 9696 | 255 | 255 | 255 | 255 | 255 | 255 | 255 | 255 | 255 | 255 | 255 | 255 | 255 | 255 | 255 | 255 |
| 9697 to 9712 | 255 | 255 | 255 | 255 | 255 | 255 | 255 | 255 | 255 | 255 | 255 | 255 | 255 | 255 | 255 | 255 |
| 9713 to 9728 | 255 | 255 | 255 | 255 | 255 | 255 | 255 | 255 | 255 | 255 | 255 | 255 | 255 | 255 | 255 | 255 |
| 9729 to 9744 | 0 | 0 | 0 | 0 | 0 | 0 | 0 | 0 | 0 | 0 | 0 | 0 | 0 | 0 | 0 | 0 |
| 9745 to 9760 | 0 | 0 | 0 | 0 | 0 | 0 | 0 | 0 | 0 | 0 | 0 | 0 | 0 | 0 | 0 | 0 |
| 9761 to 9776 | 0 | 0 | 0 | 0 | 0 | 0 | 0 | 0 | 0 | 0 | 0 | 0 | 0 | 0 | 0 | 0 |
| 9777 to 9792 | 0 | 0 | 0 | 0 | 0 | 0 | 0 | 0 | 0 | 0 | 0 | 0 | 0 | 0 | 0 | 0 |
| 9793 to 9808 | 0 | 0 | 0 | 0 | 0 | 0 | 0 | 0 | 0 | 0 | 0 | 0 | 0 | 0 | 0 | 0 |
| 9809 to 9824 | 0 | 0 | 0 | 0 | 0 | 0 | 0 | 0 | 0 | 0 | 0 | 0 | 0 | 0 | 0 | 0 |
| 9825 to 9840 | 0 | 0 | 0 | 0 | 0 | 0 | 0 | 0 | 0 | 0 | 0 | 0 | 0 | 0 | 0 | 0 |
| 9841 to 9856 | 0 | 0 | 0 | 0 | 0 | 0 | 0 | 0 | 0 | 0 | 0 | 0 | 0 | 0 | 0 | 0 |
| 9857 to 9872 | 0 | 0 | 0 | 0 | 0 | 0 | 0 | 0 | 0 | 0 | 0 | 0 | 0 | 0 | 0 | 0 |
| 9873 to 9888 | 0 | 0 | 0 | 0 | 0 | 0 | 0 | 0 | 0 | 0 | 0 | 0 | 0 | 0 | 0 | 0 |
| 9889 to 9904 | 0 | 0 | 0 | 0 | 0 | 0 | 0 | 0 | 0 | 0 | 0 | 0 | 0 | 0 | 0 | 0 |
| 9905 to 9920 | 0 | 0 | 0 | 0 | 0 | 0 | 0 | 0 | 0 | 0 | 0 | 0 | 0 | 0 | 0 | 0 |
| 9921 to 9936 | 0 | 0 | 0 | 0 | 0 | 0 | 0 | 0 | 0 | 0 | 0 | 0 | 0 | 0 | 0 | 0 |
| 9937 to 9952 | 0 | 0 | 0 | 0 | 0 | 0 | 0 | 0 | 0 | 0 | 0 | 0 | 0 | 0 | 0 | 0 |
| 9953 to 9968 | 0 | 0 | 0 | 0 | 0 | 0 | 0 | 0 | 0 | 0 | 0 | 0 | 0 | 0 | 0 | 0 |
| 9969 to 9984 | 0 | 0 | 0 | 0 | 0 | 0 | 0 | 0 | 0 | 0 | 0 | 0 | 0 | 0 | 0 | 0 |
| 9985 to 10000 | 0 | 0 | 4 | 0 | 0 | 0 | 0 | 0 | 0 | 0 | 0 | 0 | 0 | 0 | 0 | 0 |
| 10001 to 10016 | 0 | 0 | 0 | 112 | 0 | 0 | 0 | 0 | 0 | 0 | 2 | 0 | 254 | 0 | 0 | 0 |
| 10017 to 10032 | 0 | 0 | 192 | 255 | 0 | 0 | 0 | 0 | 0 | 0 | 248 | 255 | 1 | 0 | 0 | 0 |
| 10033 to 10048 | 0 | 0 | 255 | 255 | 3 | 0 | 0 | 0 | 0 | 192 | 255 | 255 | 7 | 0 | 0 | 0 |
| 10049 to 10064 | 0 | 248 | 255 | 255 | 7 | 0 | 0 | 0 | 0 | 255 | 255 | 255 | 15 | 0 | 0 | 0 |
| 10065 to 10080 | 224 | 255 | 255 | 255 | 31 | 0 | 0 | 0 | 252 | 255 | 255 | 255 | 31 | 0 | 0 | 0 |
| 10081 to 10096 | 255 | 255 | 255 | 255 | 63 | 0 | 0 | 0 | 255 | 255 | 255 | 255 | 127 | 0 | 0 | 0 |
| 10097 to 10112 | 255 | 255 | 255 | 255 | 255 | 0 | 0 | 0 | 255 | 255 | 255 | 255 | 255 | 0 | 0 | 0 |
| 10113 to 10128 | 255 | 255 | 255 | 255 | 255 | 1 | 0 | 0 | 255 | 255 | 255 | 255 | 255 | 3 | 0 | 0 |
| 10129 to 10144 | 255 | 255 | 255 | 255 | 255 | 3 | 0 | 0 | 255 | 255 | 255 | 255 | 255 | 7 | 0 | 0 |
| 10145 to 10160 | 255 | 255 | 255 | 255 | 255 | 15 | 0 | 0 | 255 | 255 | 255 | 255 | 255 | 31 | 0 | 0 |
| 10161 to 10176 | 255 | 255 | 255 | 255 | 255 | 31 | 0 | 0 | 255 | 255 | 255 | 255 | 255 | 63 | 0 | 0 |
| 10177 to 10192 | 255 | 255 | 255 | 255 | 255 | 127 | 0 | 0 | 255 | 255 | 255 | 255 | 255 | 255 | 255 | 255 |
| 10193 to 10208 | 255 | 255 | 255 | 255 | 255 | 255 | 255 | 255 | 255 | 255 | 255 | 255 | 255 | 255 | 255 | 255 |
| 10209 to 10224 | 255 | 255 | 255 | 255 | 255 | 255 | 255 | 255 | 255 | 255 | 255 | 255 | 255 | 255 | 255 | 255 |
| 10225 to 10240 | 255 | 255 | 255 | 255 | 255 | 255 | 255 | 255 | 255 | 255 | 255 | 255 | 255 | 255 | 255 | 255 |
| 10241 to 10256 | 0 | 0 | 0 | 0 | 0 | 0 | 0 | 0 | 0 | 0 | 0 | 0 | 0 | 0 | 0 | 0 |
| 10257 to 10272 | 0 | 0 | 0 | 0 | 0 | 0 | 0 | 0 | 0 | 0 | 0 | 0 | 0 | 0 | 0 | 0 |
| 10273 to 10288 | 0 | 0 | 0 | 0 | 0 | 0 | 0 | 0 | 0 | 0 | 0 | 0 | 0 | 0 | 0 | 0 |
| 10289 to 10304 | 0 | 0 | 0 | 0 | 0 | 0 | 0 | 0 | 0 | 0 | 0 | 0 | 0 | 0 | 0 | 0 |
| 10305 to 10320 | 0 | 0 | 0 | 0 | 0 | 0 | 0 | 0 | 0 | 0 | 0 | 0 | 0 | 0 | 0 | 0 |
| 10321 to 10336 | 0 | 0 | 0 | 0 | 0 | 0 | 0 | 0 | 0 | 0 | 0 | 0 | 0 | 0 | 0 | 0 |
| 10337 to 10352 | 0 | 0 | 0 | 0 | 0 | 0 | 0 | 0 | 0 | 0 | 0 | 0 | 0 | 0 | 0 | 0 |
| 10353 to 10368 | 0 | 0 | 0 | 0 | 0 | 0 | 0 | 0 | 0 | 0 | 0 | 0 | 0 | 0 | 0 | 0 |
| 10369 to 10384 | 0 | 0 | 0 | 0 | 0 | 0 | 0 | 0 | 0 | 0 | 0 | 0 | 0 | 0 | 0 | 0 |
| 10385 to 10400 | 0 | 0 | 0 | 0 | 0 | 0 | 0 | 0 | 0 | 0 | 0 | 0 | 0 | 0 | 0 | 0 |
| 10401 to 10416 | 0 | 0 | 0 | 0 | 0 | 0 | 0 | 0 | 0 | 0 | 0 | 0 | 0 | 0 | 0 | 0 |
| 10417 to 10432 | 0 | 0 | 0 | 0 | 0 | 0 | 0 | 0 | 0 | 0 | 0 | 0 | 0 | 0 | 0 | 0 |
| 10433 to 10448 | 0 | 0 | 0 | 0 | 0 | 0 | 0 | 0 | 0 | 0 | 0 | 0 | 0 | 0 | 0 | 0 |
| 10449 to 10464 | 0 | 0 | 0 | 0 | 0 | 0 | 0 | 0 | 0 | 0 | 0 | 0 | 0 | 0 | 0 | 0 |
| 10465 to 10480 | 0 | 0 | 0 | 0 | 0 | 0 | 0 | 0 | 0 | 0 | 0 | 0 | 0 | 0 | 0 | 0 |
| 10481 to 10496 | 0 | 0 | 0 | 0 | 0 | 0 | 0 | 0 | 0 | 0 | 0 | 0 | 0 | 0 | 0 | 0 |
| 10497 to 10512 | 0 | 0 | 0 | 0 | 0 | 0 | 0 | 0 | 0 | 0 | 0 | 0 | 0 | 0 | 0 | 0 |
| 10513 to 10528 | 0 | 0 | 0 | 96 | 0 | 0 | 0 | 0 | 0 | 0 | 0 | 248 | 0 | 0 | 0 | 0 |
| 10529 to 10544 | 0 | 0 | 0 | 255 | 1 | 0 | 0 | 0 | 0 | 0 | 224 | 255 | 3 | 0 | 0 | 0 |
| 10545 to 10560 | 0 | 0 | 252 | 255 | 3 | 0 | 0 | 0 | 0 | 128 | 255 | 255 | 7 | 0 | 0 | 0 |
| 10561 to 10576 | 0 | 224 | 255 | 255 | 15 | 0 | 0 | 0 | 0 | 252 | 255 | 255 | 15 | 0 | 0 | 0 |
| 10577 to 10592 | 128 | 255 | 255 | 255 | 31 | 0 | 0 | 0 | 240 | 255 | 255 | 255 | 63 | 0 | 0 | 0 |
| 10593 to 10608 | 254 | 255 | 255 | 255 | 127 | 0 | 0 | 0 | 255 | 255 | 255 | 255 | 127 | 0 | 0 | 0 |

| | | | | | | | | | | | | | | | | |
|---|---|---|---|---|---|---|---|---|---|---|---|---|---|---|---|---|
| 10609 to 10624 | 255 | 255 | 255 | 255 | 255 | 0 | 0 | 0 | 255 | 255 | 255 | 255 | 255 | 1 | 0 | 0 |
| 10625 to 10640 | 255 | 255 | 255 | 255 | 255 | 1 | 0 | 0 | 255 | 255 | 255 | 255 | 255 | 3 | 0 | 0 |
| 10641 to 10656 | 255 | 255 | 255 | 255 | 255 | 7 | 0 | 0 | 255 | 255 | 255 | 255 | 255 | 15 | 0 | 0 |
| 10657 to 10672 | 255 | 255 | 255 | 255 | 255 | 15 | 0 | 0 | 255 | 255 | 255 | 255 | 255 | 31 | 0 | 0 |
| 10673 to 10688 | 255 | 255 | 255 | 255 | 255 | 63 | 0 | 0 | 255 | 255 | 255 | 255 | 255 | 63 | 0 | 0 |
| 10689 to 10704 | 255 | 255 | 255 | 255 | 255 | 127 | 0 | 0 | 255 | 255 | 255 | 255 | 255 | 255 | 0 | 0 |
| 10705 to 10720 | 255 | 255 | 255 | 255 | 255 | 255 | 255 | 255 | 255 | 255 | 255 | 255 | 255 | 255 | 255 | 255 |
| 10721 to 10736 | 255 | 255 | 255 | 255 | 255 | 255 | 255 | 255 | 255 | 255 | 255 | 255 | 255 | 255 | 255 | 255 |
| 10737 to 10752 | 255 | 255 | 255 | 255 | 255 | 255 | 255 | 255 | 255 | 255 | 255 | 255 | 255 | 255 | 255 | 255 |
| 10753 to 10768 | 0 | 0 | 0 | 0 | 0 | 0 | 0 | 0 | 0 | 0 | 0 | 0 | 0 | 0 | 0 | 0 |
| 10769 to 10784 | 0 | 0 | 0 | 0 | 0 | 0 | 0 | 0 | 0 | 0 | 0 | 0 | 0 | 0 | 0 | 0 |
| 10785 to 10800 | 0 | 0 | 0 | 0 | 0 | 0 | 0 | 0 | 0 | 0 | 0 | 0 | 0 | 0 | 0 | 0 |
| 10801 to 10816 | 0 | 0 | 0 | 0 | 0 | 0 | 0 | 0 | 0 | 0 | 0 | 0 | 0 | 0 | 0 | 0 |
| 10817 to 10832 | 0 | 0 | 0 | 0 | 0 | 0 | 0 | 0 | 0 | 0 | 0 | 0 | 0 | 0 | 0 | 0 |
| 10833 to 10848 | 0 | 0 | 0 | 0 | 0 | 0 | 0 | 0 | 0 | 0 | 0 | 0 | 0 | 0 | 0 | 0 |
| 10849 to 10864 | 0 | 0 | 0 | 0 | 0 | 0 | 0 | 0 | 0 | 0 | 0 | 0 | 0 | 0 | 0 | 0 |
| 10865 to 10880 | 0 | 0 | 0 | 0 | 0 | 0 | 0 | 0 | 0 | 0 | 0 | 0 | 0 | 0 | 0 | 0 |
| 10881 to 10896 | 0 | 0 | 0 | 0 | 0 | 0 | 0 | 0 | 0 | 0 | 0 | 0 | 0 | 0 | 0 | 0 |
| 10897 to 10912 | 0 | 0 | 0 | 0 | 0 | 0 | 0 | 0 | 0 | 0 | 0 | 0 | 0 | 0 | 0 | 0 |
| 10913 to 10928 | 0 | 0 | 0 | 0 | 0 | 0 | 0 | 0 | 0 | 0 | 0 | 0 | 0 | 0 | 0 | 0 |
| 10929 to 10944 | 0 | 0 | 0 | 0 | 0 | 0 | 0 | 0 | 0 | 0 | 0 | 0 | 0 | 0 | 0 | 0 |
| 10945 to 10960 | 0 | 0 | 0 | 0 | 0 | 0 | 0 | 0 | 0 | 0 | 0 | 0 | 0 | 0 | 0 | 0 |
| 10961 to 10976 | 0 | 0 | 0 | 0 | 0 | 0 | 0 | 0 | 0 | 0 | 0 | 0 | 0 | 0 | 0 | 0 |
| 10977 to 10992 | 0 | 0 | 0 | 0 | 0 | 0 | 0 | 0 | 0 | 0 | 0 | 0 | 0 | 0 | 0 | 0 |
| 10993 to 11008 | 0 | 0 | 0 | 0 | 0 | 0 | 0 | 0 | 0 | 0 | 0 | 0 | 0 | 0 | 0 | 0 |
| 11009 to 11024 | 0 | 0 | 0 | 0 | 0 | 0 | 0 | 0 | 0 | 0 | 0 | 0 | 0 | 0 | 0 | 0 |
| 11025 to 11040 | 0 | 0 | 0 | 128 | 0 | 0 | 0 | 0 | 0 | 0 | 0 | 240 | 0 | 0 | 0 | 0 |
| 11041 to 11056 | 0 | 0 | 0 | 252 | 1 | 0 | 0 | 0 | 0 | 0 | 128 | 255 | 3 | 0 | 0 | 0 |
| 11057 to 11072 | 0 | 0 | 240 | 255 | 7 | 0 | 0 | 0 | 0 | 0 | 254 | 255 | 7 | 0 | 0 | 0 |
| 11073 to 11088 | 0 | 192 | 255 | 255 | 15 | 0 | 0 | 0 | 0 | 240 | 255 | 255 | 31 | 0 | 0 | 0 |
| 11089 to 11104 | 0 | 254 | 255 | 255 | 31 | 0 | 0 | 0 | 192 | 255 | 255 | 255 | 63 | 0 | 0 | 0 |
| 11105 to 11120 | 248 | 255 | 255 | 255 | 127 | 0 | 0 | 0 | 255 | 255 | 255 | 255 | 255 | 0 | 0 | 0 |
| 11121 to 11136 | 255 | 255 | 255 | 255 | 255 | 0 | 0 | 0 | 255 | 255 | 255 | 255 | 255 | 1 | 0 | 0 |
| 11137 to 11152 | 255 | 255 | 255 | 255 | 255 | 3 | 0 | 0 | 255 | 255 | 255 | 255 | 255 | 3 | 0 | 0 |
| 11153 to 11168 | 255 | 255 | 255 | 255 | 255 | 7 | 0 | 0 | 255 | 255 | 255 | 255 | 255 | 15 | 0 | 0 |
| 11169 to 11184 | 255 | 255 | 255 | 255 | 255 | 31 | 0 | 0 | 255 | 255 | 255 | 255 | 255 | 31 | 0 | 0 |
| 11185 to 11200 | 255 | 255 | 255 | 255 | 255 | 63 | 0 | 0 | 255 | 255 | 255 | 255 | 255 | 127 | 0 | 0 |
| 11201 to 11216 | 255 | 255 | 255 | 255 | 255 | 127 | 0 | 0 | 255 | 255 | 255 | 255 | 255 | 255 | 0 | 0 |
| 11217 to 11232 | 255 | 255 | 255 | 255 | 255 | 255 | 1 | 0 | 255 | 255 | 255 | 255 | 255 | 255 | 255 | 255 |
| 11233 to 11248 | 255 | 255 | 255 | 255 | 255 | 255 | 255 | 255 | 255 | 255 | 255 | 255 | 255 | 255 | 255 | 255 |
| 11249 to 11264 | 255 | 255 | 255 | 255 | 255 | 255 | 255 | 255 | 255 | 255 | 255 | 255 | 255 | 255 | 255 | 255 |
| 11265 to 11280 | 0 | 0 | 0 | 0 | 0 | 0 | 0 | 0 | 0 | 0 | 0 | 0 | 0 | 0 | 0 | 0 |
| 11281 to 11296 | 0 | 0 | 0 | 0 | 0 | 0 | 0 | 0 | 0 | 0 | 0 | 0 | 0 | 0 | 0 | 0 |
| 11297 to 11312 | 0 | 0 | 0 | 0 | 0 | 0 | 0 | 0 | 0 | 0 | 0 | 0 | 0 | 0 | 0 | 0 |
| 11313 to 11328 | 0 | 0 | 0 | 0 | 0 | 0 | 0 | 0 | 0 | 0 | 0 | 0 | 0 | 0 | 0 | 0 |
| 11329 to 11344 | 0 | 0 | 0 | 0 | 0 | 0 | 0 | 0 | 0 | 0 | 0 | 0 | 0 | 0 | 0 | 0 |
| 11345 to 11360 | 0 | 0 | 0 | 0 | 0 | 0 | 0 | 0 | 0 | 0 | 0 | 0 | 0 | 0 | 0 | 0 |
| 11361 to 11376 | 0 | 0 | 0 | 0 | 0 | 0 | 0 | 0 | 0 | 0 | 0 | 0 | 0 | 0 | 0 | 0 |
| 11377 to 11392 | 0 | 0 | 0 | 0 | 0 | 0 | 0 | 0 | 0 | 0 | 0 | 0 | 0 | 0 | 0 | 0 |
| 11393 to 11408 | 0 | 0 | 0 | 0 | 0 | 0 | 0 | 0 | 0 | 0 | 0 | 0 | 0 | 0 | 0 | 0 |
| 11409 to 11424 | 0 | 0 | 0 | 0 | 0 | 0 | 0 | 0 | 0 | 0 | 0 | 0 | 0 | 0 | 0 | 0 |
| 11425 to 11440 | 0 | 0 | 0 | 0 | 0 | 0 | 0 | 0 | 0 | 0 | 0 | 0 | 0 | 0 | 0 | 0 |
| 11441 to 11456 | 0 | 0 | 0 | 0 | 0 | 0 | 0 | 0 | 0 | 0 | 0 | 0 | 0 | 0 | 0 | 0 |
| 11457 to 11472 | 0 | 0 | 0 | 0 | 0 | 0 | 0 | 0 | 0 | 0 | 0 | 0 | 0 | 0 | 0 | 0 |
| 11473 to 11488 | 0 | 0 | 0 | 0 | 0 | 0 | 0 | 0 | 0 | 0 | 0 | 0 | 0 | 0 | 0 | 0 |
| 11489 to 11504 | 0 | 0 | 0 | 0 | 0 | 0 | 0 | 0 | 0 | 0 | 0 | 0 | 0 | 0 | 0 | 0 |
| 11505 to 11520 | 0 | 0 | 0 | 0 | 0 | 0 | 0 | 0 | 0 | 0 | 0 | 0 | 0 | 0 | 0 | 0 |
| 11521 to 11536 | 0 | 0 | 0 | 0 | 0 | 0 | 0 | 0 | 0 | 0 | 0 | 0 | 0 | 0 | 0 | 0 |
| 11537 to 11552 | 0 | 0 | 0 | 0 | 0 | 0 | 0 | 0 | 0 | 0 | 0 | 192 | 1 | 0 | 0 | 0 |
| 11553 to 11568 | 0 | 0 | 0 | 248 | 1 | 0 | 0 | 0 | 0 | 0 | 0 | 254 | 3 | 0 | 0 | 0 |
| 11569 to 11584 | 0 | 0 | 192 | 255 | 7 | 0 | 0 | 0 | 0 | 0 | 248 | 255 | 15 | 0 | 0 | 0 |
| 11585 to 11600 | 0 | 0 | 255 | 255 | 15 | 0 | 0 | 0 | 0 | 224 | 255 | 255 | 31 | 0 | 0 | 0 |
| 11601 to 11616 | 0 | 252 | 255 | 255 | 63 | 0 | 0 | 0 | 0 | 255 | 255 | 255 | 127 | 0 | 0 | 0 |
| 11617 to 11632 | 224 | 255 | 255 | 255 | 127 | 0 | 0 | 0 | 252 | 255 | 255 | 255 | 255 | 0 | 0 | 0 |
| 11633 to 11648 | 255 | 255 | 255 | 255 | 255 | 1 | 0 | 0 | 255 | 255 | 255 | 255 | 255 | 1 | 0 | 0 |
| 11649 to 11664 | 255 | 255 | 255 | 255 | 255 | 3 | 0 | 0 | 255 | 255 | 255 | 255 | 255 | 7 | 0 | 0 |
| 11665 to 11680 | 255 | 255 | 255 | 255 | 255 | 15 | 0 | 0 | 255 | 255 | 255 | 255 | 255 | 15 | 0 | 0 |
| 11681 to 11696 | 255 | 255 | 255 | 255 | 255 | 31 | 0 | 0 | 255 | 255 | 255 | 255 | 255 | 63 | 0 | 0 |
| 11697 to 11712 | 255 | 255 | 255 | 255 | 255 | 63 | 0 | 0 | 255 | 255 | 255 | 255 | 255 | 127 | 0 | 0 |
| 11713 to 11728 | 255 | 255 | 255 | 255 | 255 | 255 | 0 | 0 | 255 | 255 | 255 | 255 | 255 | 255 | 1 | 0 |
| 11729 to 11744 | 255 | 255 | 255 | 255 | 255 | 255 | 1 | 0 | 255 | 255 | 255 | 255 | 255 | 255 | 3 | 0 |
| 11745 to 11760 | 255 | 255 | 255 | 255 | 255 | 255 | 255 | 255 | 255 | 255 | 255 | 255 | 255 | 255 | 255 | 255 |
| 11761 to 11776 | 255 | 255 | 255 | 255 | 255 | 255 | 255 | 255 | 255 | 255 | 255 | 255 | 255 | 255 | 255 | 255 |
| 11777 to 11792 | 0 | 0 | 0 | 0 | 0 | 0 | 0 | 0 | 0 | 0 | 0 | 0 | 0 | 0 | 0 | 0 |
| 11793 to 11808 | 0 | 0 | 0 | 0 | 0 | 0 | 0 | 0 | 0 | 0 | 0 | 0 | 0 | 0 | 0 | 0 |
| 11809 to 11824 | 0 | 0 | 0 | 0 | 0 | 0 | 0 | 0 | 0 | 0 | 0 | 0 | 0 | 0 | 0 | 0 |
| 11825 to 11840 | 0 | 0 | 0 | 0 | 0 | 0 | 0 | 0 | 0 | 0 | 0 | 0 | 0 | 0 | 0 | 0 |
| 11841 to 11856 | 0 | 0 | 0 | 0 | 0 | 0 | 0 | 0 | 0 | 0 | 0 | 0 | 0 | 0 | 0 | 0 |
| 11857 to 11872 | 0 | 0 | 0 | 0 | 0 | 0 | 0 | 0 | 0 | 0 | 0 | 0 | 0 | 0 | 0 | 0 |
| 11873 to 11888 | 0 | 0 | 0 | 0 | 0 | 0 | 0 | 0 | 0 | 0 | 0 | 0 | 0 | 0 | 0 | 0 |
| 11889 to 11904 | 0 | 0 | 0 | 0 | 0 | 0 | 0 | 0 | 0 | 0 | 0 | 0 | 0 | 0 | 0 | 0 |
| 11905 to 11920 | 0 | 0 | 0 | 0 | 0 | 0 | 0 | 0 | 0 | 0 | 0 | 0 | 0 | 0 | 0 | 0 |
| 11921 to 11936 | 0 | 0 | 0 | 0 | 0 | 0 | 0 | 0 | 0 | 0 | 0 | 0 | 0 | 0 | 0 | 0 |
| 11937 to 11952 | 0 | 0 | 0 | 0 | 0 | 0 | 0 | 0 | 0 | 0 | 0 | 0 | 0 | 0 | 0 | 0 |
| 11953 to 11968 | 0 | 0 | 0 | 0 | 0 | 0 | 0 | 0 | 0 | 0 | 0 | 0 | 0 | 0 | 0 | 0 |
| 11969 to 11984 | 0 | 0 | 0 | 0 | 0 | 0 | 0 | 0 | 0 | 0 | 0 | 0 | 0 | 0 | 0 | 0 |
| 11985 to 12000 | 0 | 0 | 0 | 0 | 0 | 0 | 0 | 0 | 0 | 0 | 0 | 0 | 0 | 0 | 0 | 0 |
| 12001 to 12016 | 0 | 0 | 0 | 0 | 0 | 0 | 0 | 0 | 0 | 0 | 0 | 0 | 0 | 0 | 0 | 0 |
| 12017 to 12032 | 0 | 0 | 0 | 0 | 0 | 0 | 0 | 0 | 0 | 0 | 0 | 0 | 0 | 0 | 0 | 0 |
| 12033 to 12048 | 0 | 0 | 0 | 0 | 0 | 0 | 0 | 0 | 0 | 0 | 0 | 0 | 0 | 0 | 0 | 0 |
| 12049 to 12064 | 0 | 0 | 0 | 0 | 0 | 0 | 0 | 0 | 0 | 0 | 0 | 0 | 1 | 0 | 0 | 0 |
| 12065 to 12080 | 0 | 0 | 0 | 224 | 3 | 0 | 0 | 0 | 0 | 0 | 0 | 252 | 7 | 0 | 0 | 0 |
| 12081 to 12096 | 0 | 0 | 0 | 255 | 7 | 0 | 0 | 0 | 0 | 0 | 224 | 255 | 15 | 0 | 0 | 0 |
| 12097 to 12112 | 0 | 0 | 252 | 255 | 31 | 0 | 0 | 0 | 0 | 128 | 255 | 255 | 31 | 0 | 0 | 0 |
| 12113 to 12128 | 0 | 240 | 255 | 255 | 63 | 0 | 0 | 0 | 0 | 254 | 255 | 255 | 127 | 0 | 0 | 0 |
| 12129 to 12144 | 128 | 255 | 255 | 255 | 255 | 0 | 0 | 0 | 240 | 255 | 255 | 255 | 255 | 0 | 0 | 0 |

```
12145 to 12160 |   254  255  255  255  255    1    0    0  255  255  255  255  255    3    0    0
12161 to 12176 |   255  255  255  255  255    3    0    0  255  255  255  255  255    7    0    0
12177 to 12192 |   255  255  255  255  255   15    0    0  255  255  255  255  255   31    0    0
12193 to 12208 |   255  255  255  255  255   31    0    0  255  255  255  255  255   63    0    0
12209 to 12224 |   255  255  255  255  255  127    0    0  255  255  255  255  255  127    0    0
12225 to 12240 |   255  255  255  255  255  255    0    0  255  255  255  255  255  255    1    0
12241 to 12256 |   255  255  255  255  255  255    3    0  255  255  255  255  255  255    3    0
12257 to 12272 |   255  255  255  255  255  255    7    0  255  255  255  255  255  255   15    0
12273 to 12288 |   255  255  255  255  255  255  255  255  255  255  255  255  255  255  255  255  255  255
12289 to 12304 |     0    0    0    0    0    0    0    0    0    0    0    0    0    0    0    0
12305 to 12320 |     0    0    0    0    0    0    0    0    0    0    0    0    0    0    0    0
12321 to 12336 |     0    0    0    0    0    0    0    0    0    0    0    0    0    0    0    0
12337 to 12352 |     0    0    0    0    0    0    0    0    0    0    0    0    0    0    0    0
12353 to 12368 |     0    0    0    0    0    0    0    0    0    0    0    0    0    0    0    0
12369 to 12384 |     0    0    0    0    0    0    0    0    0    0    0    0    0    0    0    0
12385 to 12400 |     0    0    0    0    0    0    0    0    0    0    0    0    0    0    0    0
12401 to 12416 |     0    0    0    0    0    0    0    0    0    0    0    0    0    0    0    0
12417 to 12432 |     0    0    0    0    0    0    0    0    0    0    0    0    0    0    0    0
12433 to 12448 |     0    0    0    0    0    0    0    0    0    0    0    0    0    0    0    0
12449 to 12464 |     0    0    0    0    0    0    0    0    0    0    0    0    0    0    0    0
12465 to 12480 |     0    0    0    0    0    0    0    0    0    0    0    0    0    0    0    0
12481 to 12496 |     0    0    0    0    0    0    0    0    0    0    0    0    0    0    0    0
12497 to 12512 |     0    0    0    0    0    0    0    0    0    0    0    0    0    0    0    0
12513 to 12528 |     0    0    0    0    0    0    0    0    0    0    0    0    0    0    0    0
12529 to 12544 |     0    0    0    0    0    0    0    0    0    0    0    0    0    0    0    0
12545 to 12560 |     0    0    0    0    0    0    0    0    0    0    0    0    0    0    0    0
12561 to 12576 |     0    0    0    0    0    0    0    0    0    0    0    0    0    0    0    0
12577 to 12592 |     0    0    0  128    3    0    0    0    0    0    0  240    7    0    0    0
12593 to 12608 |     0    0    0  254   15    0    0    0    0    0    0  192  255   15    0    0
12609 to 12624 |     0    0  240  255   31    0    0    0    0    0  254  255   63    0    0    0
12625 to 12640 |     0  192  255  255   63    0    0    0    0  248  255  255  127    0    0    0
12641 to 12656 |     0  255  255  255  255    0    0    0  192  255  255  255  255    1    0    0
12657 to 12672 |   248  255  255  255  255    1    0    0  255  255  255  255  255    3    0    0
12673 to 12688 |   255  255  255  255  255    7    0    0  255  255  255  255  255   15    0    0
12689 to 12704 |   255  255  255  255  255   15    0    0  255  255  255  255  255   31    0    0
12705 to 12720 |   255  255  255  255  255   63    0    0  255  255  255  255  255   63    0    0
12721 to 12736 |   255  255  255  255  255  127    0    0  255  255  255  255  255  255    0    0
12737 to 12752 |   255  255  255  255  255  255    1    0  255  255  255  255  255  255    1    0
12753 to 12768 |   255  255  255  255  255  255    3    0  255  255  255  255  255  255    7    0
12769 to 12784 |   255  255  255  255  255  255    7    0  255  255  255  255  255  255   15    0
12785 to 12800 |   255  255  255  255  255  255   31    0  255  255  255  255  255  255  255  255
12801 to 12816 |     0    0    0    0    0    0    0    0    0    0    0    0    0    0    0    0
12817 to 12832 |     0    0    0    0    0    0    0    0    0    0    0    0    0    0    0    0
12833 to 12848 |     0    0    0    0    0    0    0    0    0    0    0    0    0    0    0    0
12849 to 12864 |     0    0    0    0    0    0    0    0    0    0    0    0    0    0    0    0
12865 to 12880 |     0    0    0    0    0    0    0    0    0    0    0    0    0    0    0    0
12881 to 12896 |     0    0    0    0    0    0    0    0    0    0    0    0    0    0    0    0
12897 to 12912 |     0    0    0    0    0    0    0    0    0    0    0    0    0    0    0    0
12913 to 12928 |     0    0    0    0    0    0    0    0    0    0    0    0    0    0    0    0
12929 to 12944 |     0    0    0    0    0    0    0    0    0    0    0    0    0    0    0    0
12945 to 12960 |     0    0    0    0    0    0    0    0    0    0    0    0    0    0    0    0
12961 to 12976 |     0    0    0    0    0    0    0    0    0    0    0    0    0    0    0    0
12977 to 12992 |     0    0    0    0    0    0    0    0    0    0    0    0    0    0    0    0
12993 to 13008 |     0    0    0    0    0    0    0    0    0    0    0    0    0    0    0    0
13009 to 13024 |     0    0    0    0    0    0    0    0    0    0    0    0    0    0    0    0
13025 to 13040 |     0    0    0    0    0    0    0    0    0    0    0    0    0    0    0    0
13041 to 13056 |     0    0    0    0    0    0    0    0    0    0    0    0    0    0    0    0
13057 to 13072 |     0    0    0    0    0    0    0    0    0    0    0    0    0    0    0    0
13073 to 13088 |     0    0    0    0    0    0    0    0    0    0    0    0    0    0    0    0
13089 to 13104 |     0    0    0    0    6    0    0    0    0    0    0  192    7    0    0    0
13105 to 13120 |     0    0    0  248   15    0    0    0    0    0    0  255   31    0    0    0
13121 to 13136 |     0    0  224  255   31    0    0    0    0    0  248  255   63    0    0    0
13137 to 13152 |     0    0  255  255  127    0    0    0    0  224  255  255  255    0    0    0
13153 to 13168 |     0  252  255  255  255    0    0    0  128  255  255  255  255    1    0    0
13169 to 13184 |   224  255  255  255  255    3    0    0  252  255  255  255  255    3    0    0
13185 to 13200 |   255  255  255  255  255    7    0    0  255  255  255  255  255   15    0    0
13201 to 13216 |   255  255  255  255  255   31    0    0  255  255  255  255  255   31    0    0
13217 to 13232 |   255  255  255  255  255   63    0    0  255  255  255  255  255  127    0    0
13233 to 13248 |   255  255  255  255  255  127    0    0  255  255  255  255  255  255    0    0
13249 to 13264 |   255  255  255  255  255  255    1    0  255  255  255  255  255  255    3    0
13265 to 13280 |   255  255  255  255  255  255    3    0  255  255  255  255  255  255    7    0
13281 to 13296 |   255  255  255  255  255  255   15    0  255  255  255  255  255  255   15    0
13297 to 13312 |   255  255  255  255  255  255   31    0  255  255  255  255  255  255   63    0
13313 to 13328 |     0    0    0    0    0    0    0    0    0    0    0    0    0    0    0    0
13329 to 13344 |     0    0    0    0    0    0    0    0    0    0    0    0    0    0    0    0
13345 to 13360 |     0    0    0    0    0    0    0    0    0    0    0    0    0    0    0    0
13361 to 13376 |     0    0    0    0    0    0    0    0    0    0    0    0    0    0    0    0
13377 to 13392 |     0    0    0    0    0    0    0    0    0    0    0    0    0    0    0    0
13393 to 13408 |     0    0    0    0    0    0    0    0    0    0    0    0    0    0    0    0
13409 to 13424 |     0    0    0    0    0    0    0    0    0    0    0    0    0    0    0    0
13425 to 13440 |     0    0    0    0    0    0    0    0    0    0    0    0    0    0    0    0
13441 to 13456 |     0    0    0    0    0    0    0    0    0    0    0    0    0    0    0    0
13457 to 13472 |     0    0    0    0    0    0    0    0    0    0    0    0    0    0    0    0
13473 to 13488 |     0    0    0    0    0    0    0    0    0    0    0    0    0    0    0    0
13489 to 13504 |     0    0    0    0    0    0    0    0    0    0    0    0    0    0    0    0
13505 to 13520 |     0    0    0    0    0    0    0    0    0    0    0    0    0    0    0    0
13521 to 13536 |     0    0    0    0    0    0    0    0    0    0    0    0    0    0    0    0
13537 to 13552 |     0    0    0    0    0    0    0    0    0    0    0    0    0    0    0    0
13553 to 13568 |     0    0    0    0    0    0    0    0    0    0    0    0    0    0    0    0
13569 to 13584 |     0    0    0    0    0    0    0    0    0    0    0    0    0    0    0    0
13585 to 13600 |     0    0    0    0    0    0    0    0    0    0    0    0    0    0    0    0
13601 to 13616 |     0    0    0    0    4    0    0    0    0    0    0    0   15    0    0    0
13617 to 13632 |     0    0    0  224   15    0    0    0    0    0    0  252   31    0    0    0
13633 to 13648 |     0    0  128  255   63    0    0    0    0    0  240  255   63    0    0    0
13649 to 13664 |     0    0  252  255  127    0    0    0    0  128  255  255  255    0    0    0
13665 to 13680 |     0  240  255  255  255    1    0    0    0  254  255  255  255    1    0    0
```

| Bytes | | | | | | | | | | | | | | | | |
|---|---|---|---|---|---|---|---|---|---|---|---|---|---|---|---|---|
| 13681 to 13696 | 192 | 255 | 255 | 255 | 255 | 3 | 0 | 0 | 240 | 255 | 255 | 255 | 255 | 7 | 0 | 0 |
| 13697 to 13712 | 254 | 255 | 255 | 255 | 255 | 7 | 0 | 0 | 255 | 255 | 255 | 255 | 255 | 15 | 0 | 0 |
| 13713 to 13728 | 255 | 255 | 255 | 255 | 255 | 31 | 0 | 0 | 255 | 255 | 255 | 255 | 255 | 63 | 0 | 0 |
| 13729 to 13744 | 255 | 255 | 255 | 255 | 255 | 63 | 0 | 0 | 255 | 255 | 255 | 255 | 255 | 127 | 0 | 0 |
| 13745 to 13760 | 255 | 255 | 255 | 255 | 255 | 255 | 0 | 0 | 255 | 255 | 255 | 255 | 255 | 255 | 1 | 0 |
| 13761 to 13776 | 255 | 255 | 255 | 255 | 255 | 255 | 1 | 0 | 255 | 255 | 255 | 255 | 255 | 255 | 3 | 0 |
| 13777 to 13792 | 255 | 255 | 255 | 255 | 255 | 255 | 7 | 0 | 255 | 255 | 255 | 255 | 255 | 255 | 7 | 0 |
| 13793 to 13808 | 255 | 255 | 255 | 255 | 255 | 255 | 15 | 0 | 255 | 255 | 255 | 255 | 255 | 255 | 31 | 0 |
| 13809 to 13824 | 255 | 255 | 255 | 255 | 255 | 255 | 63 | 0 | 255 | 255 | 255 | 255 | 255 | 255 | 63 | 0 |
| 13825 to 13840 | 0 | 0 | 0 | 0 | 0 | 0 | 0 | 0 | 0 | 0 | 0 | 0 | 0 | 0 | 0 | 0 |
| 13841 to 13856 | 0 | 0 | 0 | 0 | 0 | 0 | 0 | 0 | 0 | 0 | 0 | 0 | 0 | 0 | 0 | 0 |
| 13857 to 13872 | 0 | 0 | 0 | 0 | 0 | 0 | 0 | 0 | 0 | 0 | 0 | 0 | 0 | 0 | 0 | 0 |
| 13873 to 13888 | 0 | 0 | 0 | 0 | 0 | 0 | 0 | 0 | 0 | 0 | 0 | 0 | 0 | 0 | 0 | 0 |
| 13889 to 13904 | 0 | 0 | 0 | 0 | 0 | 0 | 0 | 0 | 0 | 0 | 0 | 0 | 0 | 0 | 0 | 0 |
| 13905 to 13920 | 0 | 0 | 0 | 0 | 0 | 0 | 0 | 0 | 0 | 0 | 0 | 0 | 0 | 0 | 0 | 0 |
| 13921 to 13936 | 0 | 0 | 0 | 0 | 0 | 0 | 0 | 0 | 0 | 0 | 0 | 0 | 0 | 0 | 0 | 0 |
| 13937 to 13952 | 0 | 0 | 0 | 0 | 0 | 0 | 0 | 0 | 0 | 0 | 0 | 0 | 0 | 0 | 0 | 0 |
| 13953 to 13968 | 0 | 0 | 0 | 0 | 0 | 0 | 0 | 0 | 0 | 0 | 0 | 0 | 0 | 0 | 0 | 0 |
| 13969 to 13984 | 0 | 0 | 0 | 0 | 0 | 0 | 0 | 0 | 0 | 0 | 0 | 0 | 0 | 0 | 0 | 0 |
| 13985 to 14000 | 0 | 0 | 0 | 0 | 0 | 0 | 0 | 0 | 0 | 0 | 0 | 0 | 0 | 0 | 0 | 0 |
| 14001 to 14016 | 0 | 0 | 0 | 0 | 0 | 0 | 0 | 0 | 0 | 0 | 0 | 0 | 0 | 0 | 0 | 0 |
| 14017 to 14032 | 0 | 0 | 0 | 0 | 0 | 0 | 0 | 0 | 0 | 0 | 0 | 0 | 0 | 0 | 0 | 0 |
| 14033 to 14048 | 0 | 0 | 0 | 0 | 0 | 0 | 0 | 0 | 0 | 0 | 0 | 0 | 0 | 0 | 0 | 0 |
| 14049 to 14064 | 0 | 0 | 0 | 0 | 0 | 0 | 0 | 0 | 0 | 0 | 0 | 0 | 0 | 0 | 0 | 0 |
| 14065 to 14080 | 0 | 0 | 0 | 0 | 0 | 0 | 0 | 0 | 0 | 0 | 0 | 0 | 0 | 0 | 0 | 0 |
| 14081 to 14096 | 0 | 0 | 0 | 0 | 0 | 0 | 0 | 0 | 0 | 0 | 0 | 0 | 0 | 0 | 0 | 0 |
| 14097 to 14112 | 0 | 0 | 0 | 0 | 0 | 0 | 0 | 0 | 0 | 0 | 0 | 0 | 0 | 0 | 0 | 0 |
| 14113 to 14128 | 0 | 0 | 0 | 0 | 0 | 0 | 0 | 0 | 0 | 0 | 0 | 0 | 14 | 0 | 0 | 0 |
| 14129 to 14144 | 0 | 0 | 0 | 128 | 31 | 0 | 0 | 0 | 0 | 0 | 0 | 240 | 31 | 0 | 0 | 0 |
| 14145 to 14160 | 0 | 0 | 0 | 254 | 63 | 0 | 0 | 0 | 0 | 0 | 192 | 255 | 127 | 0 | 0 | 0 |
| 14161 to 14176 | 0 | 0 | 248 | 255 | 255 | 0 | 0 | 0 | 0 | 0 | 254 | 255 | 255 | 0 | 0 | 0 |
| 14177 to 14192 | 0 | 192 | 255 | 255 | 255 | 1 | 0 | 0 | 0 | 248 | 255 | 255 | 255 | 3 | 0 | 0 |
| 14193 to 14208 | 0 | 255 | 255 | 255 | 255 | 3 | 0 | 0 | 224 | 255 | 255 | 255 | 255 | 7 | 0 | 0 |
| 14209 to 14224 | 252 | 255 | 255 | 255 | 255 | 15 | 0 | 0 | 255 | 255 | 255 | 255 | 255 | 31 | 0 | 0 |
| 14225 to 14240 | 255 | 255 | 255 | 255 | 255 | 31 | 0 | 0 | 255 | 255 | 255 | 255 | 255 | 63 | 0 | 0 |
| 14241 to 14256 | 255 | 255 | 255 | 255 | 255 | 127 | 0 | 0 | 255 | 255 | 255 | 255 | 255 | 127 | 0 | 0 |
| 14257 to 14272 | 255 | 255 | 255 | 255 | 255 | 255 | 0 | 0 | 255 | 255 | 255 | 255 | 255 | 255 | 1 | 0 |
| 14273 to 14288 | 255 | 255 | 255 | 255 | 255 | 255 | 3 | 0 | 255 | 255 | 255 | 255 | 255 | 255 | 3 | 0 |
| 14289 to 14304 | 255 | 255 | 255 | 255 | 255 | 255 | 7 | 0 | 255 | 255 | 255 | 255 | 255 | 255 | 15 | 0 |
| 14305 to 14320 | 255 | 255 | 255 | 255 | 255 | 255 | 15 | 0 | 255 | 255 | 255 | 255 | 255 | 255 | 31 | 0 |
| 14321 to 14336 | 255 | 255 | 255 | 255 | 255 | 255 | 63 | 0 | 255 | 255 | 255 | 255 | 255 | 255 | 127 | 0 |
| 14337 to 14352 | 0 | 0 | 0 | 0 | 0 | 0 | 0 | 0 | 0 | 0 | 0 | 0 | 0 | 0 | 0 | 0 |
| 14353 to 14368 | 0 | 0 | 0 | 0 | 0 | 0 | 0 | 0 | 0 | 0 | 0 | 0 | 0 | 0 | 0 | 0 |
| 14369 to 14384 | 0 | 0 | 0 | 0 | 0 | 0 | 0 | 0 | 0 | 0 | 0 | 0 | 0 | 0 | 0 | 0 |
| 14385 to 14400 | 0 | 0 | 0 | 0 | 0 | 0 | 0 | 0 | 0 | 0 | 0 | 0 | 0 | 0 | 0 | 0 |
| 14401 to 14416 | 0 | 0 | 0 | 0 | 0 | 0 | 0 | 0 | 0 | 0 | 0 | 0 | 0 | 0 | 0 | 0 |
| 14417 to 14432 | 0 | 0 | 0 | 0 | 0 | 0 | 0 | 0 | 0 | 0 | 0 | 0 | 0 | 0 | 0 | 0 |
| 14433 to 14448 | 0 | 0 | 0 | 0 | 0 | 0 | 0 | 0 | 0 | 0 | 0 | 0 | 0 | 0 | 0 | 0 |
| 14449 to 14464 | 0 | 0 | 0 | 0 | 0 | 0 | 0 | 0 | 0 | 0 | 0 | 0 | 0 | 0 | 0 | 0 |
| 14465 to 14480 | 0 | 0 | 0 | 0 | 0 | 0 | 0 | 0 | 0 | 0 | 0 | 0 | 0 | 0 | 0 | 0 |
| 14481 to 14496 | 0 | 0 | 0 | 0 | 0 | 0 | 0 | 0 | 0 | 0 | 0 | 0 | 0 | 0 | 0 | 0 |
| 14497 to 14512 | 0 | 0 | 0 | 0 | 0 | 0 | 0 | 0 | 0 | 0 | 0 | 0 | 0 | 0 | 0 | 0 |
| 14513 to 14528 | 0 | 0 | 0 | 0 | 0 | 0 | 0 | 0 | 0 | 0 | 0 | 0 | 0 | 0 | 0 | 0 |
| 14529 to 14544 | 0 | 0 | 0 | 0 | 0 | 0 | 0 | 0 | 0 | 0 | 0 | 0 | 0 | 0 | 0 | 0 |
| 14545 to 14560 | 0 | 0 | 0 | 0 | 0 | 0 | 0 | 0 | 0 | 0 | 0 | 0 | 0 | 0 | 0 | 0 |
| 14561 to 14576 | 0 | 0 | 0 | 0 | 0 | 0 | 0 | 0 | 0 | 0 | 0 | 0 | 0 | 0 | 0 | 0 |
| 14577 to 14592 | 0 | 0 | 0 | 0 | 0 | 0 | 0 | 0 | 0 | 0 | 0 | 0 | 0 | 0 | 0 | 0 |
| 14593 to 14608 | 0 | 0 | 0 | 0 | 0 | 0 | 0 | 0 | 0 | 0 | 0 | 0 | 0 | 0 | 0 | 0 |
| 14609 to 14624 | 0 | 0 | 0 | 0 | 0 | 0 | 0 | 0 | 0 | 0 | 0 | 0 | 0 | 0 | 0 | 0 |
| 14625 to 14640 | 0 | 0 | 0 | 0 | 0 | 0 | 0 | 0 | 0 | 0 | 0 | 0 | 8 | 0 | 0 | 0 |
| 14641 to 14656 | 0 | 0 | 0 | 0 | 31 | 0 | 0 | 0 | 0 | 0 | 0 | 192 | 63 | 0 | 0 | 0 |
| 14657 to 14672 | 0 | 0 | 0 | 248 | 63 | 0 | 0 | 0 | 0 | 0 | 0 | 255 | 127 | 0 | 0 | 0 |
| 14673 to 14688 | 0 | 0 | 224 | 255 | 255 | 0 | 0 | 0 | 0 | 0 | 252 | 255 | 255 | 1 | 0 | 0 |
| 14689 to 14704 | 0 | 0 | 255 | 255 | 255 | 1 | 0 | 0 | 0 | 224 | 255 | 255 | 255 | 3 | 0 | 0 |
| 14705 to 14720 | 0 | 252 | 255 | 255 | 255 | 7 | 0 | 0 | 128 | 255 | 255 | 255 | 255 | 7 | 0 | 0 |
| 14721 to 14736 | 240 | 255 | 255 | 255 | 255 | 15 | 0 | 0 | 254 | 255 | 255 | 255 | 255 | 31 | 0 | 0 |
| 14737 to 14752 | 255 | 255 | 255 | 255 | 255 | 63 | 0 | 0 | 255 | 255 | 255 | 255 | 255 | 63 | 0 | 0 |
| 14753 to 14768 | 255 | 255 | 255 | 255 | 255 | 127 | 0 | 0 | 255 | 255 | 255 | 255 | 255 | 255 | 0 | 0 |
| 14769 to 14784 | 255 | 255 | 255 | 255 | 255 | 255 | 0 | 0 | 255 | 255 | 255 | 255 | 255 | 255 | 1 | 0 |
| 14785 to 14800 | 255 | 255 | 255 | 255 | 255 | 255 | 3 | 0 | 255 | 255 | 255 | 255 | 255 | 255 | 7 | 0 |
| 14801 to 14816 | 255 | 255 | 255 | 255 | 255 | 255 | 7 | 0 | 255 | 255 | 255 | 255 | 255 | 255 | 15 | 0 |
| 14817 to 14832 | 255 | 255 | 255 | 255 | 255 | 255 | 31 | 0 | 255 | 255 | 255 | 255 | 255 | 255 | 31 | 0 |
| 14833 to 14848 | 255 | 255 | 255 | 255 | 255 | 255 | 63 | 0 | 255 | 255 | 255 | 255 | 255 | 255 | 127 | 0 |
| 14849 to 14864 | 0 | 0 | 0 | 0 | 0 | 0 | 0 | 0 | 0 | 0 | 0 | 0 | 0 | 0 | 0 | 0 |
| 14865 to 14880 | 0 | 0 | 0 | 0 | 0 | 0 | 0 | 0 | 0 | 0 | 0 | 0 | 0 | 0 | 0 | 0 |
| 14881 to 14896 | 0 | 0 | 0 | 0 | 0 | 0 | 0 | 0 | 0 | 0 | 0 | 0 | 0 | 0 | 0 | 0 |
| 14897 to 14912 | 0 | 0 | 0 | 0 | 0 | 0 | 0 | 0 | 0 | 0 | 0 | 0 | 0 | 0 | 0 | 0 |
| 14913 to 14928 | 0 | 0 | 0 | 0 | 0 | 0 | 0 | 0 | 0 | 0 | 0 | 0 | 0 | 0 | 0 | 0 |
| 14929 to 14944 | 0 | 0 | 0 | 0 | 0 | 0 | 0 | 0 | 0 | 0 | 0 | 0 | 0 | 0 | 0 | 0 |
| 14945 to 14960 | 0 | 0 | 0 | 0 | 0 | 0 | 0 | 0 | 0 | 0 | 0 | 0 | 0 | 0 | 0 | 0 |
| 14961 to 14976 | 0 | 0 | 0 | 0 | 0 | 0 | 0 | 0 | 0 | 0 | 0 | 0 | 0 | 0 | 0 | 0 |
| 14977 to 14992 | 0 | 0 | 0 | 0 | 0 | 0 | 0 | 0 | 0 | 0 | 0 | 0 | 0 | 0 | 0 | 0 |
| 14993 to 15008 | 0 | 0 | 0 | 0 | 0 | 0 | 0 | 0 | 0 | 0 | 0 | 0 | 0 | 0 | 0 | 0 |
| 15009 to 15024 | 0 | 0 | 0 | 0 | 0 | 0 | 0 | 0 | 0 | 0 | 0 | 0 | 0 | 0 | 0 | 0 |
| 15025 to 15040 | 0 | 0 | 0 | 0 | 0 | 0 | 0 | 0 | 0 | 0 | 0 | 0 | 0 | 0 | 0 | 0 |
| 15041 to 15056 | 0 | 0 | 0 | 0 | 0 | 0 | 0 | 0 | 0 | 0 | 0 | 0 | 0 | 0 | 0 | 0 |
| 15057 to 15072 | 0 | 0 | 0 | 0 | 0 | 0 | 0 | 0 | 0 | 0 | 0 | 0 | 0 | 0 | 0 | 0 |
| 15073 to 15088 | 0 | 0 | 0 | 0 | 0 | 0 | 0 | 0 | 0 | 0 | 0 | 0 | 0 | 0 | 0 | 0 |
| 15089 to 15104 | 0 | 0 | 0 | 0 | 0 | 0 | 0 | 0 | 0 | 0 | 0 | 0 | 0 | 0 | 0 | 0 |
| 15105 to 15120 | 0 | 0 | 0 | 0 | 0 | 0 | 0 | 0 | 0 | 0 | 0 | 0 | 0 | 0 | 0 | 0 |
| 15121 to 15136 | 0 | 0 | 0 | 0 | 0 | 0 | 0 | 0 | 0 | 0 | 0 | 0 | 0 | 0 | 0 | 0 |
| 15137 to 15152 | 0 | 0 | 0 | 0 | 0 | 0 | 0 | 0 | 0 | 0 | 0 | 0 | 0 | 0 | 0 | 0 |
| 15153 to 15168 | 0 | 0 | 0 | 0 | 28 | 0 | 0 | 0 | 0 | 0 | 0 | 128 | 63 | 0 | 0 | 0 |
| 15169 to 15184 | 0 | 0 | 0 | 224 | 127 | 0 | 0 | 0 | 0 | 0 | 0 | 252 | 255 | 0 | 0 | 0 |
| 15185 to 15200 | 0 | 0 | 128 | 255 | 255 | 0 | 0 | 0 | 0 | 0 | 240 | 255 | 255 | 1 | 0 | 0 |
| 15201 to 15216 | 0 | 0 | 254 | 255 | 255 | 3 | 0 | 0 | 0 | 192 | 255 | 255 | 255 | 3 | 0 | 0 |

```
15217 to 15232 |   0 240 255 255 255   7   0   0     0 254 255 255 255  15   0   0
15233 to 15248 | 192 255 255 255 255  31   0   0   248 255 255 255 255  31   0   0
15249 to 15264 | 255 255 255 255 255  63   0   0   255 255 255 255 255 127   0   0
15265 to 15280 | 255 255 255 255 255 127   0   0   255 255 255 255 255 255   0   0
15281 to 15296 | 255 255 255 255 255 255   1   0   255 255 255 255 255 255   3   0
15297 to 15312 | 255 255 255 255 255 255   3   0   255 255 255 255 255 255   7   0
15313 to 15328 | 255 255 255 255 255 255  15   0   255 255 255 255 255 255  15   0
15329 to 15344 | 255 255 255 255 255 255  31   0   255 255 255 255 255 255  63   0
15345 to 15360 | 255 255 255 255 255 255 127   0   255 255 255 255 255 255 127   0
15361 to 15376 |   0   0   0   0   0   0   0   0     0   0   0   0   0   0   0   0
15377 to 15392 |   0   0   0   0   0   0   0   0     0   0   0   0   0   0   0   0
15393 to 15408 |   0   0   0   0   0   0   0   0     0   0   0   0   0   0   0   0
15409 to 15424 |   0   0   0   0   0   0   0   0     0   0   0   0   0   0   0   0
15425 to 15440 |   0   0   0   0   0   0   0   0     0   0   0   0   0   0   0   0
15441 to 15456 |   0   0   0   0   0   0   0   0     0   0   0   0   0   0   0   0
15457 to 15472 |   0   0   0   0   0   0   0   0     0   0   0   0   0   0   0   0
15473 to 15488 |   0   0   0   0   0   0   0   0     0   0   0   0   0   0   0   0
15489 to 15504 |   0   0   0   0   0   0   0   0     0   0   0   0   0   0   0   0
15505 to 15520 |   0   0   0   0   0   0   0   0     0   0   0   0   0   0   0   0
15521 to 15536 |   0   0   0   0   0   0   0   0     0   0   0   0   0   0   0   0
15537 to 15552 |   0   0   0   0   0   0   0   0     0   0   0   0   0   0   0   0
15553 to 15568 |   0   0   0   0   0   0   0   0     0   0   0   0   0   0   0   0
15569 to 15584 |   0   0   0   0   0   0   0   0     0   0   0   0   0   0   0   0
15585 to 15600 |   0   0   0   0   0   0   0   0     0   0   0   0   0   0   0   0
15601 to 15616 |   0   0   0   0   0   0   0   0     0   0   0   0   0   0   0   0
15617 to 15632 |   0   0   0   0   0   0   0   0     0   0   0   0   0   0   0   0
15633 to 15648 |   0   0   0   0   0   0   0   0     0   0   0   0   0   0   0   0
15649 to 15664 |   0   0   0   0   0   0   0   0     0   0   0   0   0   0   0   0
15665 to 15680 |   0   0   0   0  48   0   0   0     0   0   0   0  62   0   0   0
15681 to 15696 |   0   0   0 192 127   0   0   0     0   0   0 240 255   0   0   0
15697 to 15712 |   0   0   0 254 255   1   0   0     0   0 192 255 255   1   0   0
15713 to 15728 |   0   0 248 255 255   3   0   0     0   0 255 255 255   7   0   0
15729 to 15744 |   0 224 255 255 255   7   0   0     0 248 255 255 255  15   0   0
15745 to 15760 |   0 255 255 255 255  31   0   0   224 255 255 255 255  63   0   0
15761 to 15776 | 252 255 255 255 255  63   0   0   255 255 255 255 255 127   0   0
15777 to 15792 | 255 255 255 255 255 255   0   0   255 255 255 255 255 255   0   0
15793 to 15808 | 255 255 255 255 255 255   1   0   255 255 255 255 255 255   3   0
15809 to 15824 | 255 255 255 255 255 255   7   0   255 255 255 255 255 255   7   0
15825 to 15840 | 255 255 255 255 255 255  15   0   255 255 255 255 255 255  31   0
15841 to 15856 | 255 255 255 255 255 255  31   0   255 255 255 255 255 255  63   0
15857 to 15872 | 255 255 255 255 255 255 127   0   255 255 255 255 255 255 255   0
15873 to 15888 |   0   0   0   0   0   0   0   0     0   0   0   0   0   0   0   0
15889 to 15904 |   0   0   0   0   0   0   0   0     0   0   0   0   0   0   0   0
15905 to 15920 |   0   0   0   0   0   0   0   0     0   0   0   0   0   0   0   0
15921 to 15936 |   0   0   0   0   0   0   0   0     0   0   0   0   0   0   0   0
15937 to 15952 |   0   0   0   0   0   0   0   0     0   0   0   0   0   0   0   0
15953 to 15968 |   0   0   0   0   0   0   0   0     0   0   0   0   0   0   0   0
15969 to 15984 |   0   0   0   0   0   0   0   0     0   0   0   0   0   0   0   0
15985 to 16000 |   0   0   0   0   0   0   0   0     0   0   0   0   0   0   0   0
16001 to 16016 |   0   0   0   0   0   0   0   0     0   0   0   0   0   0   0   0
16017 to 16032 |   0   0   0   0   0   0   0   0     0   0   0   0   0   0   0   0
16033 to 16048 |   0   0   0   0   0   0   0   0     0   0   0   0   0   0   0   0
16049 to 16064 |   0   0   0   0   0   0   0   0     0   0   0   0   0   0   0   0
16065 to 16080 |   0   0   0   0   0   0   0   0     0   0   0   0   0   0   0   0
16081 to 16096 |   0   0   0   0   0   0   0   0     0   0   0   0   0   0   0   0
16097 to 16112 |   0   0   0   0   0   0   0   0     0   0   0   0   0   0   0   0
16113 to 16128 |   0   0   0   0   0   0   0   0     0   0   0   0   0   0   0   0
16129 to 16144 |   0   0   0   0   0   0   0   0     0   0   0   0   0   0   0   0
16145 to 16160 |   0   0   0   0   0   0   0   0     0   0   0   0   0   0   0   0
16161 to 16176 |   0   0   0   0   0   0   0   0     0   0   0   0   0   0   0   0
16177 to 16192 |   0   0   0   0   0   0   0   0     0   0   0   0 120   0   0   0
16193 to 16208 |   0   0   0   0 127   0   0   0     0   0   0   0 224 255   0   0
16209 to 16224 |   0   0   0 252 255   1   0   0     0   0   0   0 255 255   3   0
16225 to 16240 |   0   0 224 255 255   3   0   0     0   0 252 255 255   7   0   0
16241 to 16256 |   0 128 255 255 255  15   0   0     0 240 255 255 255  15   0   0
16257 to 16272 |   0 252 255 255 255  31   0   0   128 255 255 255 255  63   0   0
16273 to 16288 | 240 255 255 255 255 127   0   0   254 255 255 255 255 127   0   0
16289 to 16304 | 255 255 255 255 255 255   0   0   255 255 255 255 255 255   1   0
16305 to 16320 | 255 255 255 255 255 255   3   0   255 255 255 255 255 255   3   0
16321 to 16336 | 255 255 255 255 255 255   7   0   255 255 255 255 255 255  15   0
16337 to 16352 | 255 255 255 255 255 255  15   0   255 255 255 255 255 255  31   0
16353 to 16368 | 255 255 255 255 255 255  63   0   255 255 255 255 255 255 127   0
16369 to 16384 | 255 255 255 255 255 255 127   0   255 255 255 255 255 255 255   0
```

Step 603 begins the process of accessing the information when so arranged. More specifically, in step 603,

$$y = Y >> 5$$

$$u = U >> 2$$

and

$$v = V >> 2$$

are calculated for the current chrominance portion, where"»" is a right shift operation. Doing so leaves only the desired 8th to 3rd least significant bits of the U value, the 8th to 3rd least significant bits of the V value, and the 8th to 6th least significant bits of the U value. Thereafter, in step 605 the lookup table address is calculated as *LUT_Address = u << 9 + v << 3 + y*, where "<<" is a left-shift operation.

Doing so combines the extracted bits into a combined address and points to the one byte that corresponds to the supplied Y, U, and V values. Thereafter, in step 607, the particular bit within the byte that corresponds to the supplied Y, U, and V values is determined, by using the value made up of the 2nd to 5th least significant bits of the Y value as an index into the byte. To this end, step 607 calculates $b = \text{mod}(Y << 2, 8)$, where mod is the modulo function.

In step 609, the value of the $b$th bit position of the byte at the calculated lookup table address is extracted, assigned as the value of a variable $m$, which is supplied as an output. Again, in this exemplary embodiment, if the extracted bit is a 1, U is the selected chrominance portion while if the extracted bit is a 0, V is the selected chrominance portion.

The process then exits in step 611.

Those of ordinary skill in the art will readily recognize how to adapt the foregoing to pixels in other formats, e.g., RGB or YIQ

Note that if Huffman encoding of the table is desired, it may be advantageous that the forgoing correspondence of select U being a 1 and select V being a zero should be reversed, assuming, as has been seen experimentally, that U is selected for a majority of pixel combinations.

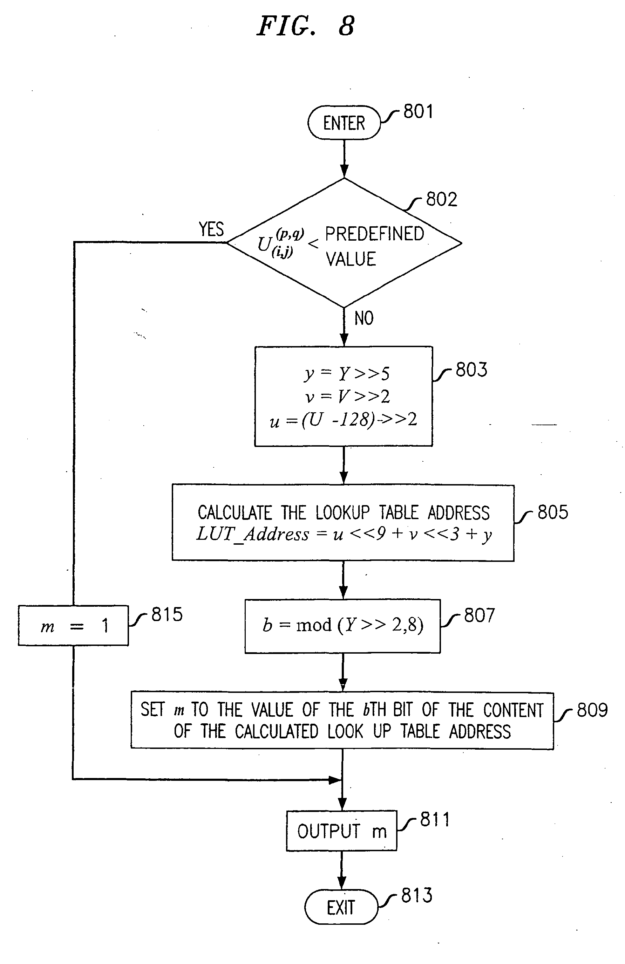

FIG. 8 shows another exemplary process by which the particular chrominance portion is selected to contain the watermarking information for a pixel. The process is entered in step 801 when it is necessary to select a chrominance portion suitable to contain watermarking information. It is assumed, for purposes of description of FIG. 8, that there is only one Y value for each chrominance component.

In order to further reduce the storage requirements in the embodiment of FIG. 8, as compared to the embodiment of FIG. 6, in accordance with an aspect of the invention, not only is the YUV colorspace divided into regions, each region including positions corresponding to at least one set of Y, U, and V values, with each region being assigned a chrominance portion, e.g., based on experimental observations, that is to be selected for any pixel whose Y, U, and V values fall within the region, as described in connection with FIG. 6, but any pixel that has a U value less than a predefined value, e.g., one-half the maximum value, has the U chrominance portion selected for watermarking. Thus, for 8 bit Y, U, and V, values, if the value of U is less than 128, the U chrominance portion is always selected for watermarking regardless of the values of V or Y. This is because human visual system is less sensitive to the blue component U than the V component.

By having the most significant address bits of the chrominance portion selection table correspond to the U-value-derived bits of the address, advantageously, the size of the table can be reduced by up to one half. This is achieved by adding a test to determine if the U value is less than one half the maximum value prior to forming the table address, and if the test result is YES, simply indicating to select the U chrominance portion and skipping the rest of the process of accessing the table, and also by subtracting one half the maximum U value from the actual U value prior to calculating the U-value-derived bits of the address. Thus, the section of the table employed for FIG. 6 corresponding to the most significant U bit being 0 is eliminated, and only that portion of the table where the most significant U bit is 1 is retained. However, the indexing into the remaining portion of the table is shifted by the subtraction from the U value of the one half of the maximum U value prior to forming the U-value-derived bits.

Thus, the table is arranged to be addressed using an address that has the most significant bits corresponding to the U values, the next least significant values corresponding to the V values and the least significant values corresponding to the Y values. In other words, the address of the bytes may be formed as follows:
U6|U5|U4|U3|U2|V7|V6|V5|V4|V3|V2|Y7|Y6|Y5
where U6,US,U4,U3, and U2 are the values of the 7th to 3rd least significant bits of the U value, V7,V6,V5,V4,V3, and V2 are the values of the 8th to 3rd least significant bits of the V value, and Y7, Y6, and Y5, are the values of the 8th to 6th least significant bits of the Y value. Then, the particular bit within the byte is specified by using the 5th to 2nd least significant bits of the Y value, e.g., Y4, Y3, and Y2.

To this end, conditional branch point 802 tests to determine if *U < predefined_value,* where *predefined_value* is, for example, one half the maximum U value. Note that to save a bit, and half the table size, preferably *predefined_value* should be a power of 2. If the test result in step 802 is NO, indicating that the value of U is less than the predefined value, e.g., one half the maximum value of U, e.g., 128, and hence the chrominance portion to be selected will be a function of Y, U, and V, and so the table must be accessed, control passes to step 803 to begin the process of accessing the table. In step 803,

$$y = Y >> 5$$

$$u = (U - predefined\ value) >> 2, \text{e.g.,}\ u = (U - 128) >> 2$$

and

$$v = V >> 2$$

are calculated for the current chrominance component, where ">>" is a right-shift operation. Doing so leaves only the desired 7th to 3rd least significant bits of the U value, the 8th to 3rd least significant bits of the V value, and the 8th to 6th least significant bits of the Y value. Thereafter, in step 805 the lookup table address for the current pixel is calculated as *LUT_Address = u << 9 + v << 3 + y*, where "<<" is a left-shift operation.

Doing so combines the extracted bits into a combined address and points to the one byte that corresponds to the pixel. Thereafter, in step 807, the particular bit within the byte that corresponds to the pixel is determined, by using the value made up of the 5th to 2nd least significant bits of the Y value as an index into the byte. To this end, step 807 calculates b = mod($Y$ << 2, 8), where mod is the modulo function.

In step 809, the value of the $b^{th}$ bit position of the byte at the calculated lookup table address is extracted and stored in the variable *m*. The value of variable *m* is supplied as an output in step 811. Again, if the output bit is a 1, U is the selected chrominance portion while if the extracted bit is a 0, V is the selected chrominance portion. The process then exits in step 813.

If the test result in step 802 is YES, indicating that the U chrominance portion should be selected, because the pixel color is not primarily blue and hence changing the blue color of the pixel will not be detected by the human visual system, control passes to step 815, in which the variable *m* is set equal to 1. Doing so assures that U is selected. Control then passes to step 811, and the process continues as described above.

**Claims**

1.  Apparatus for embedding additional watermarking data within a video signal, comprising:

    a data adder that adds values representative of each unit of said additional watermarking data to selected chrominance portions of ones of chrominance components of said video signal, said values being a function of a periodically-varying, antipodal waveform.

2.  The invention as defined in claim 1 wherein each of said ones of said chrominance components representing a single unit of said additional information is a member of one of a plurality of groups of chrominance components, each of said groups being like-positioned on a different line of said video signal.

3.  The invention as defined in claim 1 wherein each of said values that is added is a function of a product of: a) a value of said periodically-varying, antipodal, waveform; and b) a value that is indicative of the value of said unit of said additional information that is being embedded in said video signal.

4.  The invention as defined in claim 3 wherein said value representative of said unit of said additional information that is being embedded in said video signal is a function of the line number of said video signal to which said chrominance components belongs.

5.  The invention as defined in claim 3 wherein said value representative of said unit of said additional information that is being embedded in said video signal is represented using the values 1 and -1.

6.  The invention as defined in claim 1 wherein each of said values that is added to said chrominance portions are a function of a product of: a) a value of said periodically-varying, antipodal, waveform; b) a value that is representative of said unit of the additional watermark data being impressed; and c) a weighting value.

7.  The invention as defined in claim 1 further comprising a color selection unit for determining for each of said chrominance components which chrominance portion thereof is better able to withstand a change in value without introducing an artifact substantially perceivable by the human visual system.

8. The invention as defined in claim 1 further comprising a block interleaver that interleaves said additional watermarking data prior to said additional watermarking data being embedded in said video signal.

9. The invention as defined in claim 1 further comprising a channel encoder that channel encodes said additional watermarking data prior to said additional watermarking data being embedded in said video signal.

10. The invention as defined in claim 1 further comprising a sequence adder that adds to said additional watermarking data a sequence that identifies a frame as belonging to a particular user.

11. The invention as defined in claim 1 wherein said data adder adds said each of said values to at most one chrominance portion of each of said ones of chrominance components, said apparatus furtherer comprising:

a multiplexer for multiplexing at least the unmodified chrominance portion of said ones of said chrominance components and said modified chrominance portion of said ones of said chrominance components.

12. The invention as defined in claim 1 wherein said data adder further comprises an antipodal bit mapper.

13. The invention as defined in claim 1 wherein said data adder further comprises a texture masking unit that determines an amount of change that each of said selected chrominance portions of said ones of said chrominance components can endure while minimizing the likelihood of a visible artifact resulting, and wherein said data adder adds no more than said amount to said chrominance portion.

14. A method for use in extracting watermark data from a watermarked video signal, wherein a unit of said watermark data is carried in at least a first group of chrominance components on at least a first line of said video signal, said group including at least two subgroups, the method comprising the steps of:

developing an indication of a chrominance portion that is likely to be carrying said watermark data for a majority of chrominance components in each of said subgroups; and
developing a correlation value between said indicated chrominance portion of all of the chrominance components in a subgroup and an periodically-varying, antipodal waveform.

15. The invention as defined in claim 14 further comprising the step of integrating said developed correlation value for each of said subgroups to produce a group integrated value for said first line.

16. The invention as defined in claim 15 wherein said unit of said watermark data is also carried in at least a second group of chrominance components located in a like horizontal position as said first group but on a second line of said video signal, the method further comprising the step of developing a difference between said group integrated value for said first line with a group integrated value developed for said second group to develop a first line difference.

17. The invention as defined in claim 16 further comprising the step of combining said first line difference with a second line difference developed for chrominance components of groups located in a like horizontal position as said first group but on third and fourth lines, respectively, to produce a combined line difference.

18. The invention as defined in claim 17 further comprising the step of supplying said combined line difference as a soft-bit output.

19. The invention as defined in claim 17 wherein combining step further comprises the steps of:

multiplying said first line difference by a weight to develop a weighted first line difference;
multiplying said second line difference by a weight to develop a weighted second line difference; and
combining said weighted first line difference and said weighted second line difference to develop a weighted combined line difference.

20. A receiver for use in extracting units of watermark data from a watermarked video signal, wherein a unit of said watermark data is carried in at least a first group of chrominance components on at least a first line of said video signal, said group including a plurality of subgroups, said apparatus comprising:

a color selection unit for developing an indication of a chrominance portion that is likely to be carrying said watermark data for a majority of chrominance components in each of said subgroups;

a correlator that supplies as an output a subgroup correlation value developed by correlating said indicated chrominance portion of all of the chrominance components in a subgroup and an periodically-varying, antipodal waveform.

21. The invention as defined in claim 20 further comprising a demultiplexer and decimator to develop a version of said video signal having chrominance components as if said version was in 4-2-2 format but having only one luminance value for each 4-2-2 chrominance component.

22. The invention as defined in claim 20 further comprising a group integrator for integrating each subgroup correlation value of all of said subgroups of said group and supplying a group integrated value as an output.

23. The invention as defined in claim 22 further comprising a subtractor for developing a difference between said group integrated value for said first video line and a group integrated value for a group at the same horizontal location but on a second video line.

24. The invention as defined in claim 23 further comprising a memory for storing said group integrated value for a group at the same horizontal location but on a second video line and supplying it to said subtractor.

25. The invention as defined in claim 23 further comprising a variable weight combiner for combining said difference and at least one other difference developed for two other groups located at the same horizontal location as said first group but on respective ones of a third and fourth video line.

26. The invention as defined in claim 20 wherein said receiver supplies a representation of each of said units of watermark data as a soft-bit value

27. The invention as defined in claim 26 further comprising a deinterleaver that rearranges the order of said soft-bits.

28. The invention as defined in claim 26 further comprising a channel decoder for converting said soft-bits to hard bits.

29. The invention as defined in claim 26 further comprising a sequence processor for determining if said units of said watermark data in a frame corresponds to a prescribed code.

30. A method for embedding additional watermarking data within a video signal, the method comprising the step of incorporating values representative of each unit of said additional watermarking data into ones of chrominance components of said video signal, said values being a function of a periodically-varying, antipodal waveform.

31. A video signal including additional information therein, said video signal being **characterized in that** at least a unit of said additional information has been represented at least as first values that are a function of a periodically-varying, antipodal waveform, said first values having been incorporated into ones of at least a first group of chrominance components on a first line of said video signal.

*FIG. 1*

101

- 103 — YUV DEMUX & DECIMATER (VIDEO IN)
- 105 — COLOR SELECTION
- 133 — SUBGROUP MAJORITY STORE (SUBGROUP MAJORITY)
- 131 — COMPONENT COLOR STORE (COMPONENT COLOR)
- 129 — DELAY
- 111 — TEXTURE MASKING
- 113 — ⊗
- 115 — ⊕
- 109 — (switch)
- 123 — ANTIPODAL BIT MAPPER
- 127 — SEQUENCE ADDER
- 121 — BLOCK INTERLEAVER
- 119 — CHANNEL ENCODER (ADDITIONAL DATA)
- 117 — MUX (MODIFIED / ORIGINAL / Y)
- 125 — NTSC CONVERTER (VIDEO OUT → NTSC VIDEO OUT)

FIG. 2

EP 1 643 439 A1

**FIG. 3**

| FIG. 3A |
|---|
| FIG. 3B |

**FIG. 3A**

ENTER — 301

INITIALIZE VARIABLES — 303

DETERMINE WHICH CHROMINANCE PORTION IS TO BE WATERMARKED (BASED ON COUNTS OVER ONE SUBGROUP) — 307

V

U

309 — SET SUBGROUP MAJORITY = V

SET SUBGROUP MAJORITY = U — 311

GET 1ST CHROMINANCE COMPONENT OF SUBGROUP — 313

327 — GET NEXT CHROMINANCE COMPONENT OF SUBGROUP

DETERMINE WHICH CHROMINANCE PORTION SHOULD BE WATERMARKED FOR THE CHROMINANCE COMPONENT — 315

NO

LAST CHROMINANCE COMPONENT OF SUBGROUP ? — 325

YES

NO

SELECTED CHROMINANCE PORTION SAME AS SUBGROUP MAJORITY ? — 317

EXIT — 379

YES

COMPUTE VAR(i) — 319

## FIG. 3B

ODDLINE = MOD (LINENUMBER/2) — 361

ODDLINE = 1 ? — 363

ODDLINE = -1 — 365

DATA = 1 ? — 367

WATERMARKADD = m * ODDLINE * $\sin\left(\frac{2\pi i}{16}\right)$ — 369

WATERMARKADD = m * -ODDLINE * $\sin\left(\frac{2\pi i}{16}\right)$ — 371

ADD WATERMARKADD TO SELECTED CHROMINANCE PORTION OF CHROMINANCE COMPONENT — 373

## FIG. 4

| FIG. 4A |
|---|
| FIG. 4B |

## FIG. 4A

ENTER ⟶ 401

bit = 0
k = 1 ⟶ 402

Integ(k) = 0
j = 1 ⟶ 403

CorrU(j) = 0, ContU = 0
i = 1
CorrV(j) = 0, ContV = 0 ⟶ 405

OBTAIN CURRENT
CHROMINANCE COMPONENT
AND LUMINANCE VALUES
$Y^{(i,j)}, U^{(i,j)}, V^{(i,j)}$ ⟶ 407

409 ⟶ $CorrU(j) = CorrU(j) + U(i,j) * \sin\left(\frac{2\pi i}{16}\right)$

$CorrV(j) = CorrV(j) + V(i,j) * \sin\left(\frac{2\pi i}{16}\right)$

419 ⟶ i = i + 1

WHICH
CHROMINANCE PORTION
WAS LIKELY TO HAVE BEEN
WATERMARKED
? ⟶ 411

ContU =
ContU + 1 ⟶ 415

U

V

ContV =
ContV + 1 ⟶ 413

LAST
CHROMINANCE
PORTION OF
SUBGROUP
? ⟶ 417

NO

YES

# FIG. 4B

bit = bit + w(k/2) × (Integ(k−1) − Integ(k))

# FIG. 5

## FIG. 6

ENTER — 601

$$y = Y >> 5$$
$$v = V >> 2$$
$$u = U >> 2$$

— 603

CALCULATE THE LOOKUP TABLE ADDRESS
$$LUT\_Address = u << 9 + v << 3 + y$$

— 605

$$b = \mathrm{mod}\,(Y >> 2, 8)$$

— 607

SET $m$ TO THE VALUE OF THE $b$TH BIT OF
THE CONTENT OF THE CALCULATED LOOK UP
TABLE ADDRESS AND SUPPLY AS OUTPUT

— 609

EXIT — 611

*FIG. 7*

## FIG. 8

ENTER — 801

$U_{(i,j)}^{(p,q)} <$ PREDEFINED VALUE — 802

YES

NO

$y = Y >> 5$
$v = V >> 2$
$u = (U - 128) >> 2$ — 803

CALCULATE THE LOOKUP TABLE ADDRESS
$LUT\_Address = u << 9 + v << 3 + y$ — 805

$m = 1$ — 815

$b = \mathrm{mod}\,(Y >> 2, 8)$ — 807

SET $m$ TO THE VALUE OF THE $b$TH BIT OF THE CONTENT OF THE CALCULATED LOOK UP TABLE ADDRESS — 809

OUTPUT $m$ — 811

EXIT — 813

LINE 1

| 121 OUT | 1 | 1 | 0 |
|---|---|---|---|
| 517 OUT | 1 | 1 | 0 |
| 501 OUT | 1 | 1 | −1 |

509 OUT — 7 CYCLES / 8 CYCLES / 7 CYCLES

507 OUT — 7 CYCLES / 8 CYCLES / 7 CYCLES

133 OUT — U U U V V V V | U U U U V V V V | U U U U V V V

509 OUT

131 OUT — UUUUUVVVVVVVVV

123 OUT

LINE 2

| 121 OUT | 1 | 1 | 0 |
|---|---|---|---|
| 517 OUT | 0 | 0 | 1 |
| 501 OUT | −1 | −1 | 1 |

509 OUT

507 OUT

133 OUT — U U U V V V V | U U U U V V V V | U U U U V V V

509 OUT

131 OUT — UUUUVVVVVVVVV

123 OUT

*FIG. 9*

**European Patent Office**

# EUROPEAN SEARCH REPORT

Application Number

EP 05 25 5865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOSEP VIDAL, MARIBEL MADUENO, AND ELISA SAYROL: "Color image watermarking using channel-state knowledge" PROCEEDINGS OF THE SPIE, SECURITY AND WATERMARKING OF MULTIMEDIA CONTENTS IV, [Online] vol. 4675, April 2002 (2002-04), pages 214-221, XP002352980 Retrieved from the Internet: URL:http://spiedl.aip.org/getpdf/servlet/GetPDFServlet?filetype=pdf&id=PSISDG004675000001000214000001&idtype=cvips&prog=search> [retrieved on 2005-11-03] | 1,30,31 | G06T1/00 |
| A | * abstract * <br> * section 2 * <br> * page 215, last line * | 2-29 | |
|  | ----- | | |
| X | BHARDWAJ A ET AL: "Joint indexing and watermarking of video using color information" MULTIMEDIA SIGNAL PROCESSING, 2001 IEEE FOURTH WORKSHOP ON OCTOBER 3-5, 2001, PISCATAWAY, NJ, USA,IEEE, 3 October 2001 (2001-10-03), pages 333-338, XP010565796 ISBN: 0-7803-7025-2 | 1,3,6,7, 9,12,14, 20,26,30 | |
| | | | **TECHNICAL FIELDS SEARCHED (IPC)** <br><br> G06T <br> H04N |
| Y | * abstract * <br><br><br> * page 335 - page 336 * | 2,4,5,8, 10,11, 15-19, 22-25, 27-29 | |
|  | ----- <br> -/-- | | |

The present search report has been drawn up for all claims

| Place of search | Date of completion of the search | Examiner |
|---|---|---|
| Berlin | 8 November 2005 | dos Santos, L |

EPO FORM 1503 03.82 (P04C01)

**European Patent Office**

**EUROPEAN SEARCH REPORT**

Application Number

EP 05 25 5865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/164046 A1 (WALKER BRIAN R ET AL) 7 November 2002 (2002-11-07)<br><br>* page 2, right-hand column - page 3, left-hand column *<br>----- | 2,4,5,8, 10,11, 15-19, 22-25, 27-29 | |
| A | US 2002/027612 A1 (BRILL MICHAEL H ET AL) 7 March 2002 (2002-03-07)<br>* paragraphs [0020], [0024], [0025], [0028] *<br>----- | 1-31 | |
| A | SCHYNDEL VAN R G ET AL: "A MULTIPLICATIVE COLOUR WATERMARK"<br>PROCEEDINGS OF THE IEEE-EURASIP WORKSHOP ON NONLINEAR SIGNAL AND IMAGE PROCESSING, vol. 1, 1999, pages 336-340, XP000978561<br>* sections 3.1 and 3.2 *<br>----- | 1-31 | |
| | | | TECHNICAL FIELDS SEARCHED (IPC) |

The present search report has been drawn up for all claims

| Place of search | Date of completion of the search | Examiner |
|---|---|---|
| Berlin | 8 November 2005 | dos Santos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 5865

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2005

| Patent document cited in search report | | Publication date | Patent family member(s) | | Publication date |
|---|---|---|---|---|---|
| US 2002164046 | A1 | 07-11-2002 | NONE | | |
| US 2002027612 | A1 | 07-03-2002 | US | 6771795 B1 | 03-08-2004 |

EPO FORM P0459

For more details about this annex : see Official Journal of the European Patent Office, No. 12/82